# EUROPÄISCHE PATENTSCHRIFT

(11) **EP 2 113 382 B1**
(45) Veröffentlichungstag und Bekanntmachung des Hinweises auf die Patenterteilung: **04.04.2012**
(21) Anmeldenummer: 09153192.1
(22) Anmeldetag: 23.03.2005
(51) Int. Cl.: B41F 13/20, B41F 13/44, B41F 13/008

(54) **Vorrichtung zur Lagerung eines Zylinders und Verfahren zur Einstellung einer Druck-An-Stellung**
Device for storing a cylinder and method for setting a press-on setting
Dispositif de stockage d'un cylindre et procédé de réglage en fonction de la position d'impression

(30) Priorität: 05.04.2004 DE 102004017287; 05.05.2004 DE 102004022704; 05.08.2004 DE 102004037889
(43) Veröffentlichungstag der Anmeldung: 04.11.2009
(62) Teilanmeldung aus: 05717141.5
(73) Patentinhaber: Koenig & Bauer Aktiengesellschaft, 97080 Würzburg (DE)
(72) Erfinder: Schäfer, Karl, 97273, Kürnach (DE); Schneider, Georg, 97080, Würzburg (DE)

(56) Entgegenhaltungen:
- EP-A2- 1 393 900
- DE-A1- 19 937 796
- GB-A- 2 331 961
- US-A- 4 598 640
- US-A- 6 085 650

## Beschreibung

Die Erfindung betrifft ein Verfahren zur Einstellung einer Druck-An-Stellung mindestens zweier Zylinder gemäß den Merkmalen des Anspruchs 1.

Durch die WO 95/24314 A1 ist eine derartige Druckeinheit bekannt, wobei vier Doppeldruckwerke vertikal übereinander angeordnet sind und im Bereich ihrer Doppeldruckstelle horizontal relativ zueinander bewegbar sind. Hierzu sind die Druckwerke einer selben Bahnseite jeweils in einem gemeinsamen Rahmen gelagert, wobei zumindest einer der Rahmen horizontal bewegbar ist.

Die EP 12 64 686 A1 offenbart eine Druckeinheit mit vertikal übereinander angeordneten Doppeldruckwerken, wobei die Druckwerkszylinder in einem mittleren, und die beiden Farbwerke jeweils in äußeren Rahmenteilen gelagert sind. Diese äußeren Rahmenteile sind horizontal relativ zum mittleren Rahmenteil bewegbar, um in den Zwischenraum bei Bedarf Plattenhandhabungsvorrichtungen einzubringen.

Durch die DE 22 34 089 C3 ist eine Offsetrollenrotationsdruckmaschine bekannt, wobei ein mehrere Druckwerke aufweisender Wandabschnitt gegenüber einem die entsprechenden Gegendruckzylinder aufweisenden Wandabschnitt bewegbar ist. Die Druckwerkszylinder sowie zugeordneten Farbwerke sind insgesamt als Einheiten in diesem Wandabschnitt bewegbar bzw. entnehmbar gelagert.

Durch die DE 43 27 278 C2 ist eine Druckeinheit mit einer Konstruktion eines Seitengestells offenbart, an welchem Übertragungs- und Formzylinder bestimmten Umfangsformates rotierbar gelagert sind und je nach Anforderung modulartige Farbwerke eines bestimmten von verschiedenen Farbwerkstypen einsetzbar sind.

Die US 25 57 381 A zeigt eine flexibel für verschiedene Druckverfahren und Druckstellenanzahl einrichtbare Druckeinheit, wobei jeweils die Farbwerke und die Druckwerkszylinder turmartig aufeinander aufgesetzt und als solche aufeinander zu bzw. voneinander weg bewegbar angeordnet sind. Unterschiedliche Typen und unterschiedliche Anzahl von Druckeinheiten und Farbwerken bzw. Einfärbsystemen können selektiv in einem Standardrahmen eingesetzt werden.

Durch die EP 02 46 081 A2 ist eine Druckeinheit mit mehreren, jeweils die Druckwerkszylinder eines Druckwerkes aufweisenden Baueinheiten sowie mit als Farbwerke ausgebildete Einheiten. Die Farbwerkseinheiten sind zum An/Abstellen horizontal an die Druckwerkszylinder stellbar und vertikal mit unterschiedlichen Druckwerken - u.a. auch mit unterschiedlichen Druckwerken verschiedener Drucklängen - in Kontakt bringbar. Die die Druckwerkszylinder aufweisenden Baueinheiten sind bei Bedarf gegen Baueinheiten anderer Drucklänge tauschbar.

Die DE 102 02 385 A1 zeigt einen Antriebszug zwischen den Zylindern eines Druckwerkes mit variabler Drucklänge, wobei zwischen nicht miteinander kämmenden Zylinderstirnrädern zwei Zwischenräder angeordnet sind.

Durch die EP 06 99 524 B1 sind Antriebszüge von Druckeinheiten offenbart, wobei in einer Ausführung ein paarweiser Antrieb der Druckwerkszylinder durch einen Einzelmotor über miteinander kämmende Stirnräder erfolgt.

In der WO 03/039872 A1 sind Druckwerkszylindern offenbart, welche in einer Ausführung paarweise von einem Antriebsmotor angetrieben sind und das die beiden Zylinder koppelnde Getriebe in einem eigenen Gehäuse gekapselt ist.

Die DE 195 34 651 A1 offenbart eine Druckeinheit mit in einer Ebene liegenden Zylindern, wobei drei von vier Zylindern entlang der Zylinderebene zur Druck-An- bzw. Druck-Abstellung linear bewegbar gelagert sind. Die Lagerung erfolgt in an der Gestellinnenwand angeordneten Führungselementen. Die Zylinder sind an den gemeinsamen Führungselementen in Trägern gelagert und durch druckmittelbetriebene Arbeitszylinder aneinander an-/abstellbar.

In der WO 02/081218 A2 sind einzelne Linearlagerungen für zwei jeweils in Schlitten gelagerte Übertragungszylinder bekannt, wobei ein Stellantrieb für den Schlitten als mit Druckmittel beaufschlagbarer Zylinder ausgeführt sein kann. Um eine Endlage für die quer zur Zylinderebene verlaufende Stellbewegung zu definieren, ist ein justierbarer Anschlag vorgesehen.

Durch die US 6,085,650 ist ein Druckwerk offenbart, wobei Druckwerkszylinder an Schlitten gelagert, an Linearführungen bewegbar und über Antriebsmittel aneinander anstellbar sind. In einer Variante sind Spindeltriebe für den Antrieb der Schlitten vorgesehen. In einer anderen Variante erfolgt der Antrieb der Schlitten jeweils mittels eines durch einen Schrittmotor stellbaren Hydraulikzylinders und in einer weiteren Variante durch eine elektromechanische Stelleinheit mit einem Schrittmotor, der über einen Schraubtrieb ein Schubelement feinfühlig verfährt. Sowohl die stellbaren Hydraulikzylinder als auch die elektromechanischen Stelleinheiten können mit einfach vorsehbarem Überlastschutz bei Überschreitung vorgegebener Kräfte die angegebene Position verlassen.

Die EP 1 393 900 A2 offenbart ein Druckwerk mit zwei Übertragungs- und zwei Formzylindern, wobei in einer Ausführung die zwei Übertragungszylinder zur Druck-An/- Ab-Stellung in Hebeln gelagert sind. Das Verschwenken erfolgt durch Druckmittelzylinder gegen einen justierbaren Anschlag.

In der DE 199 37 796 A1 sind vier Zylinder eines Druckwerks linearbeweglich an Schienen gelagert, wobei ein Stellen motorisch über Gewindetriebe erfolgt.

Die US 4,598,640 A betrifft ein Druckwerk mit zwei Übertragungs- und zwei Formzylindern, wobei zur Druck-An/-Ab-Stellung die Übertragungszylinder über Doppelexzenter von Druckmittelzylindern bewegt werden.

Durch die GB 2 331 961 A ist ein Doppeldruckwerk mit vier Zylindern offenbart, wobei die vier Zylinder jeweils in durch Schrittmotoren verschwenkbaren Exzenterlagern gelagert sind.

Der Erfindung liegt die Aufgabe zugrunde, ein Verfahren zur Einstellung einer Druck-An-Stellung mindestens zweier Zylinder zu schaffen.

Die Aufgabe wird erfindungsgemäß durch die Merkmale des Anspruchs 1 gelöst.

Durch in einer Ausführung teilbare Seitengestelle wird eine gute Zugänglichkeit, ein Beitrag zu möglicher Modularität und eine geringere Bauhöhe geschaffen.

Durch einen Einsatz von Linearführungen für die Druckwerkszylinder wird eine ideale Einbaulage der Zylinder in Bezug auf mögliche Zylinderschwingungen erreicht. Daneben werden durch die Zylinderlagerung in Linearführungen geringe Stellwege realisiert und daher auch keine Synchronspindel erforderlich. Der aufwändige Einbau von Dreiringlagern entfällt.

Die innen an den Seitengestellen angeordneten, dieselben nicht durchdringende Zylinderlager ermöglichen Seitengestellte ohne spezifische Lagerbohrungen. Die Gestelle können formatunabhängig ausgeführt werden. Eine Zylindereinheit kann samt voreingestellter Lagerung vor Ort ohne weiteres in die Gestellwände eingesetzt werde. Durch die lediglich einen Zylinder umfassende Modulgröße (Zylinder plus Lagereinheiten) können Zylinderformate unterschiedlicher Größe eingesetzt und ggf. kombiniert werden.

Durch eine oder mehrere genannten, für die Modularität geschaffenen Voraussetzungen liegt ein erhebliches Einsparpotential vor, da die Stückzahl einzelner Baugruppen sowohl in der Konstruktion als auch in der Fertigung vergrößert wird.

Da die Antriebe der Druckwerkszylinder und/oder der einzelnen Farbwerke mit Einzelmotoren oder als abgeschlossene Getriebemodule ausgeführt sind, ist Schmiermittel z. B. lediglich in den bereits vorgefertigten Funktionsmodulen vorhanden.

Die Lagerung innen an den Seitengestellen erlaubt neben dem einfachen Einbau auch die Verkürzung von Zylinderzapfen, was sich schwingungsmindernd auswirkt.

Die genannte Ausführung der linearen Lager mit bewegbaren Anschlägen ermöglicht ein druckrelevantes Einstellen der Zylinder und im weiteren eine Automatische Grundeinstellung - für eine neue Konfigurierung, ein neues Drucktuch etc.

In einer Ausführung eines modularen Handhabungsautomaten wird für verschiedene Formate ein einfacher Plattenwechsel wahlweise möglich.

Ausführungsbeispiele der Erfindung sind in den Zeichnungen dargestellt und werden im Folgenden näher beschrieben.

Es zeigen:
- Fig. 1: eine schematische Darstellung einer Druckeinheit;
- Fig. 2: eine erste Betriebsstellung einer ersten Ausführung einer Druckeinheit;
- Fig. 3: eine zweite Betriebsstellung einer ersten Ausführung einer Druckeinheit;
- Fig. 4: eine schematische Darstellung der Modularität einer Druckeinheit;
- Fig. 5: eine Ausbaustufe einer zu konfigurierenden Druckeinheit;
- Fig. 6: verschiedene Beispiele modularer Farbwerke;
- Fig. 7: eine zweite Ausführung für die Konfigurierung einer Druckeinheit;
- Fig. 8: eine dritte Ausführung für die Konfigurierung einer Druckeinheit;
- Fig. 9: eine vierte Ausführung für die Konfigurierung einer Druckeinheit;
- Fig. 10: eine fünfte, sechste und siebte Ausführung für die Konfigurierung einer Druckeinheit;
- Fig. 11: verschiedene Beispiele modularer Feuchtwerke;
- Fig. 12: eine achte Ausführung für die Konfigurierung einer Druckeinheit;
- Fig. 13: eine neunte Ausführung für die Konfigurierung einer Druckeinheit;
- Fig. 14: eine zehnte Ausführung für die Konfigurierung einer Druckeinheit;
- Fig. 15: eine elfte Ausführung für die Konfigurierung einer Druckeinheit;
- Fig. 16: eine Ausführung eines modularen Handhabungsautomaten;
- Fig. 17: eine Draufsicht auf ein Doppeldruckwerk;
- Fig. 18: ein schematischer Längsschnitt durch eine Lagereinheit;
- Fig. 19: ein schematischer Querschnitt durch eine Lagereinheit;
- Fig. 20: eine erste Lageranordnung eines Doppeldruckwerkes;
- Fig. 21: eine zweite Lageranordnung eines Doppeldruckwerkes;
- Fig. 22: eine Prinzipskitze zur Lagerung und Einstellung der Zylinder;
- Fig. 23: ein Ausführungsbeispiel für eine Verschaltung einer Druckmittelversorgung;
- Fig. 24: eine Variante für eine teilbare Druckeinheit;
- Fig. 25: eine Lagereinheit mit Mitteln zur Schrägstellung eines Zylinders;
- Fig. 26: eine erste Ausführung für den Antrieb eines Druckwerks;
- Fig. 27: eine zweite Ausführung für den Antrieb eines Druckwerks;
- Fig. 28: eine dritte Ausführung für den Antrieb eines Druckwerks;
- Fig. 29: eine vierte Ausführung für den Antrieb eines Druckwerks;
- Fig. 30: eine fünfte Ausführung für den Antrieb eines Druckwerks;
- Fig. 31: eine vergrößerte Darstellung eines Doppeldruckwerkes in ebener Bauweise;
- Fig. 32: ein Ausführungsbeispiel für einen Farbwerksantrieb;
- Fig. 33: ein Teilschnitt des Farbwerksantriebes nach Fig. 32;
- Fig. 34: ein Schnitt durch eine drehfeste Verbindung aus Fig. 32;
- Fig. 35: eine erste Position a) und eine zweite Position b) des Farbwerksantriebes;
- Fig. 36: eine Ankopplung eines Zylinders an eine Seitenregisterantrieb;
- Fig. 37: eine Ausführung eines Haltemittels für einen Anschlag der Lagereinheit gemäß Fig. 23;
- Fig. 38: eine Ausführung eines Aktorelementes;
- Fig. 39: eine schematische Darstellung von vier Ausführungen a), b), c) und d) für eine Druckmaschine mit teilbaren oder ggf. nicht teilbaren Druckeinheiten;
- Fig. 40: eine schematische Darstellung eines Falzapparats;
- Fig. 41: ein Ausführungsbeispiel eines Antriebs einer Druckmaschine;
- Fig. 42: eine vergrößerte Darstellung des Linearlagers aus Fig. 18 bzw. Fig. 36.

Eine Druckmaschine, z. B. Rollenrotationsdruckmaschine, insbesondere eine Mehrfarbenrollenrotationsdruckmaschine, weist eine Druckeinheit 01 auf, in welcher eine

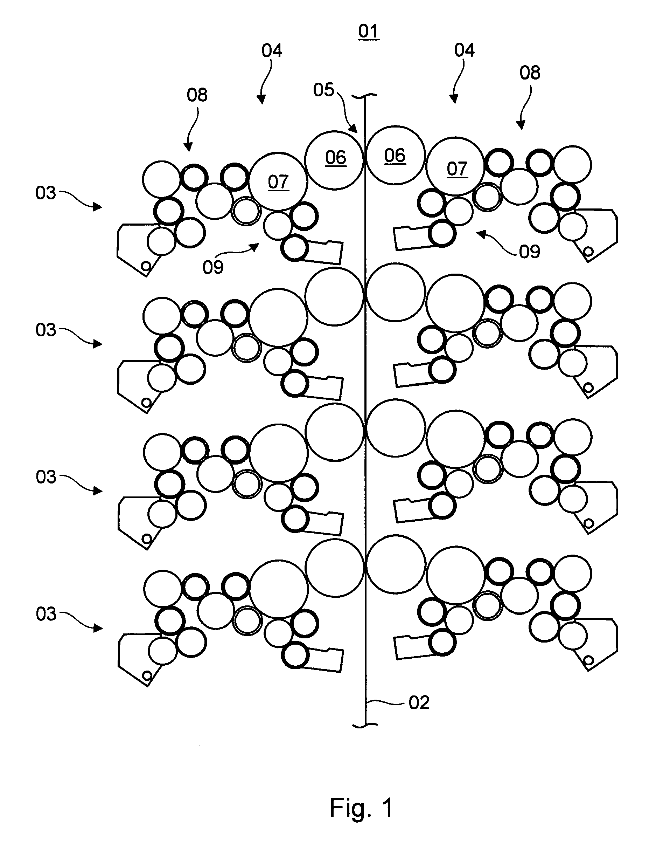

Materialbahn 02, kurz Bahn 02 beidseitig einfach oder insbesondere nacheinander mehrfach, z. B. hier vierfach, oder aber mehrere Bahnen gleichzeitig ein- oder mehrfach bedruckbar sind. Die Druckeinheit 01 weist mehrere (im vorliegenden Fall vier) vertikal übereinander angeordnete Doppeldruckwerke 03 für den beidseitigen Druck im Gummigegen-Gummi-Betrieb auf. Die Doppeldruckwerke 03 - hier in Form von Brücken- oder n-Druckwerken dargestellt - werden jeweils durch zwei Druckwerke 04 gebildet, welche je einen als Übertragungszylinder 06 und einen als Formzylinder 07 ausgebildeten Zylinder 06; 07, z. B. Druckwerkszylinder 06; 07, sowie jeweils ein Farbwerk 08 und im Fall des Nassoffsetdruckes zusätzlich ein Feuchtwerk 09 aufweisen. Jeweils zwischen den beiden Übertragungszylindern 06 wird in Anstelllage eine (Doppel-)Druckstelle 05 gebildet. Die genannten Bauteile sind lediglich am obersten Doppeldruckwerk 03 der Fig. 1 bezeichnet, wobei die übereinander angeordneten (Doppel-)Druckwerke 03; 04 jedoch im wesentlichen - insbesondere in der Ausgestaltung der für die Erfindung relevanten Merkmale - identisch ausgeführt sind. Die Doppeldruckwerke 03 können - ohne das unten beschriebene vorteilhafte Merkmal der linearen Anordnung - genauso gut entgegen der Darstellung in Fig. 1 als sich nach oben öffnende U - Einheit ausgeführt sein.

Die Druckeinheit 01 weist in vorteilhaften Ausführungen -je nach Anforderung, Maschinentyp, eingesetzter Technologie und/oder Ausbaustufe - eines oder mehrere der nachfolgenden Merkmale auf. Die Druckeinheit 01 bzw. das Doppeldruckwerk 03 ist/sind z. B. mittig, d. h. im Bereich der Doppeldruckstelle(n) 05, betriebsmäßig teilbar ausgeführt und/oder die Farbwerke 08 (und ggf. Feuchtwerke 09) sind als bereits mehrere Walzen aufweisende Module ausgebildet und als vormontierbare Module in die Druckeinheit 01 einsetzbar und/oder es sind Druckwerkszylinder 06; 07 unterschiedlichen Durchmessers ohne Erfordernis von Lagerbohrungen im Seitengestell montierbar und/oder die Zylinderlager sind in Linearlagern kraftgesteuert stellbar und/oder die Rotationsachsen der Druckwerkszylinder 06; 07 in Druck-An sind im wesentlichen in einer gemeinsamen Ebene liegend ausgeführt. Zusätzlich (oder ggf. als eigenständige Ausführung) kann die Modularität durch die spezielle, über zwei Zwischenräder gekoppelte paarweise Antriebsverbindung eines Druckwerkzylinderpaares oder aber über Einzelantriebe der Zylinder 06; 07 vorteilhaft unterstützt werden. Dies gilt ebenfalls in vorteilhafter Ausführung für die mechanische Unabhängigkeit des Antriebs des Farbwerks 08 und ggf. Feuchtwerk 09 vom Antriebe der Druckwerkszylinder 06; 07.

Prinzipiell sind einzelne oder mehrere der genannten Merkmale auch vorteilhaft für Druckeinheiten zu verstehen, welche nicht als Doppeldruckeinheiten im Gummi-gegen-Gummi-Druck ausgebildete Druckwerke 03, sondern lediglich im Schöndruck arbeitende Druckwerke 03 aufweisen. Der Übertragungszylinder 06 eines Druckwerkes wirkt dann mit einem Gegendruckzylinder zusammen. Insbesondere im modularen Konzept kann dies wahlweise vorgesehen sein, wobei anstelle der beiden Zylinder 06; 07 des zweiten Druckwerkes 04 und des Farbwerks 08 dann lediglich ein Gegendruckzylinder eingesetzt wird. Für die Anordnung innerhalb der Seitenwände kann dann das zu den anderen Zylindern 06; 07 unten ausgeführte gelten.

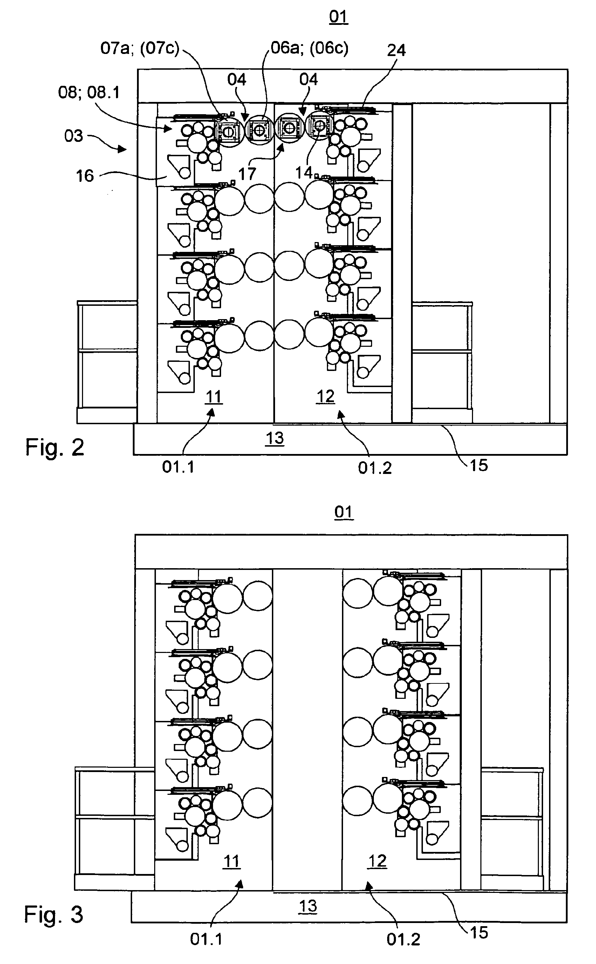

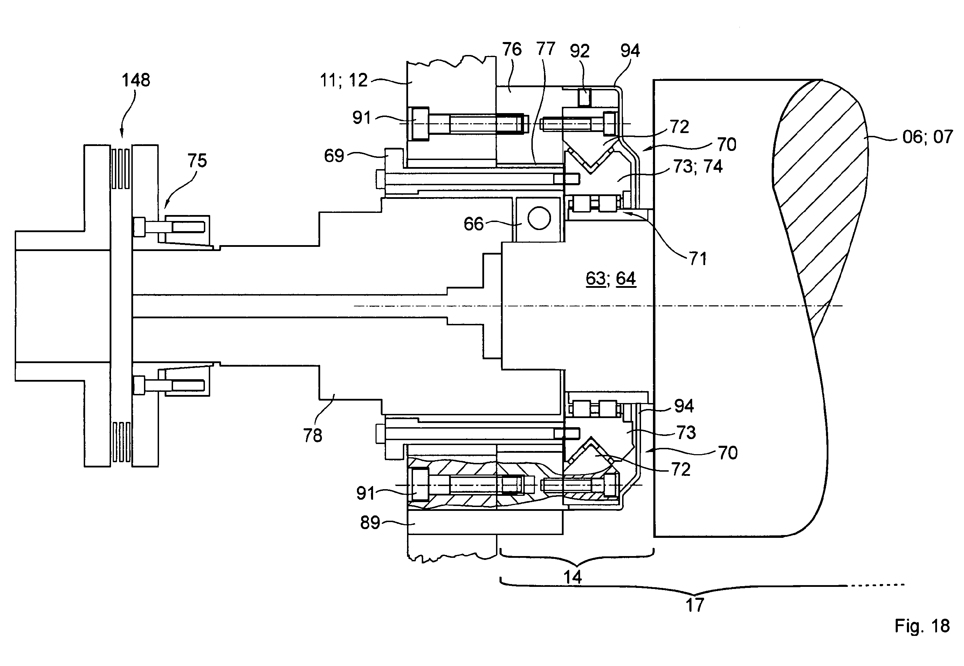

In den nachfolgenden Figuren 2 und 3 ist eine vorteilhafte Ausführung der Druckeinheit 01 dargestellt, wobei diese - grundsätzlich unabhängig vom ebenfalls dort dargestellten und unten näher beschriebenen modularen Aufbau der Druckwerke 04 und/oder den lediglich für das obere Doppeldruckwerk 03 exemplarisch angedeutete Lagereinheiten 14 (siehe Fig. 18) - im Bereich ihrer Doppeldruckstelle(n) 05, betriebsmäßig, d. h. für Rüst- und Wartungszwecke (im Gegensatz zum Zerlegen bzw. einer Demontage), teilbar ausgeführt ist. Die beiden voneinander trennbaren Teile (inklusive Zylinder 06; 07, Farbwerken 08 und, falls vorhanden, Feuchtwerken 09) werden im Folgenden mit Teildruckeinheiten 01.1 und 01.2 bezeichnet.

Hierzu sind die Druckwerkszylinder 06; 07 der mehreren (vier) übereinander angeordneten Doppeldruckwerke 03 rotierbar in bzw. an einem rechten und einem linken Gestell- bzw. Wandabschnitt 11; 12 in der Weise gelagert, dass die beiden Druckwerkszylinder 06; 07 eines selben Druckwerkes 04 dem selben Gestell- bzw. Wandabschnitt 11; 12 zugeordnet ist. Vorzugsweise sind die Druckwerkszylinder 06; 07 mehrerer, insbesondere aller die Bahn 02 auf der selben Seite bedruckenden Druckwerke 04 am selben Gestell- bzw. Wandabschnitt 11; 12 gelagert. Die Druckwerkszylinder 06; 07 können prinzipiell lediglich einseitig, d. h. fliegend an lediglich nur einer stirnseitigen Gestellabschnitte 11 gelagert sein. Vorzugsweise sind jedoch je Teildruckeinheit 01.1; 01.2 zwei stirnseitig zu den Zylindern 06; 07 angeordnete Gestellabschnitte 11; 12 vorgesehen. Die beiden voneinander trennbaren Teile werden im Folgenden mit Teildruckeinheiten 01.1 und 01.2 bezeichnet, welche die jeweiligen Gestellabschnitte 11; 12 und Druckwerke 04 (Druckwerkszylinder 06; 07 und Farbwerke 08) aufweisen.

Die Teildruckeinheiten 01.1; 01.2 sind entlang einer Richtung senkrecht zur Rotationsachse der Zylinder 06; 07 aufeinander zu bzw. voneinander weg bewegbar, indem vorzugsweise eine von beiden raumfest (hier Teildruckeinheit 01.1), d. h. beispielsweise auf einem Boden 13 des Druckereiraumes, einem raumfesten Träger 13, einer Montageplatte 13 oder einem Montagerahmen 13 für die Druckeinheit 01 ortsfest, und die andere (hier Teildruckeinheit 01.2) bewegbar gegenüber dem Boden 13 bzw. Träger 13 bzw. Montageplatte 13 oder Montagerahmen 13 (im folgenden Träger 13) gelagert ist.

Hierfür sind die äußeren Gestellabschnitte 12 in zueinander korrespondierenden, in nicht dargestellten Lagerelementen des Gestellabschnitts 12 und des Trägers 13, z. B. gemeinsam eine Linearführung 15 bildend, gelagert. Diese können als in Schienen laufende Rollen oder aber auch als gleit- oder wälzkörpergelagerte einander zugeordnete Linearführungselemente ausgeführt sein.

Vorzugsweise sind die Wandabschnitte 11; 12 derart ausgebildet, dass sie in ihrer Betriebsstellung A (Fig. 2) auf ihrer einander zugewandten Seite paarweise im wesentlichen zueinander formkomplementär ausgebildet sind und zusammengefahren an ihren Trennlinien bzw. Stoßlinien dennoch eine im wesentlichen geschlossene Seitenfront bilden.

Fig. 3 zeigt eine Wartungsstellung B der Druckeinheit 01 (ohne die in Fig. 2 angedeuteten Lagereinheiten 14), wobei die Relativstellung der Teildruckeinheiten 01.1; 01.2 zueinander durch Bewegen der Gestellabschnitte 12 bewirkt ist. Die Relativstellung kann grundsätzlich in anderer Ausführung auch erreicht werden, indem beide Teildruckeinheiten 01.1; 01.2 bzw. deren Gestellabschnitte 11; 12 bewegbar gelagert sind.

Form- und Übertragungszylinder 07; 06 sind in einer ersten, in Fig. 1 bis 3 bislang dargestellten Formatausgestaltung vorzugsweise mit einer Ballenbreite von mindestens vier, z. B. vier oder auch für besonders hohen Produktausstoß sechs, nebeneinander angeordneten stehenden Druckseiten im Zeitungsformat, insbesondere im Broadsheet-Format, ausgebildet. So kann eine doppelt breite Bahn 02 nebeneinander mit vier bzw. eine dreifach breite Bahn 02 nebeneinander mit sechs Zeitungsseiten bedruckt, und der Formzylinder 07 entsprechend mit vier bzw. sechs Druckformen, insbesondere mit ihren Enden zueinander fluchtend, nebeneinander belegt werden. In einer ersten, in Fig. 1 bis 3 bislang dargestellten vorteilhaften Formatausgestaltung weisen die Zylinder 06; 07 einen Umfang auf, welcher im wesentlichen zwei hintereinander angeordneten Druckseiten in einem Zeitungsformat entspricht.

In den Ausführungen der Druckeinheit 01 mit Formzylindern 07 doppelt großen Formats (zwei Zeitungsseiten im Umfang hintereinander) weist dieser vorteilhafter Weise zwei in Umfangsrichtung um 180° zueinander versetzte Kanäle zur Aufnahme der Druckformen auf, welche vorzugsweise über die gesamte wirksame Ballenlänge durchgehend ausgebildet sind. Der Formzylinder 07 kann dann mit vier bzw. sechs Druckformen nebeneinander und je zwei Druckformen hintereinander bestückt sein.

Der Übertragungszylinder 06 weist bei doppelt großem Format (zwei Zeitungsseiten im Umfang hintereinander) in einer Ausführung z. B. lediglich einen Kanal zur Aufnahme eines oder mehrerer nebeneinander angeordneter Drucktücher auf, welcher vorzugsweise über die gesamte wirksame Ballenlänge durchgehend ausgebildet ist. Der Übertragungszylinder 06 kann dann mit einem über die Ballenlänge durchgehenden und über im wesentlichen den vollen Umfang reichenden oder mit zwei oder drei über im wesentlichen den vollen Umfang reichenden Drucktüchern nebeneinander bestückt sein. In anderer Ausführung des doppelt großen Übertragungszylinders 06 kann dieser zwei oder drei Drucktücher nebeneinander aufweisen, wobei die jeweils benachbarten zueinander um 180° in Umfangsrichtung versetzt sind. Diese zueinander versetzten Drucktücher können in zwei bzw. drei Kanalabschnitten gehalten sein, welche ebenfalls in Längsrichtung des Zylinders 06 nebeneinander, die jeweils benachbarten Kanalabschnitte in Umfangsrichtung jedoch zueinander um 180° versetzt sind.

Wie bereits in Fig. 2 und 3 angedeutet, sind - zunächst prinzipiell unabhängig von der Teil- bzw. Trennbarkeit - in vorteilhafter Ausführung der Druckeinheit 01 die Farbwerke 08 oder aus Lagereinheiten 14 und dem betreffenden Zylinder 06 gebildeten Zylindereinheiten 17 oder vorzugsweise sowohl die Farbwerke 08 als auch die Zylindereinheiten 17 als Module, d. h. als baulich für sich betrachtet vormonierte Baueinheiten ausgeführt.

Die als Module ausgeführten Farbwerke 08 weisen z. B. ein eigenes Gestell 16 bzw. eine Rahmenkonstruktion 16 auf, in welcher mehrere Funktionsteile, hier mindestens drei, insbesondere sämtliche Walzen sowie eine Farbquelle bzw. Farbzufuhr (Kammerrakel, Farbkasten, Auftragdüsen etc.) des Farbwerk 08, auch ohne Anbindung an das Seitengestell 11; 12 der Druckeinheit 01, bereits ihre fest definierte Lage zueinander erhalten sowie beispielsweise vormontiert und insgesamt in die Druckeinheit 01 einbringbar sind. Die Rahmenkonstruktion 16 bzw. das Gestell 16 kann insbesondere als zwei zu den Walzen stirnseitig angeordnete Seitengestelle ausgeführt sein, welche beispielsweise durch mindestens eine nicht dargestellte Traverse und/oder einen Boden miteinander verbunden sind. Das die Funktionsteile des Moduls aufnehmende Gestell 16 wird bei der Montage fest (stoffschlüssig oder fomschlüssig lösbar) mit dem Seitengestell 11; 12 der Druckeinheit 01 verbunden. Ist die Druckeinheit 01 in o. g. Weise teil- bzw. trennbar ausgeführt, so werden die als Module ausgeführten Farbwerke 08 bei Montage mit den jeweiligen Gestell- bzw. Wandabschnitten 11; 12 - stoffschlüssig (schweißen) oder formschlüssig lösbar (verschrauben) - verbunden. Das Gesamtseitengestell auf einer Seite der Druckeinheit 01 bzw. ein Gesamtseitengestell einer Teildruckeinheit 01.1; 01.2 setzt sich dann mehrstückig - ein die Zylinder 06; 07 aufnehmendes Seitengestell 11; 12 und Teilseitengestelle der Farbwerke 08 aufweisend - zusammen. Lösbar meint hier keine betriebsmäßige Lösbarkeit sondern lediglich ein Zerlegen im Hinblick auf eine Demontage der Druckeinheit 01 bzw. einen Ausbau/Austausch des Farbwerk 08.

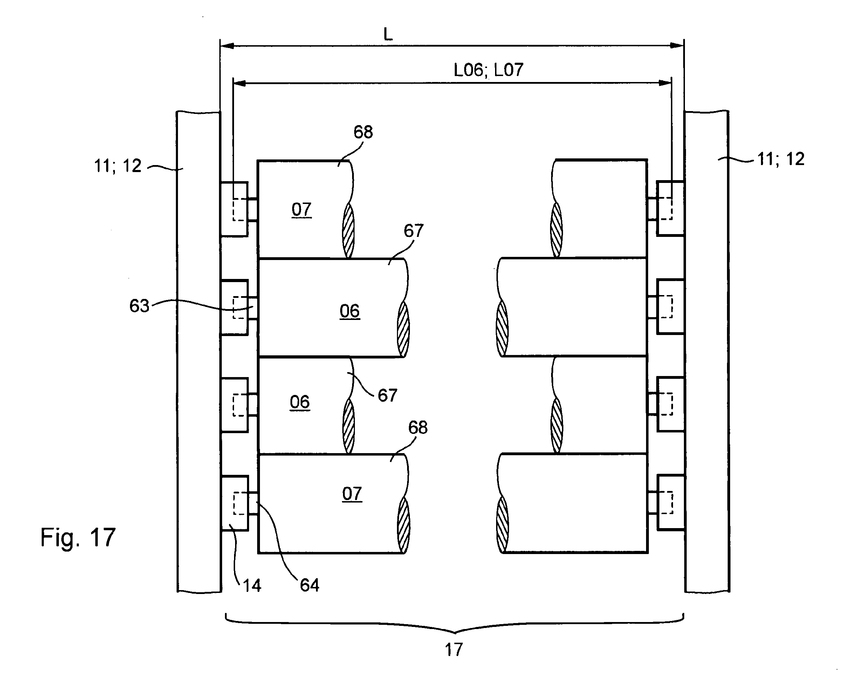

Als Zylindereinheiten 17 ausgeführte Module (siehe unten zu Fig. 17 und 18) weisen z. B. einen Zylinder 06; 07 mit Zapfen 63; 64 und einer bereits auf dem Zapfen 63; 64 vormontierten (vorgespannt und/oder voreingestellt) Lagereinheit 14 auf. Lagereinheit 14 und Zylinder 06; 07 erhalten bereits vor dem Einsetzten in die Druckeinheit 01 ihre fest definierte Lage zueinander und sind insgesamt in die Druckeinheit 01 einbringbar.

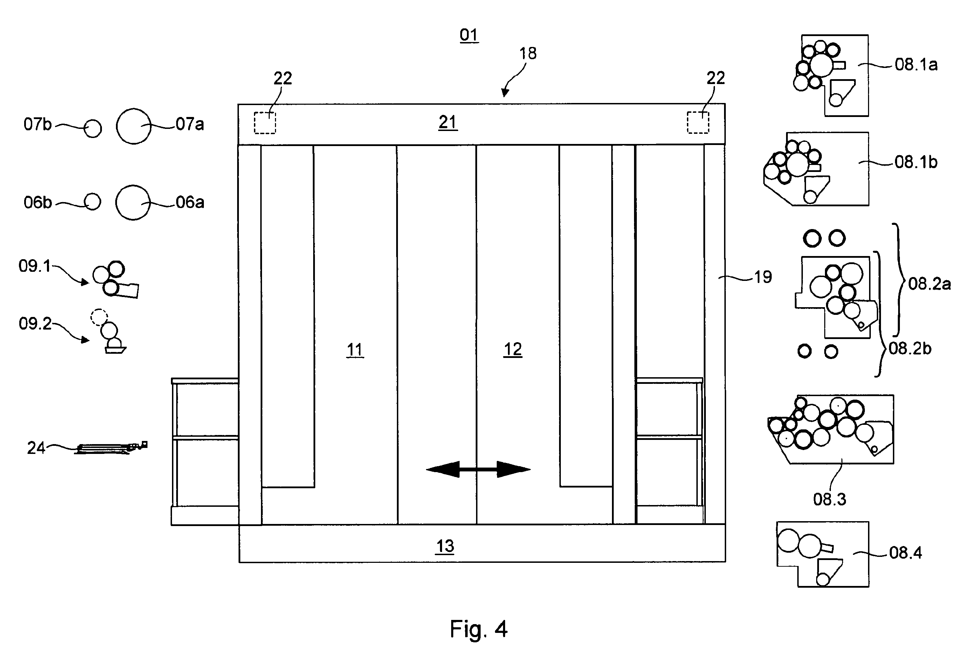

Fig. 4 stellt ein System einer modular aufgebauten Druckeinheit 01 dar, welche jedoch grundsätzlich sowohl teilbar (wie dargestellt) als auch unteilbar ausgeführt sein kann. Im letzteren Fall wäre das die Zylinder 06; 07 aufnehmende Seitengestell 11; 12 nicht zweiteilig sondern einteilig und raumfest in der Druckerei angeordnet. Vorteilhaft ist jedoch die teilbare Variante wie dargestellt.

Im Fall der nichtteilbaren Variante können beispielsweise zwei stirnseitig zu den Zylindern 06; 07 angeordnete Seitengestelle 11; 12 zusammen mit dem raumfesten Träger 13 (bzw. Montageplatte 13 oder Montagerahmen 13) und wenigstens einer (besser zwei) die beiden Seiten oberhalb einer mittleren Höhe verbindende Traverse (für diesen Fall nicht dargestellt) ein Grundgerüst 18 für die Druckeinheit 01 bilden.

Für die teilbare Version wird das Grundgerüst 18 beispielsweise durch den unteren Träger 13, die beiden jeweils raumfest angeordneten Gestellabschnitte 11, je Druckmaschinenseite mindestens eine Stütze 19, einen den raumfest angeordneten Gestellabschnitt 11 und die Stütze 19 verbindenden oberen Träger 21 je Druckmaschinenseite und mindestens einer (besser mindestens zwei) die beiden Seiten oberhalb einer mittleren Höhe verbindende Traverse 22 (lediglich strichliert dargestellt). Die Gestellabschnitte 11; 12 können als im wesentlichen durchgehende Wandabschnitte jeweils einstückig und flächig ausgeführt sein oder zum Zwecke einer leichteren Bauweise und/oder besseren Zugänglichkeit der Aggregate, wie dargestellt, jeweils schlank gehalten sein und ggf. je Seitengestell zur Stabilisierung mit zusätzlich einer oder mehreren vertikal tragende Stützen (nicht eigens mit Bezugszeichen belegt) verbunden sein.

Dieses "leere" Grundgerüst ist nun mit Druckwerkszylindern 06; 07 und Farbwerken 08 unterschiedlicher Ausgestaltung konfigurierbar bzw. einzurichten.

Wie ebenfalls in Fig. 4 dargestellt, kann als Übertragungszylinder 06 ein Übertragungszylinder 06a mit einem Umfang von zwei stehenden Druckseiten, insbesondere Zeitungsseiten im Broadsheet-Format, (doppelt groß) oder aber ein Übertragungszylinder 06b mit einem Umfang von einer Druckseite, insbesondere Zeitungsseite im Broadsheet-Format (einfach groß) entsprechen eingesetzt sein. Ebenso ist die Bestückung mit Formzylindern 07a eines Umfangs von zwei stehenden Druckseiten, insbesondere Zeitungsseiten, oder einfachen Umfangs (Formzylinder 07b), d. h. einer Druckseite, insbesondere Zeitungsseite im Broadsheet-Format, am Umfang möglich. Grundsätzlich kann jegliche Kombination von Form- und Übertragungszylindern 07; 06 mit einem ganzzahligen Umfangsverhältnis von Form- zu Übertragungszylinder 07; 06 zueinander, z. B. 1:1, 1:2, 2:1, 3:1, 1:3, 3:2, 2:3, vorzugsweise jedoch mit einem Formzylinder 07, der gleich oder gleich dem Übertragungszylinder 06 ist.

In den Ausführungen der Druckeinheit 01 mit Formzylindern 07 einfach großen Formats (eine Zeitungsseite im Umfang) weist dieser vorteilhafter Weise in Umfangsrichtung betrachtet einen Kanal zur Aufnahme der Druckformen auf, welcher vorzugsweise über die gesamte wirksame Ballenlänge durchgehend ausgebildet ist. Der Formzylinder 07 kann dann mit vier bzw. sechs Druckformen nebeneinander bestückt sein.

Der Übertragungszylinder 06 weist bei einfach großem Format (eine Zeitungsseiten im Umfang) in einer Ausführung z. B. lediglich einen Kanal zur Aufnahme eines oder mehrerer nebeneinander angeordneter Drucktücher auf, welcher vorzugsweise über die gesamte wirksame Ballenlänge durchgehend ausgebildet ist. Der einfachumfängliche Übertragungszylinder 06 kann dann mit einem über die Ballenlänge durchgehenden und über im wesentlichen den vollen Umfang reichenden oder mit zwei oder drei über im wesentlichen den vollen Umfang reichenden Drucktüchern nebeneinander bestückt sein.

In Ausführungen, wobei ein einfach großer Formzylinder 07 mit einem doppelt großem Übertragungszylinder 06 zusammen wirkt, kann vorteilhaft das zu den doppelt großen Übertragungszylindern 06 und den einfach großen Formzylindern 07 genannte zusammen angewandt werden.

Auch ist die wahlweise Konfigurierung mit (z. B. einfach großen oder doppelt großen) Zylindern 06; 07 mit Umfängen für verschiedene Druckseitenformate, z. B. Zeitungsformate, mit voneinander abweichenden Umfängen möglich. So können die Umfänge der doppelt großen Zylinder 06a; 07a zwischen 840 und 1.300 mm, insbesondere 860 bis 1.120 mm, und die der einfach großen Zylinder 06b; 07b entsprechend bei 420 bis 650 mm, insbesondere 430 bis 560 mm oder gar zwischen 430 bis 540 mm, liegen. Mit der unten detaillierter beschriebenen Zylindereinheit 17 ist dieser modularer Aufbau im besonderem Maße begünstigt, da hierfür keine die exakte Lage und Geometrie der Zylinder 06; 07 berücksichtigenden Lagerbohrungen für die passgenaue Aufnahme von Drei- oder Vierringlagern mit z. B. Exzentern im Seitengestell 11; 12 vorgesehen sein müssen.

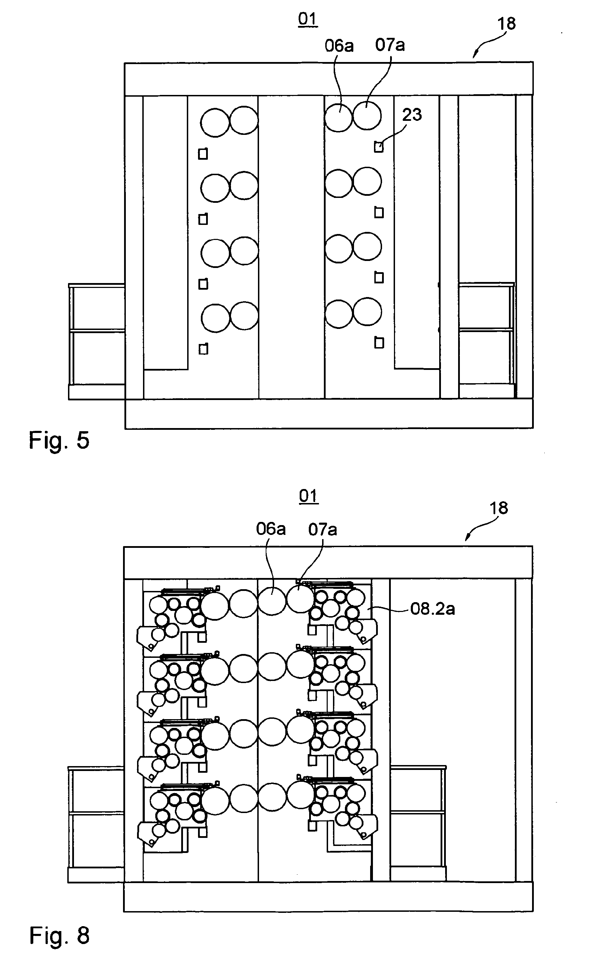

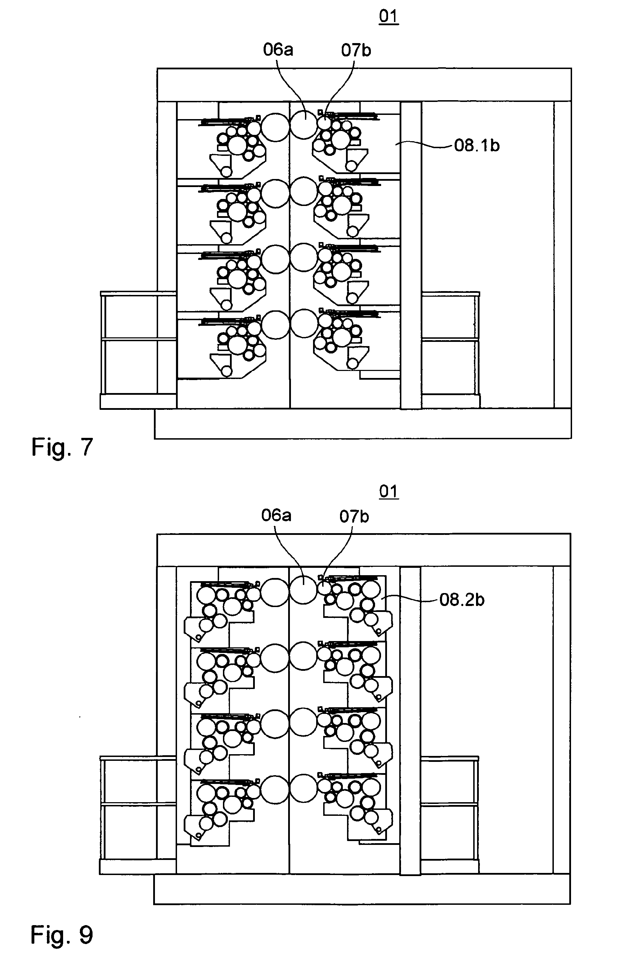

In Fig. 5 ist die Druckeinheit 01 beispielhaft mit Zylindern 06a; 07a doppelten Umfangs ausgeführt. Bei Ausstattung mit einfach großen Formzylindern 07b können diese zwecks erhöhter Stabilität (wie unten zu Fig. 7, 9, 13) mit doppeltgroßen Übertragungszylindern 06a oder aber raumsparend mit ebenfalls einfach großen Übertragungszylindern 06b zusammenwirken.

Besonders vorteilhaft ist es möglich - zunächst prinzipiell unabhängig von der Teilbarkeit der Druckeinheit 01 und/oder des modularen Einsatzes von Zylindereinheiten 17 - die Druckeinheit 01 je nach Kundenwunsch modular mit Farbwerken 08 verschiedenen Typs auszuführen. Die verschiedenen Farbwerkstypen können wie in Fig. 4 dargestellt Kurzfarbwerke 08.1, einzügige Walzenfarbwerke 08.2 z. B. mit zwei Reibzylindern (z. B. aus dem Zeitungsdruck) oder Walzenfarbwerke 08.3 mit zwei Farbzügen und z. B. drei Reibzylindern (z. B. aus dem Akzidenzdruck).

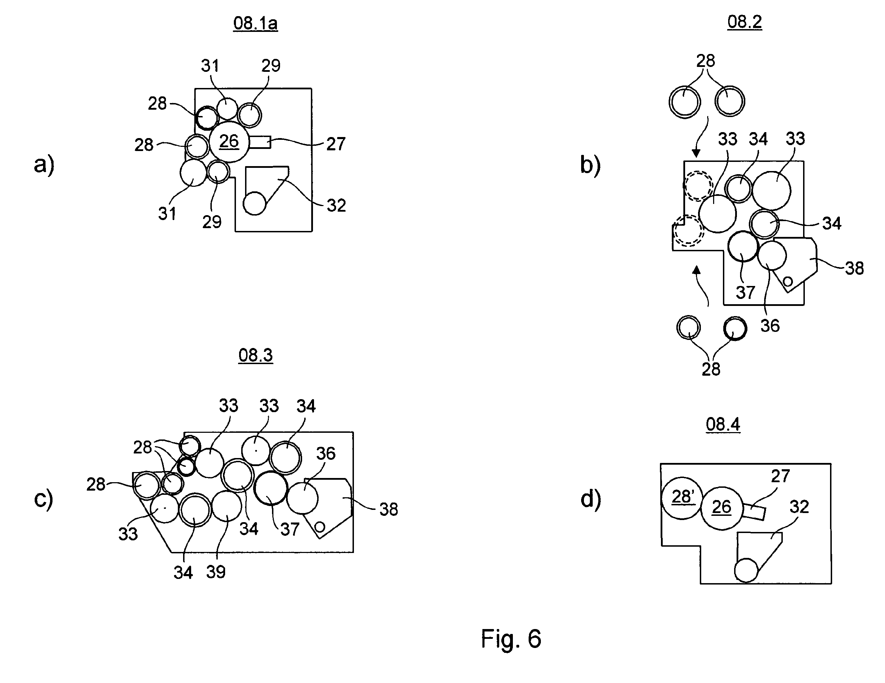

Das als Kurzfarbwerk 08.1 einer ersten Variante (Fig. 6a) ausgeführte Farbwerk 08 weist eine zentrale Walze 26 mit Haschuren oder Näpfchen, z. B. eine Rasterwalze 26 auf, welche die Farbe aus einer Farbauftragvorrichtung 27, insbesondere einer Kammerrakel 27 (oder auch über einen nicht dargestellten Walzenzug von einem Farbkasten her) bezieht und über mindestens eine, vorzugsweise mindestens zwei, Walze(n) 28, z. B. Auftragwalzen 28, insbesondere mit weicher Oberfläche, an die Druckform des Formzylinders 07 abgibt. Vorteilhaft wirkt die zentrale Walze 26 mit zwei weiteren weichen Walzen 29, z. B. Farb- oder Auftragwalzen 29 zusammen. Zur Vergleichmäßigung der Farbverteilung wirkt je eine axial Walze 31, z. B. changierende Reibwalze 31 (vorzugsweise mit harter Oberfläche) mit je einer Auftragwalze 28 und der benachbarten Farbwalzen 29 zusammen. Die Farbauftragvorrichtung 27 bezieht ihre Farbe beispielsweise von einem Farbreservoir 32, insbesondere über eine nicht dargestellte Pumpeinrichtung, in welche überschüssige Farbe auch abtropfen kann. Vorzugsweise ist die Rasterwalze 26 durch einen eigenen, von den Zylindern 06; 07 unabhängigen Antriebsmotor rotatorisch angetrieben. Die übrigen Walzen 28; 29; 31 sind vorzugsweise durch Friktion getrieben. Die Changierbewegung kann bei erhöhten Anforderung an Variabilität durch ein eigenes Antriebsmittel, oder wie hier mit vermindertem Aufwand vorgesehen, durch ein die Rotationsbewegung in Axialbewegung umformendes Getriebe erfolgen.

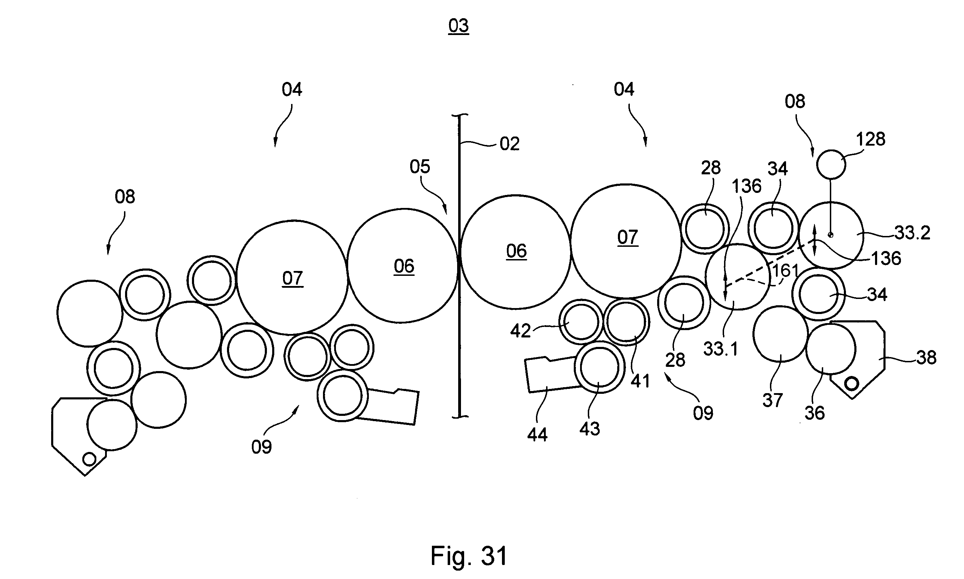

Das als einzügiges Walzenfarbwerk 08.2 (auch "langes Farbwerk", Fig. 6b)) ausgeführte Farbwerk 08 weist (mindestens) zwei, die Farbe auf die Druckform auftragende Auftragwalzen 28 auf, welche die Farbe über eine druckformnahe Walze 33, insbesondere changierende Reibwalze 33 bzw. Reibzylinder 33 (z. B. mit harter Oberfläche), eine Walze 34, insbesondere Farb- oder Übertragungswalze 34 (z. B. mit weicher Oberfläche), eine druckwerksferne changierende Reibwalze 33 bzw. Reibzylinder 33, eine weitere Farb- oder Übertragungswalze 34 (z. B. mit weicher Oberfläche), eine Walze 37, insbesondere Filmwalze 37 und eine Walze 36, insbesondere Duktor- oder Tauchwalze 36 aus einem Farbkasten 38 erhält. Tauch- und Filmwalze 36; 37 (charakterisierend für ein Filmfarbwerk) können auch durch ein anderes Farbzuführ- bzw. -dosiersystem (z. B. Pumpsystem im Pumpfarbwerk, oder Hebersystem im Heberfarbwerk) ersetzt sein. In einer Ausführung sind die Reibzylinder 33, gemeinsam oder jeweils einzeln, durch einen eigenen, von den Zylindern 06; 07 unabhängigen Antriebsmotor rotatorisch angetrieben. Auch für die Walze 36 ist vorzugsweise, und in Weiterbildung ggf. für die Filmwalze 37 ein eigener rotatorischer Antriebsmotor vorgesehen. Die Changierbewegung der Reibzylinder 33 kann bei erhöhten Anforderung an Variabilität, gemeinsam oder jeweils einzeln, durch ein eigenes Antriebsmittel, oder wie hier mit vermindertem Aufwand vorgesehen, durch ein die Rotationsbewegung in Axialbewegung umformendes Getriebe erfolgen. Eine vorteilhafte weitere Ausführung des - z. B. ebenfalls in der Art eines Moduls ausgeführtes - einzügigen Farbwerk 08.2 ist unten im Rahmen der Beschreibung von Fig. 31 bis 35 dargelegt.

Das als zweizügiges Walzenfarbwerk 08.3 (Fig. 6c)) ausgeführte Farbwerk 08 weist mindestens drei, hier vier die Farbe auf die Druckform auftragende Auftragwalzen 28 auf, welche die Farbe über einen ersten Farbzug mit einem ersten Reibzylinder 33, einer weichen Farbwalze 34 und einer harten Übertragungswalze 39, und einen zweiten Farbzug mit einem zweiten Reibzylinder 33 von einer gemeinsamen weichen Farbwalze 34 her, einem formzylinderfernen Reibzylinder 33, eine weitere weiche Farbwalze 34, eine Filmwalze 37 und eine Duktorwalze 36 aus einem Farbkasten 38 erhält. Wie o. g kann auch hier Duktor- und Filmwalze 36; 38 durch ein anderes o. g. Farbzuführ- bzw. - dosiersystem ersetzt sein.

Vorzugsweise sind die drei Reibzylinder 33, gemeinsam oder jeweils einzeln, durch einen eigenen, von den Zylindern 06; 07 unabhängigen Antriebsmotor rotatorisch angetrieben. Auch für die Duktorwalze 36 ist vorzugsweise, und in Weiterbildung ggf. für die Filmwalze 37 ein eigener rotatorischer Antriebsmotor vorgesehen. Die Changierbewegung der Reibzylinder 33 kann bei erhöhten Anforderung an Variabilität, gemeinsam oder jeweils einzeln, durch ein eigenes Antriebsmittel, oder wie hier mit vermindertem Aufwand vorgesehen, durch ein die Rotationsbewegung in Axialbewegung umformendes Getriebe erfolgen. Dieses Farbwerk 08.3 kann zwar auch für den Zeitungsdruck eingesetzt werden, wird allerdings vorzugsweise bei Konfigurierung der Druckeinheit für den Akzidenzdruck vorgesehen.

In einer zweiten Variante (Fig. 6d)) eines Kurzfarbwerks 08.4 (auch "Anitoxfarbwerk") weist dieses lediglich eine große, insbesondere einer Größe des Formzylinders 07 entsprechende, Auftragwalze 28' auf, welche von der Rasterwalze 26 (in einer Variation ebenso groß) die Farbe erhält und von der Farbauftragvorrichtung 27, z. B. einem Rakelsystem 27, insbesondere der Kammerrakel 27, eingefärbt wird. Dieses Farbwerk 08.4 kann wegen seiner geringen Neigung zum Dublieren (aufgrund des 1:1 Verhältnisses zwischen Auftragwalze 28' und Formzylinder 07) gleichermaßen in für den Zeitungsdruck wie insbesondere in für den Akzidenzdruck konfigurierten Druckeinheiten 01 vorgesehen sein.

Vorteilhafter Weise können für die Farbwerke 08.x eines selben Typs x jeweils für die verschiedenen Formate des Formzylinders 07a; 07b, wie in Fig. 4 angedeutet, verschiedene Ausführungen vorgesehen sein. Neben dem modularen Einsatz verschiedener Farbwerkstechnologien können dann auch die verschiedenen Formate modular bedient werden. Die Farbwerke 08.x des selben Typs sind dann vorteilhafter Weise in der gleichen Weise aufgebaut, unterscheiden sich jedoch ggf. in der geometrischen Orientierung insgesamt oder zumindest der Auftragwalzen 28; 28'. So ist in Abhängigkeit vom Formzylinder 07a; 07b entweder das Kurzfarbwerk 08.1 a (Fig. 2) oder das Kurzfarbwerk 08.1 b (Fig. 7) einzusetzen. Ist zwischen mehr als zwei wesentlich voneinander unterscheidbaren Umfangsformaten des Formzylinders 07 zu unterscheiden, so kann es eine entsprechende Anzahl Ausführungen von Farbwerken 08 des selben Typs geben. Wesentlich ist hierbei, dass zumindest die angetriebenen Teile (rotatorisch, axial) zueinander, zumindest für die verschiedenen Farbwerksformate des selben Typs, zumindest relativ zueinander die selbe Lage einnehmen.

Vorteilhafter Weise weisen die Seitengestelle 11; 12 für mehrere Farbwerke 08 des selben Typs und/oder verschiedener Typen, eine selbe das Farbwerk 08 stützende Auflage, Aussparung oder Anschläge auf. Sie können in ihrer Formgebung jedoch auch derart ausgeführt sein, dass sie mehrere Farbwerke 08 des selben Typs und/oder verschiedener Typen aufnehmen können. Hierzu können für verschiedene Farbwerke 08 nutzbare Einhängekanten oder Auflageflächen oder aber im Seitengestell 11; 12 nach der Fertigung bereits gleichzeitig mehrere verschiedene, für verschiedene Farbwerke 08 jeweils passende Einhängekanten/Auflageflächen vorbereitet sein.

Exemplarisch ist in Fig. 5 je Druckwerk 04 eine Traverse 23 angedeutet, auf welche das jeweilige Farbwerk 08 aufsetzbar bzw. dort einhängbar ist. Zusätzlich oder statt dessen können im montierten Zustand die Farbwerke 08 auch aufeinander gestapelt sein und/oder zusätzlich an den vertikalen Stützen gesichert oder befestigt sein.

Wie bereits wie in Fig. 2 und 3 dargestellt, ist die Druckeinheit 01, z. B. für den Zeitungsdruck, in einer vorteilhaften ersten Ausführung mit Kurzfarbwerken 08.1 (Fig. 6a) bestückt. Da der Formzylinder 07a dort mit doppeltem Format ausgeführt ist, weist die Druckeinheit 01 z. B. die entsprechenden Kurzfarbwerke 08.1 a auf. Die Druck- und Farbwerke 04; 08 sind hierbei für den "Trockenoffset" bzw. "wasserlosen Offsetdruck" ausgeführt, d. h. die Ausführung von Druckform und Farbwerk 08 ist dergestalt, dass kein Feuchtmittel und somit kein Feuchtwerk 09 vorgesehen ist.

Fig. 7 zeigt in einer zweiten Ausführung, z. B. für den Zeitungsdruck, die Bestückung der Druckeinheit 01 im Trockenoffset, mit Kurzfarbwerken 08.1 b für den Fall einfach großer Formzylinder 07b.

Fig. 8 bzw. Fig. 9 zeigen die Druckeinheit 01, z. B. für den Zeitungsdruck, in einer dritten und vierten Ausführung bestückt mit einzügigen Walzenfarbwerken 08.2a; 08.2b - einmal mit doppelt großen Formzylindern 07a und im zweiten Fall mit einfach großen Formzylindern 07b, jeweils im Trockenoffset.

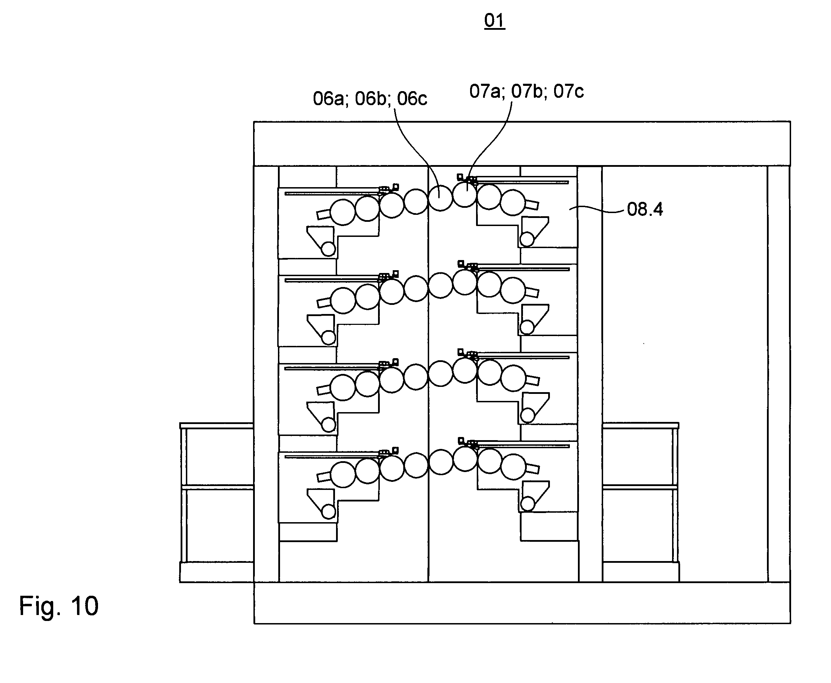

Fig. 10 zeigt die Druckeinheit 01, alternativ für den Zeitungsdruck oder den Akzidenzdruck jedoch in einer gemeinsamen Darstellung angedeutet, in einer fünften, sechsten und siebten Ausführung bestückt mit der zweiten Variante der Kurzfarbwerke 08.4 - mit doppelt großen Formzylindern 07a, mit einfach großen Formzylindern 07b oder mit einem unten beschriebenen Formzylinder 07c für den Akzidenzdruck, jeweils im Trockenoffset. Die Auftragwalze 28' (Fig. 6d) weist vorzugsweise jeweils den Umfang des zugeordneten Formzylinders 07a; 07b; 07c auf.

Neben den bislang beschriebenen Ausführungen des Trockenoffset ist vorteilhaft in der modularen Konzeption auch die Ausführung von im "Nassoffset" betriebenen Druckwerken 04 vorgesehen, d. h. es wird der Druckform neben Farbe auch Feuchtmittel über ein Feuchtwerk 09, strikt getrennt vom Farbwerk 08 oder aber parallel verbunden über eine Brückenwalze mit dem Farbwerk 08, zugeführt.

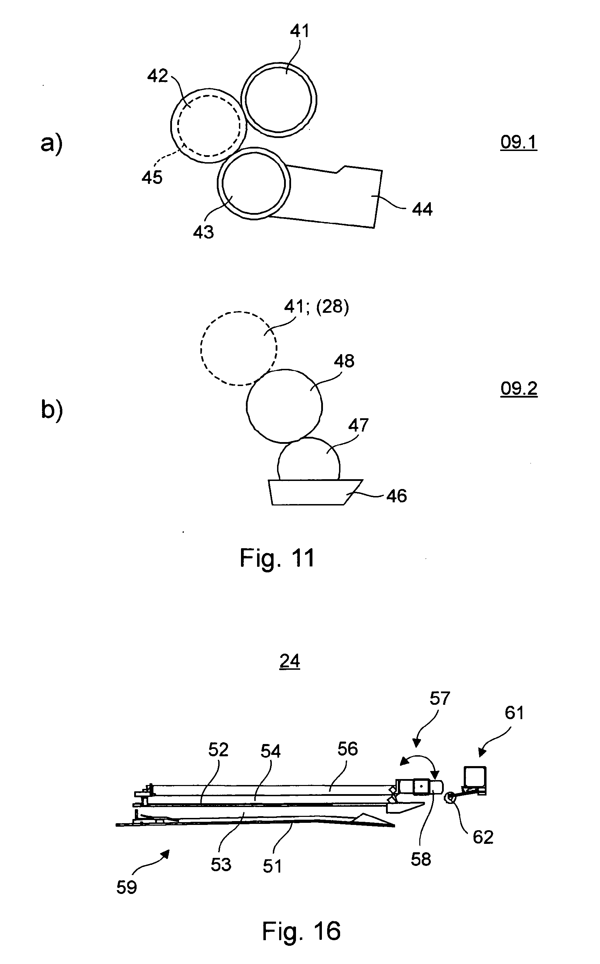

In Fig. 4 und Fig. 11 a) ist mit durchgezogenen Linien eine erste Ausführung des Feuchtwerks 09 als Feuchtwerk 09.1 mit wenigstens drei Walzen 41; 42; 43 dargestellt. Vorzugsweise ist das Feuchtwerk 09.1 als sog. kontaktloses Feuchtwerk 09.1, insbesondere Sprühfeuchtwerk 09.1, ausgeführt, wobei auf eine letzte Walze 43 des Feuchtwerks 09 das Feuchtmittel kontaktlos von einer Feuchtmittelquelle 44 her übertragen wird. Dies kann beispielsweise durch kontaktloses Schleudern, kontaktlose Bürsten oder in anderer Weise, jedoch vorzugsweise durch Sprühdüsen eines Sprühbalkens 44 erfolgen. Liegen zwischen Sprühbalken 44 und Formzylinder 07 in Reihe drei Walzen 41; 42; 43 vor (ohne ggf. vorhandene Reiterwalzen), so ist die mit der Druckform zusammen wirkende Walze 41, z. B. Auftragwalze 41 vorzugsweise mit weicher Oberfläche (z. B. Gummi), eine darauf folgende, vorzugsweise als changierender Reibzylinder 42 ausgeführte Walze 42 mit harter Oberfläche (z. B. Chrom oder Edelstahl), und die beim dreiwalzigen Feuchtwerk 09.1 das Feuchtmittel von der Feuchtmittelquelle 44 empfangende Walze 43 mit weicher Oberfläche (z. B. Gummi) ausgeführt. Bei einem alternativen vierwalzigen kontaktlosen Feuchtwerk 09 schließt sich an die weiche Walze 43 eine nicht dargestellte vierte Walze mit z. B. harter Oberfläche an, welche das Feuchtmittel empfängt. Vorzugsweise ist in dieser Ausführung der Reibzylinder 42 durch einen eigenen, von den Zylindern 06; 07 unabhängigen Antriebsmotor rotatorisch angetrieben, wobei die beiden Walzen 41 und 43 über Friktion angetrieben sind. In einer alternativen Variante kann auch für die Walze 43 ein eigener rotatorischer Antriebsmotor vorgesehen sein. Die Changierbewegung des Reibzylinders 42 kann durch ein eigenes Antriebsmittel, oder wie hier mit vermindertem Aufwand vorgesehen, durch ein dessen Rotationsbewegung in Axialbewegung umformendes Getriebe erfolgen.

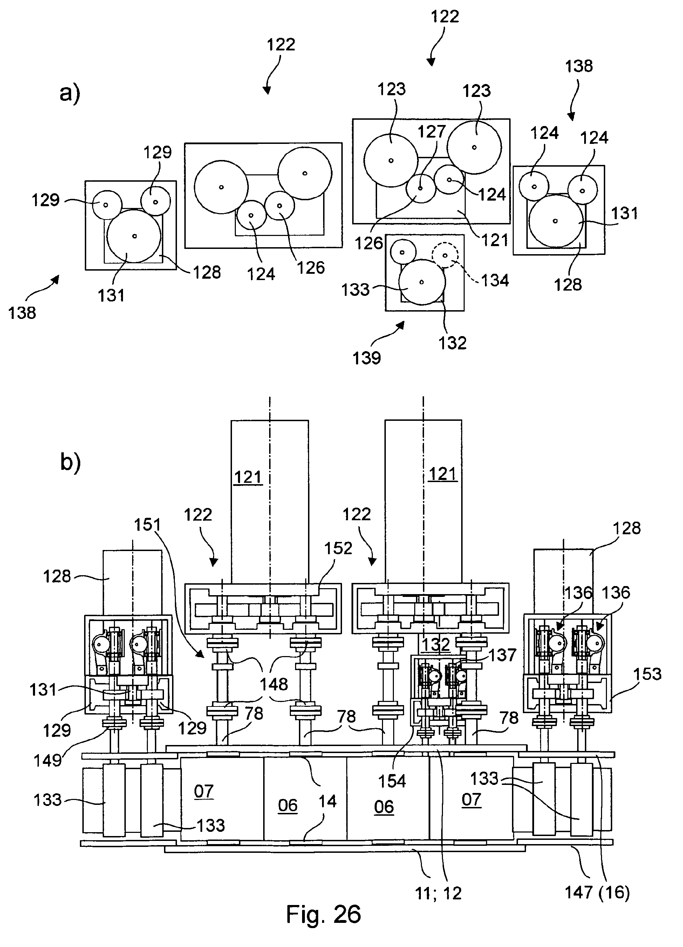

Fig. 11 a) stellt in der Darstellung unter Berücksichtigung der strichlierten Kreislinie eine besonders vorteilhafte Weiterbildung des dreiwalzigen Feuchtwerks 09.1 aus Fig. 11 a) dar, wobei im Gegensatz zu dem Feuchtwerk 09.1 nach Fig. 11 a) die Walze 42 mit einer farbfreundlichen bzw. oleophilen Oberfläche 45 (d. h. Randwinkel der Benetzung mit entsprechendem Fluid, insbesondere der Farbe, kleiner 90°), z. B. aus Gummi oder Kunststoff (z. B. einem Polyamidwerkstoff), ausgebildet ist. Damit sind in dieser Ausführung die Mantelflächen aller drei Walzen 41; 42; 43 des Feuchtwerks 09 mit einer farbfreundlichen bzw. oleophilen Oberfläche 45 (d. h. Randwinkel der Benetzung mit entsprechendem Fluid, insbesondere der Farbe, kleiner 90°) ausgebildet. Grundsätzlich kann diese mittlere Walze 42 als in axialer Richtung festgelegte, also nicht changierbare Walze 42 ausgebildet sein. Insbesondere für den Fall, dass die Walze 42 mit einer weichen Oberfläche, insbesondere aus Gummi, ausgebildet ist, kann ein rotatorischer Zwangsantrieb der Walzen 41; 42; 43 entfallen und diese sämtlich lediglich über Friktion vom Formzylinder 07 her - Walze 41 durch Formzylinder 07, Walze 42 durch Walze 41 und Walze 43 durch Walze 42 - angetrieben sein. Ein im Zusammenhang mit Fig. 26 bis 30 vorgesehener Zwangsantrieb über einen eigenen Antriebsmotor 132 oder eine Antriebsverbindung 141 entfällt in dieser Ausführung vollständig. Keiner der Walzen 41; 42; 43 weist zusätzlich zur Friktion einen zusätzlichen rotatorischen Zwangsantrieb auf. Ist die Walze 42 als changierbare Walze 42 ausgebildet, so kann für die erzwungene Changierbewegung entweder eigens ein motorischer Changierantrieb oder aber ein die Rotationsbewegung in eine Axialbewegung umformendes Getriebe erfolgen.

In einer Variante der Ausführung nach Fig. 11 a) unter Berücksichtigung der strichlierten Kreislinie weist die mittlere Walze 42 der drei Walzen 41; 42; 43 des Feuchtwerkswalzenzuges eine farbfreundliche Ober- bzw. Mantelfläche 45 aus Kunststoff, z. B. einem Polyamidwerkstoff wie insbesondere Rilsan, auf. Hierbei kann es in einer Ausführung vorteilhaft sein, dass diese Walze 42 durch einen eigenen, von den Druckwerkszylindern 06; 07 mechanisch unabhängigen Antriebsmotor 132 oder aber eine Antriebsverbindung 141 vom Druckwerk 04 und/oder Farbwerk 08 her (siehe unten zu Fig. 26 bis 30) rotatorisch zwangsangetrieben ist. Ist die Walze 42 als changierbare Walze 42 ausgebildet, so kann für die erzwungene Changierbewegung wieder entweder eigens ein motorischer Changierantrieb oder aber ein die Rotationsbewegung in eine Axialbewegung umformendes Getriebe vorgesehen sein.

Unter einer "weichen" Oberfläche ist hier eine in radialer Richtung elastisch nachgiebige Oberfläche zu verstehen, d. h. mit einem Elastizitätsmodul in radialer Richtung von vorzugsweise höchstens 200 MPa, insbesondere kleiner oder gleich 100 MPa. Die das Feuchtmittel von der Feuchtmittelquelle 44 aufnehmende Walze 43 und/oder die im Walzenzug in Richtung zum Formzylinder 07 nachfolgend angeordnete Walze 42 weist vorzugsweise eine Mantelfläche mit einer Härte im Bereich zwischen 55° und 80° Shore A auf. Die das Feuchtmittel auf den Formzylinder 07 auftragende Walze 41 weist vorzugsweise eine Mantelfläche mit einer Härte im Bereich zwischen 25° und 35° Shore A auf.

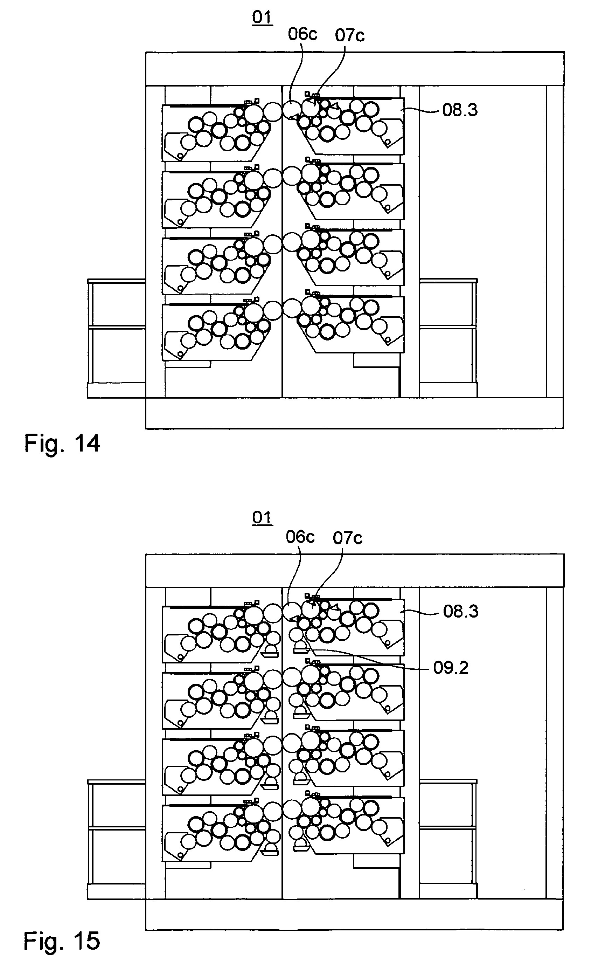

In Fig. 4 und Fig. 11 b) ist eine zweite Ausführung des Feuchtwerks 09 als Kontaktfeuchtwerk 09.2 (Filmfeuchtwerk, Heber-, Lappen- oder Bürstenfeuchtwerk) mit insgesamt drei Walzen 47; 48; 41 (28) zwischen Feuchtmittelvorlage 46 und Formzylinder 07 in Reihe. Vorzugsweise ist das Feuchtwerk 09.2 als sog. Filmfeuchtwerk 09.2 ausgeführt, wobei eine letzte, als Tauch- oder Duktorwalze 47 ausgeführte Walze 47 in die Feuchtmittelvorlage 46, z. B. Feuchtmittelkasten 46, eintaucht und aufgenommenes Feuchtmittel über eine Walze 48, z. B. einen changierenden Reibzylinder 48, insbesondere mit glatter und harter Oberfläche (z. B. Chrom), an mindestens eine Auftragwalze 41 mit weicher Oberfläche überträgt. Die mindestens eine Auftragwalze 41 ist lediglich strichliert dargestellt, da sie entweder eine lediglich dem Feuchtwerk 09 zugeordnete (nicht dargestellt in Fig. 14), oder wie in Fig. 14 dargestellt eine gleichzeitig dem Farb- und Feuchtwerk 08; 09 zugeordnete, und z. B. wahlweise lediglich Feuchtmittel oder Feuchtmittel und Farbe führende, gemeinsame Auftragwalze 28 (41) sein kann. Ist das Feuchtwerk 09.2 (Fig. 11b)) wie dargestellt insgesamt dreiwalzig ausgeführt, so ist die Tauchwalze 47 vorzugsweise mit weicher Oberfläche ausgeführt. Bei einem alternativen vierwalzigen Kontaktfeuchtwerk 09.2 schließt sich an die weiche Walze 47 eine nicht dargestellte vierte Walze mit z. B. harter Oberfläche an, welche anstelle der Walze 47 in den Feuchtmittelkasten 46 eintaucht. Vorzugsweise ist zumindest die Tauchwalze 47 durch einen eigenen, von den Zylindern 06; 07 und den übrigen Farbwerkswalzen unabhängigen Antriebsmotor rotatorisch angetrieben, wobei die Walze 41 über Friktion angetrieben ist. In einer vorteilhaften Variante kann auch für den Reibzylinder 48 ein eigener rotatorischer Antriebsmotor vorgesehen sein. Die Changierbewegung des Reibzylinders 48 kann durch ein eigenes Antriebsmittel, oder wie hier mit vermindertem Aufwand vorgesehen, durch ein dessen Rotationsbewegung in Axialbewegung umformendes Getriebe erfolgen.

Das Feuchtwerk 09 kann entweder als eigenes Modul (d. h. weitgehend in einem eigenen Gestell vormontierbar) ausgeführt sein oder aber in einer vorteilhaften Ausbildung für den Fall des Nassoffset in das Modul "Farbwerk 08" mit integriert sein.

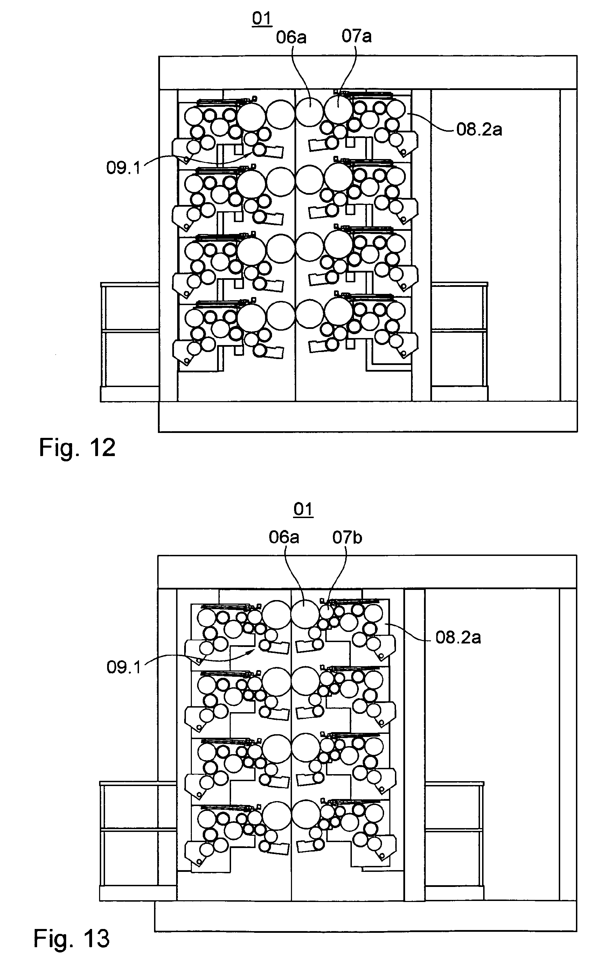

Fig. 12 bzw. Fig. 13 zeigen nun die Druckeinheit 01, z. B. für den Zeitungsdruck, in einer achten und neunten Ausführung bestückt mit einzügigen Walzenfarbwerken 08.2a; 08.2b - einmal mit doppelt großen Formzylindern 07a (Fig. 12) und im zweiten Fall mit einfach großen Formzylindern 07b (Fig. 13), im Gegensatz zu Fig. 8 und 9 jedoch im Nassoffset mit der Anordnung von Feuchtwerken 09, hier z. B. dreiwalzigen Sprühfeuchtwerken 09.1.

Die oben genannten doppeltgroßen, einen Umfang von zwei als Zeitungsseiten ausgeführte Druckseiten aufweisenden Formzylinder 07a weisen vorzugsweise in Umfangsrichtung hintereinander zwei Kanäle zur Fixierung zweier in Umfangsrichtung hintereinander angeordneter, jeweils eindruckseitenlanger Druckformen auf. Die beiden in vorteilhafter Ausführung in axialer Richtung durchgehenden Kanäle bzw. die beiden Gruppen von jeweils mehreren in axialer Richtung nebeneinander angeordneten Kanalabschnitten und/oder die entsprechenden Klemmvorrichtungen sind dergestalt ausgeführt, dass in axialer Richtung nebeneinander mindestens zwei einzelne, jeweils ein- oder zweizeitungsseitenbreite Druckformen fixierbar sind. Der Formzylinder 07a ist in einer Betriebssituation dann mit zwei jeweils druckseitenlangen Druckformen in Umfangsrichtung und mehreren, z. B. zwei, drei, vier oder gar sechs, jeweils druckseitenbreiten Druckformen in Längsrichtung ausgeführt. Es können auch eindruckseitenbreite und zwei- oder gar dreidurckseitenbreite Druckformen gemischt nebeneinander oder nur mehrere zwei- oder gar dreidruckseitenbreite Druckformen nebeneinander auf dem Formzylinder 07a angeordnet sein.

Die oben genannten einfachgroßen, einen Umfang von einer als Zeitungsseite ausgeführten Druckseite aufweisenden Formzylinder 07b weisen vorzugsweise in Umfangsrichtung betrachtet lediglich einen Kanal zur Fixierung der Enden einer eindruckseitenlangen Druckformen auf. Der in vorteilhafter Ausführung durchgehende Kanal bzw. eine Gruppe von mehreren in axialer Richtung nebeneinander angeordneter Kanalabschnitte und/oder entsprechende Klemmvorrichtungen des sind dergestalt ausgeführt, dass in axialer Richtung nebeneinander mindestens zwei einzelne, jeweils ein- oder zweizeitungsseitenbreite Druckformen fixierbar sind. Der Formzylinder 07b ist in einer Betriebssituation dann mit einer druckseitenlangen, insbesondere zeitungsseitenlangen Druckform in Umfangsrichtung und mehreren, z. B. zwei, drei, vier oder gar sechs, jeweils zumindest eindruckseitenbreiten, insbesondere zeitungsseitenbreiten Druckformen in Längsrichtung ausgeführt. Es können auch eindruckseitenbreite und zwei- oder gar dreidurckseitenbreite Druckformen gemischt nebeneinander oder nur mehrere zwei- oder gar dreidruckseitenbreite Druckformen nebeneinander auf dem Formzylinder 07b angeordnet sein.

In einer Weiterbildung ist die Druckeinheit 01 neben dem Zeitungsdruck auch für den Druck eines vom Zeitungsdruck abweichenden Formates und/oder einer vom Zeitungsdruck abweichenden Druckqualität. Dies schlägt sich beispielsweise in der Druckeinheit 01 bzw. den Druckwerken 04 durch besondere Ausführung des Farb-und/oder Feuchtwerks 08; 09, durch eine besondere Ausführung der Druckwerkszylinder 06; 07, durch besondere Ausgestaltung der Aufzüge (Druckformen, Gummitücher) auf den Zylindern 06; 07, durch eine u. U. erheblich abweichende Papierbahnstärke und/oder -qualität, und/oder durch eine dem Druckprozess in vorteilhafter Ausführung nachgeordnete Trockenstufe nieder.

D. h., zwischen dem Zeitungsdruck und einem höherwertigen Druck, z. B. üblicher weise mit Akzidenzdruck bezeichnet, sind z. T. erhebliche Unterschiede in der Ausführung und dem Aufbau der Druckwerke 04 feststellbar, so dass i.d.R.
Rollenrotationsdruckmaschinen für den Zeitungs- und den Akzidenzdruck, bzw. deren Druckeinheiten 01 in Bezug auf Seitengestelle 11; 12, Zylinderanordnung und/oder Farbwerksaufbau weitgehend unabhängig voneinander konstruiert und hergestellt werden.

Ein derartiges Druckwerk 04 weist dann Formzylinder 07c mit lediglich einem, über die Ballenlänge des Formzylinders 07c durchgehenden Kanal am Umfang auf und trägt eine einzige, um den vollen Umfang und die gesamte Ballenlänge reichende Druckform. Die nutzbare Ballenlänge entspricht beispielsweise vier, sechs oder gar acht stehenden Druckseiten, z. B. im DIN A4-Format (oder einer Anzahl von dieser Länge entsprechenden Seiten eines davon abweichenden Formates), in Querrichtung nebeneinander und zwei derartiger Druckseiten in Längsrichtung hintereinander. Entsprechend weist die vollumfängliche Druckform sämtliche Druckseiten auf. Auch der Übertragungszylinder 06c weist lediglich einen durchgehenden Kanal sowie lediglich einen einzigen vollumfänglichen Aufzug auf, z. B. ein Gummituch, insbesondere ein z. B. als Metalldrucktuch ausgeführtes mehrschichtiges Drucktuch, welches eine dimensionsstabile Trägerplatte mit einer elastischen Schicht aufweist. Ein Umfang des Formzylinders 07c, und damit eine maximale Drucklänge auf der Bahn 02, beläuft sich hierbei beispielsweise auf 520 bis 650 mm, insbesondere 545 bis 630 mm. Das selbe gilt vorzugsweise auch für den korrespondierenden Übertragungszylinder 06c.

Fig. 14 bzw. Fig. 15 zeigen nun die Druckeinheit 01, z. B. für den Akzidenzdruck, in einer zehnten und elften Ausführung bestückt mit Formzylindern 07c für den Akzidenzdruck und zweizügigen Walzenfarbwerken 08.3 - einmal wasserlos und im zweiten Fall im Nassoffset mit der Anordnung von Feuchtwerken 09.2, hier z. B. mit dreiwalzigen Filmwerken 09.1 wobei deren Auftragwalze 41 gleichzeitig, z. B. als vierte Auftragwalze 28, dem Farbwerk 08.3 zugeordnet ist.

In einer nicht eigens figürlich dargestellten, jedoch durch Klammerausdrücke in Fig. 2 angedeuteten, zwölften Ausführung weist die Druckeinheit 01 wie in Fig. 2 Kurzfarbwerke 08.1 oder einzügige Farbwerke 08.2 auf, welche jedoch mit Zylindern 06c; 07c des Akzidenzdruckes zusammen wirken.

Der modulare Aufbau der Farbwerke 08 bzw. der Druckeinheit 01 im Hinblick auf die Farbwerke 08 ermöglicht, dass der Aufbau der Farbwerke 08.x eines bestimmten Typs bis auf die formatabhängige (doppelt, einfach, Akzidenz etc.) Anordnung/Ausführung der Auftragwalzen 28 gleich sein kann, dass die Reibzylinderdurchmesser zumindest eines Typs (mit Ausnahme von Farbwerk 08.4) bei vielen oder gar allen Formaten gleich sein. Beim separaten rotatorischen Antrieb des Farbwerks 08 entfällt eine Kopplung zu den Zylindern 06; 07 hin, was die Modularität weiter begünstigt. Antrieb und Getriebe können formatunabhängig ausgestaltet sein.

Die die Module aufweisenden Druckeinheiten 01 der Figuren 2, 7 bis 10 sowie 12 bis 15 können vorteilhaft wie durch die Trennlinie angedeutet im Sinne der Fig. 2 und 3 mit geteilten bzw. teilbaren Gestellwänden 11; 12 oder aber grundsätzlich auch mit üblichen, geschlossenen Seitengestellen 11; 12 ausgeführt sein.

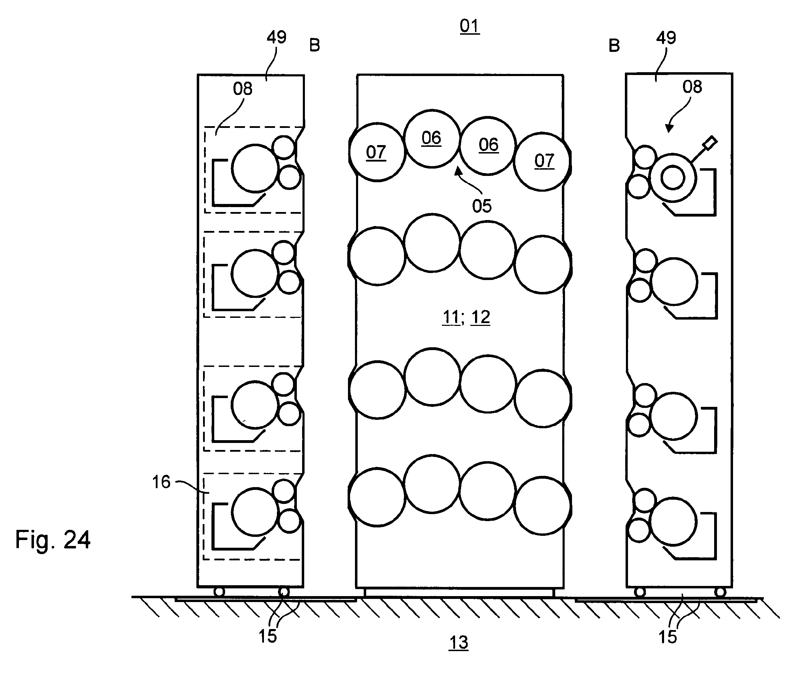

In einer Variante (Fig. 24) einer teilbaren Druckeinheit 01 ist das Seitengestell 11; 12 nicht in der Weise teilbar, dass die Druckwerkszylinder 06; 07 an der Druckstelle 05 getrennt werden, sondern es sind die Druckwerkszylinder 06; 07 in bzw. an einem gemeinsamen Seitengestell 11; 12 nichtteilbar gelagert, während zu beiden Seiten die Farbwerke 08 aufnehmende Wandabschnitte 49 in eine Betriebsstellung A (nicht dargestellt) oder eine Wartungsstellung B (dargestellt) verbringbar sind. Die Teilung erfolgt hier zwischen Formzylinder 07 und Farb- sowie ggf. Feuchtwerk 08, 09. Die hier nur schematisch dargestellten Farbwerke 08 (und ggf. vorhandenen Feuchtwerke 09) können im Sinne der vorbeschriebenen modularen Bauweise als Module in den Wandabschnitten 49 aufgenommen sein (Fig. 24, linke Seite). Alternativ hierzu ist, wie in Fig. 24, rechts dargestellt, die aus den Farbwerken 08 und den Wandabschnitten 49 bestehende Baueinheit insgesamt als vormontierbares Modul aufgeführt. Je nach Anforderung des Kunden sind dann die Mittelteile (Seitengestell 11; 12) mit entsprechender Zylinderbestückung und die die Farbwerke 08 beinhaltende Seitenteile kombinierbar.

Als weiteres Modul ist wie in Fig. 4 (und in den Druckeinheiten 01 der Figuren 2, 3, 7 bis 10 sowie 12 bis 15) bereits angedeutet, eine Handhabungsvorrichtung 24 zur Unterstützung des Druckformwechsels vorsehbar. In bevorzugter Ausführung ist die Handhabungsvorrichtung 24 als zumindest teilautomatischer oder gar vollautomatischer Druckformwechsler 24 ausgeführt.

Wie in Fig. 16 dargestellt, weist die Handhabungsvorrichtung 24 zwischen einer unteren, vorzugsweise flächig oder streben- bzw. rahmenartig ausgebildeten Führung 51 und einer oberen Führung 52 einen schachtartigen Aufnahmebereich 53 zur Aufnahme von Druckformen. Der Aufnahmebereich 53 ist in einer Grundausstattung vorzugsweise im Sinne der Modularität in der Weise ausgestaltet, dass vom Raum her grundsätzlich - zumindest bis auf ggf. optionale nichttragende Zusatzeinbauten - sowohl breite, über die Länge des Ballens reichende Druckformen als auch mehrerer ein- oder zweiseitenbreiten nebeneinander angeordneter Druckformen in diesem aufzunehmen sind. Nichttragende und/oder entfernbare Zusatzeinbauten könnten beispielsweise Seitenführungen für mittlere Druckformen im Fall von mehreren auf dem Formzylinder 07a; 07b nebeneinander anzuordnender Druckformen sein. Das selbe hinsichtlich des Raumes gilt vorteilhaft auch für einen Vorlagebereich 54 für neu aufzuplattende Druckformen. Dieser kann durch die obere Führung 52 und ggf. durch eine Abdeckung 56 - flächig oder verstrebt - nach oben ebenfalls schachtartig begrenzt und ggf. gegen Verschmutzung abgedeckt sein. Die die neuen Druckformen stützende Führung 52 sollte vorzugsweise flächig oder zumindest derart verstrebt sein, dass die Druckform keine Durchbiegung erfährt. Vorzugsweise weist die Handhabungsvorrichtung 24 eine Seitenregistereinrichtung 57 auf, welche in einer Ausführung lediglich einen seitlichen Anschlag 58, z. B. Seitenanschläge 58 für eine einzige durchgehende Druckform, und in einer anderen Ausführung mehrere axial voneinander beabstandete Anschläge 58für mehrere nebeneinander anzuordnende Druckformen aufweist. Idealer Weise ist die Seitenregistereinrichtung 57 dergestalt, dass in einer Betriebsstellung eine Anzahl von n und in einer anderen Betriebsstellung eine Anzahl von m Seitenanschlägen 58 (mit n > m und m = 1, 2, 3 ...) in den Zuführweg der Druckform(en) bringbar sind. In anderer Ausführung sind in verschiedenen Betriebsstellungen zwar die selbe Anzahl n von Seitenanschlägen 58 in den Zuführweg bringbar, diese sind jedoch in zur ersten Situation verschiedener Weise voneinander beabstandet, d. h. für eine andere Druckformbreite bzw. Druckseitenbreite vorgesehen. In einer dritten Ausgestaltung ist in einer Betriebssituation generell lediglich ein Seitenanschlag 58 (für die Akzidenzdruckform) und in anderer Betriebsweise eine definierte Anzahl n in den Zugführweg bringbar.

Der den Aufnahmebereich 53, den Vorlagebereich 54 und die Seitenregistereinrichtung 57 aufweisende Teil der Handhabungsvorrichtung 24 ist vorzugsweise als vormontiertes Modul bzw. Bauteil, im folgenden mit Magazin 59 bezeichnet, ausgeführt sein, welches insgesamt je nach Ausstattungsanforderung an die Druckmaschine in die Druckeinheit 01 einsetzbar ist. Dieses Magazin 59 weist vorzugsweise einen nicht dargestellten Antriebsmechanismus- z. B. einen oder mehrere Schlitten oder Bandförderer - und eine entsprechende Steuerung zur Förderung der ab- und aufzuplattenden Druckformen auf und ermöglicht einen vollautomatischen Druckformwechsel. Grundsätzlich kann dieses Magazin 59 auch Mittel zum Andrücken und/oder Führen der Druckformen während des Wechsels - z. B. anstellbare Rollen - aufweisen. Vorzugsweise ist die Handhabungsvorrichtung 24 jedoch modular ausgeführt, wobei einerseits das einen vollautomatischen Druckformwechsel ermöglichende Magazin 59 und andererseits eine Andrückvorrichtung 61 mit - z. B. über druckmittelbetätigbare Mittel - anstellbaren Rollen 62 vorgesehen ist. Die Andrückvorrichtung 61 alleine unterstützt sowohl einen vollautomatischen Druckformwechsel mit Magazin 59 als auch einen halbautomatischen (teilmanuellen) Druckformwechsel ohne Magazin 59 und ist im Gegensatz zum Magazin 59 vorzugsweise grundsätzlich in der Druckeinheit 01 vorgesehen.

Zunächst einmal unabhängig vom beschriebenen modularen Aufbau und/oder der Teilbarkeit des Seitengestells 11; 12 ist es in einer vorteilhaften Ausführung der Druckeinheit 01 vorgesehen, die Zylinder 06; 07 in Lagereinheiten 14 an den Seitengestellen 11; 12 rotierbar zu lagern, welche die Flucht der Seitengestelle 11; 12 nicht durchdringen und/oder die Zylinder 06; 07 mit ihrem Ballen 67; 68 einschließlich ihrer Zapfen 63; 64 eine Länge L06; L07 aufweisen, welche kleiner oder gleich einer lichten Weite L zwischen den die Druckwerkszylinder 06; 07 zu beiden Stirnseiten tragenden Seitengestellen 11; 12 (Fig. 17). Bei den die Druckwerkszylinder 06; 07 zu beiden Stirnseiten tragenden Seitengestellen 11; 12 handelt es sich vorzugsweise nicht um seitlich derart offene Seitengestelle, sodass die Zylinder 06; 07 axial entnehmbar wären, sondern um Seitengestelle 11; 12 welche in axialer Richtung eine zumindest teilweise Überdeckung mit der Stirnseite der montierten Zylinder 06; 07 aufweisen, d. h. der Zylinder 06; 07, insbesondere dessen Lager (s. u.), ist stirnseitig durch die beiden Seitengestelle 11; 12 zumindest teilweise eingefasst.

Vorzugsweise weisen alle vier Druckwerkszylinder 06; 07 (mindestens jedoch drei) eine eigene Lagereinheit 14 auf, in welcher der An-/Abstellmechanismus bereits integriert ist. Es können auch für drei der vier Zylinder 06; 07 den An-/Abstellmechanismus aufweisende Lagereinheiten 14 und für den vierten Lagereinheiten 14 ohne An-/Abstellmechanismus vorgesehen sein.

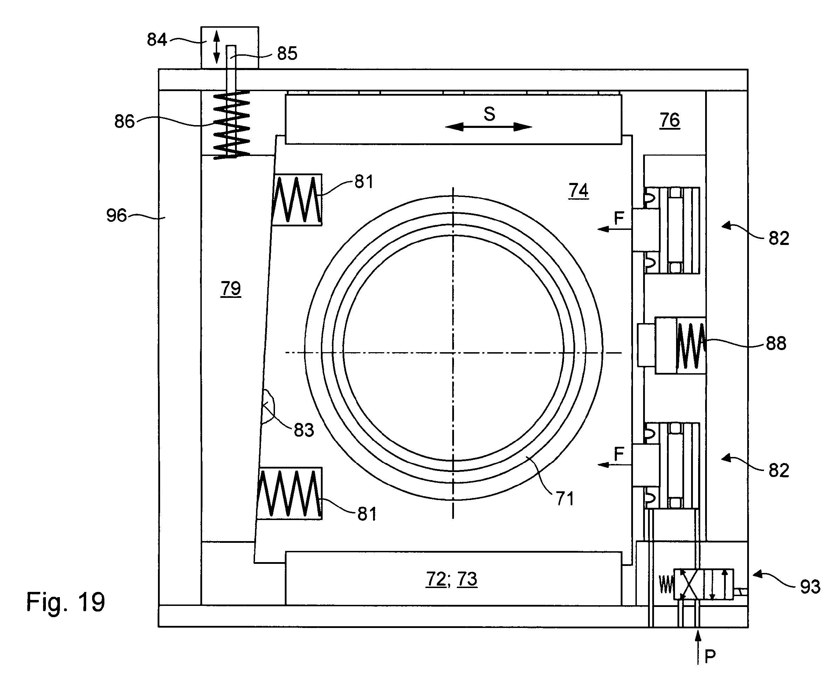

Fig. 18 und 19 zeigen eine bevorzugt auf linearen Stellwegen basierende Lagereinheit 14 im schematischen Längs- und Querschnitt. Die den An-/Abstellmechanismus integrierende Lagereinheit 14 weist neben einem Lager 71, z. B. Radiallager 71, beispielsweise ein Zylinderrollenlager 71, zur rotatorischen Lagerung des Zylinders 06; 07 Lagermittel 72; 73 für eine radiale Bewegung des Zylinders 06; 07 - zum Druck-An- bzw. Druck-Abstellen - auf. Hierzu weist die Lagereinheit 14 (nach Montage der Lagereinheit 14 gestellfeste) trägerfeste Lagerelemente 72 als auch die gegen diese bewegbaren Lagerelemente 73 auf. Die trägerfesten und bewegbaren Lagerelemente 72; 73 sind als zusammenwirkende Linearelemente 72; 73 und gemeinsam mit entsprechenden Gleitflächen oder dazwischenliegenden Wälzelementen insgesamt als Linearlager 70 ausgebildet. Die Linearelemente 72; 73 nehmen paarweise einen das Radiallager 71 aufnehmenden Lagerblock 74, z. B. Schlitten 74 zwischen sich auf. Lagerblock 74 und die bewegbaren Lagerelemente 73 können auch einteilig ausgeführt sein. Die trägerfesten Lagerelemente 72 sind an einem Träger 76 angeordnet, welcher insgesamt mit dem Seitengestell 11; 12 verbunden wird bzw. ist. Der Träger 76 ist beispielsweise als Trägerplatte 76 ausgeführt, welche beispielsweise zumindest auf einer Antriebsseite eine Ausnehmung 77 für den Durchgriff einer Welle 78, z. B. Antriebswelle 78 eines in Fig. 19 nicht dargestellten Zylinderzapfen 63; 64 aufweist. Auch die Gestellwand 11; 12 auf der Antriebsseite weist vorzugsweise eine Aussparung bzw. einen Durchbruch für eine Antriebswelle 78 auf. Auf der der Antriebsseite gegenüberliegenden Stirnseite muss nicht zwangsläufig eine Ausnehmung 77 oder eine Aussparung im Seitengestell 12; 11 vorgesehen sein.

Vorzugsweise ist eine Länge des Linearlagers 70, insbesondere zumindest eine Länge des im montierten Zustand gestellfesten Lagermittels 72 des Linearlagers 70, in Stellrichtung S betrachtet kleiner als ein Durchmesser des zugeordneten Druckwerkszylinders 06; 07.

Die Ankopplung des Zylinders 06; 07 bzw. des Lagerblockes 74 auf einer Antriebsseite der Druckeinheit 01 an einen Antrieb, z. B. zu einem Antriebsmotor 121 und/oder einem Antriebszug 122 oder Getriebe 150 wie zu Fig. 26 bis 30 erläutert, erfolgt wie in Fig. 18 beispielsweise dargestellt über die Welle 78, welche an ihrem zylindernahen Ende ein Ende des Zapfens 63; 64 umfasst und beispielsweise über eine Klemmeinrichtung 66 mit dem Zapfen 63; 64 drehsteif verbunden ist. Die Klemmeinrichtung 66 ist hier beispielsweise als z. T. geschlitztes Hohlwellenende ausgebildet, welches das Zapfenende (Zapfen 63; 64) umfasst und mittels einer Schraubverbindung in der Weise zusammen zu ziehen ist, dass eine reibschlüssige drehfeste Verbindung zwischen Zapfenende (Zapfen 63; 64) und Hohlwelleninnenfläche herstellbar ist. Die Ankopplung kann auch in anderer Weise, z. B. in Umfangsrichtung einen Formschluss aufweisend, ausgeführt sein. Die Welle 78 ist durch eine Aussparung im Seitengestell 11; 12 geführt, welche ausreichend groß für die Bewegung der Welle 78 zusammen mit dem Lagerblock 74 bemessen ist und welche z. B. in der Art eines Langlochs ausgebildet ist. Als Schmutzschutz kann eine Abdeckung 69 mit einem das Langloch überdeckenden Kragen vorgesehen sein, welcher z. B. mit dem Lagerblock 74, nicht jedoch mit der Welle 78 verbunden ist.

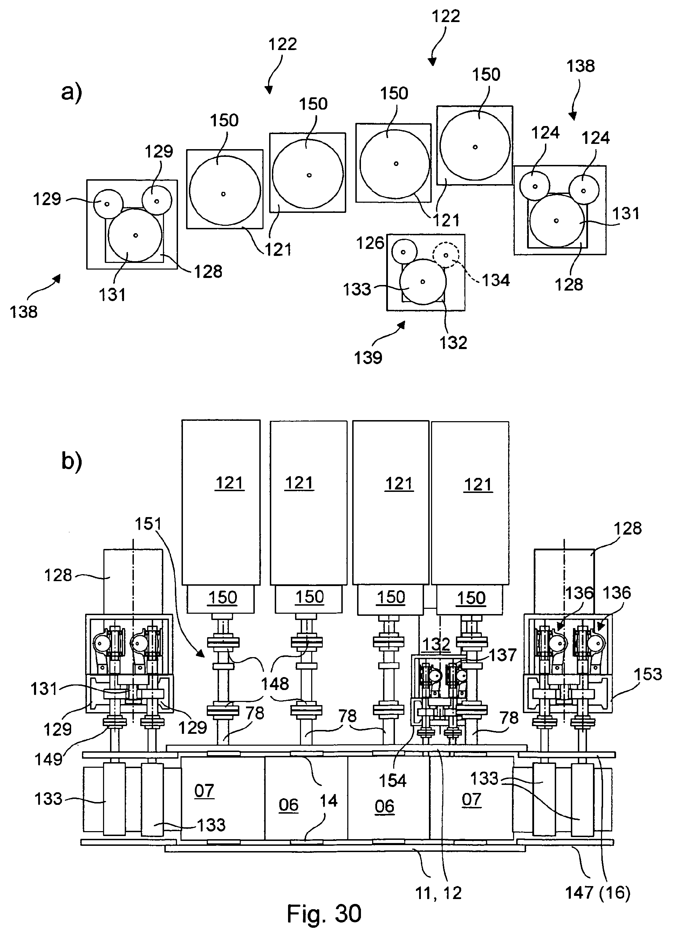

An das zylinderferne Ende der Welle 78 ist wie in Fig. 18 dargestellt eine von ggf. mehreren in Serie angeordneten Kupplung 148, insbesondere Lamellenkupplung 148, (siehe zu Fig. 26 bis 29) durch eine drehfeste Verbindung 75, z. B. ein Spannelement 75, koppelbar. In einer anderen Ausführung ist wie in der Weiterbildung zu Fig. 30 erläutert, direkt das Getriebe 150 mit Antriebsmotor 121 ohne winkel- und/oder versatzausgleichende Kupplung 148 an die Welle 78 koppelbar. In dieser Ausführung ist der Antriebsmotor 121 nicht gestellfest, sondern zylinderfest angeordnet und wird mit dem Zylinder 06; 07 mitbewegt.

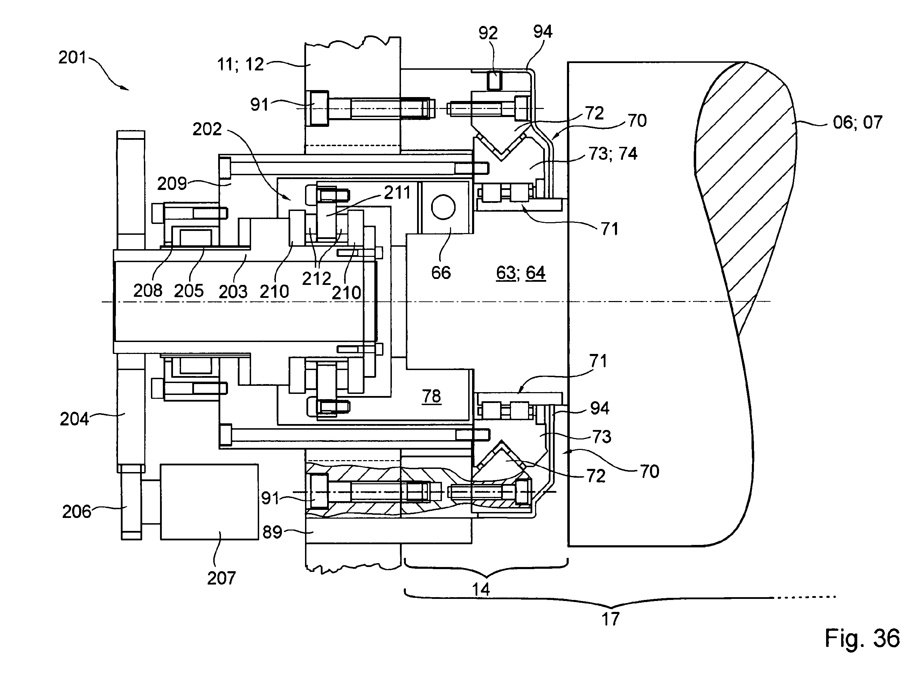

Auf einer der Antriebsseite gegenüberliegenden Seite des Zylinders 06; 07, insbesondere des als Formzylinder 07 ausgeführten Zylinders 07, ist der Zapfen 64 vorzugsweise mit einer Vorrichtung zum axialen bewegen des Zylinders 07, d. h. mit einem Seitenregisterantrieb 201, gekoppelt (Fig. 36). Die beispielsweise in der Art der Fig. 18 mit dem Zapfen 63; 64 verbundene Welle 78, ist über ein Lager 202, z. B. Axiallager 202 mit einem Axialantrieb 203, 204, 206, 207 verbunden. Der Axialantrieb umfasst eine Spindel 203, insbesondere mit zumindest einem Gewindeabschnitt 205, ein mit der Spindel 203 drehfest verbundenes Stirnrad 204, ein Ritzel 206 sowie einen das Ritzel 206 antreibenden Motor 207. Der Gewindeabschnitt 205 wirkt mit einem lagerblockfesten Innengewinde 208, z. B. einem Innengewinde 208 eines mit dem Lagerblock 74 verbundenen Topfes 209, zusammen und bewirkt beim Verdrehen der Spindel 203 eine Axialbewegung derselben samt Welle 78 (über das Axiallager 202) und Zapfen 63; 64. Das Axiallager 202 erlaubt eine relative Rotation zwischen Welle 78 und Spindel 203, ist jedoch bezüglich einer Axialrichtung des Zylinders 07 druck- und zugsteif ausgebildet. Dies erfolgt über eine an der Welle 78 angeordnete Scheibe 211, welche, beispielsweise über Wälzkörper 212 beidseitig gelagert, durch spindelfeste Anschläge 210 in beide Richtungen wegbegrenzt ist. Eine Verstellung des Seitenregisters erfolgt nun durch den Motor 207 über eine nicht dargestellte Steuereinrichtung. Hierbei kann der Motor 207 entweder selbst über eine - z.B. zuvor entsprechend geeichte - motorinterne Positionsrückmeldung verfügen, oder aber es erfolgt eine Positionsrückmeldung an die Steuerung über einen nicht dargestellten Sensor, z. B. ein entsprechend geeichtes Drehpotentiomerter, welches an ein drehendes Bauteil des Axialantriebes gekoppelt ist.

Die Ausbildung der Linearlager 70 in der Weise, dass die zusammen wirkenden Lagerelemente 72; 73 beide an der Baueinheit Lagereinheit 14 - und nicht ein Teil am Seitengestell 11; 12 der Druckeinheit 01 - vorgesehen sind, ermöglicht eine Vormontage und Vorjustierung bzw. Einstellung der Lagerspannung. Die vorteilhafte Anordnung der beiden den Lagerblock 74 umgreifenden Linearlager 70 ermöglicht ein spielfreies Einstellen, da sich die beiden Linearlager 70 in der Weise gegenüberliegen, dass die Lagervorspannung und die Lagerkräfte eine wesentliche Komponente in einer Richtung senkrecht zur Rotationsachse des Zylinders 06; 07 erfahren bzw. aufnehmen. Die Linearlager 70 sind somit in derjenigen Richtung einstellbar, auf welche es beim spielfreien Stellen der Zylinder 06; 07 auch ankommt.

Da der Zylinder 06; 07 samt Zapfen 63; 64 und Lagereinheit 14 die Gestellwand 11; 12 nicht durchdringen, sind diese bereits vormontiert und die Lager (Radiallager 71 als auch Linearlager 70) voreingestellt bzw. korrekt vorgespannt als Modul Zylindereinheit 17 in die Druckeinheit 01 einsetzbar. Unter dem "Nicht-Durchdringen" und der obigen Definition in Bezug auf die lichte Weite L soll vorteilhaft im weiteren Sinne verstanden werden, dass zumindest im Bereich der vorgesehenen Endlage der Zylinder 06; 07 und zumindest auf einem durchgängigen Weg von einer Gestellkante bis zum Ort der Endlage ein derartiges "Nicht-Durchdringen" vorliegt, so dass die Zylindereinheit 17 von einer offenen, zwischen den beiden stirnseitigen Seitengestellen 11; 12 liegenden Seite her ohne Verkippen, d. h. in einer Lage mit zur Gestellebene senkrechten Rotationsachse an die Endlage herangeführt und dort zwischen den beiden Gestellinnenwänden angeordnet werden, insbesondere an den Gestellinnenwänden befestigt werden, kann. Dies ist z. B. auch dann möglich, wenn auf der Innenseite zwar Angussteile oder andere Erhebungen vorgesehen sind, ein genannter durchgängiger Montageweg jedoch vorgesehen ist.

Die Lagereinheiten 14 sind in der Weise an den Innenwänden der Seitengestellt 11; 12 angeordnet, dass die Zylinder 06; 07, insbesondere deren Lagereinheiten 14 auf zylinderferner Seite durch das Seitengestell 11; 12 gestützt sind, was statische und Montagevorteile birgt.

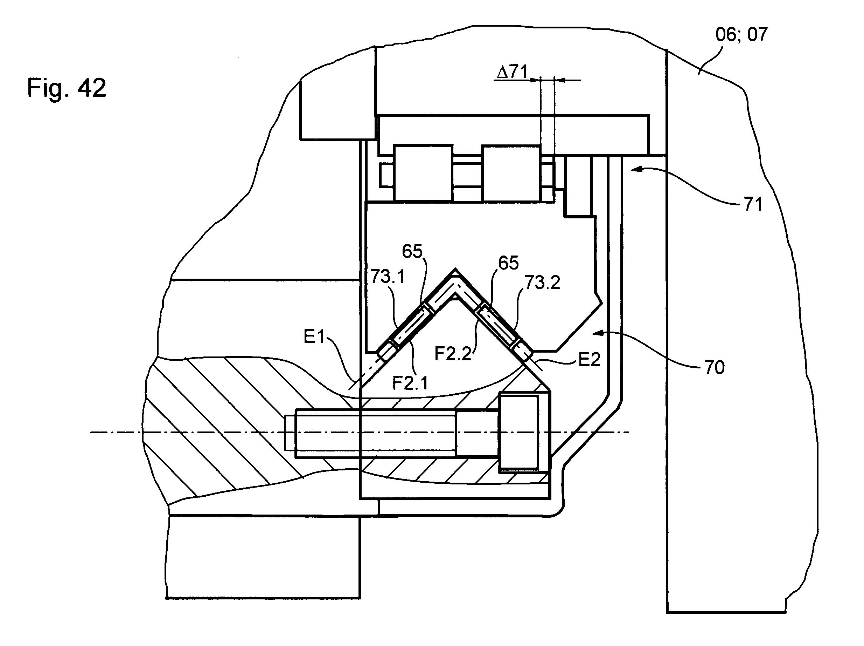

Die in Fig. 18 und 19 erkennbaren Linearlager 70 (72, 73) weisen somit jeweils Paarungen korrespondierender, zusammen wirkender Lagermittel 72 und 73 bzw. deren Führungs- oder Wirkflächenflächen, als Gleitflächen (nicht dargestellt) ausgebildet oder mit dazwischen angeordneten Wälzkörpern 65, auf. Wie in Fig. 42 dargestellt, ist in bevorzugter Ausführung zumindest eines der beiden, vorteilhafte beide Linearlager 70 einer Lagereinheit 14 derart ausgeführt, dass die beiden korrespondierenden Lagermittel 72 und 73 jeweils mindestens zwei Führungsflächen 72.1; 72.2; 73.1; 73.2 aufweisen, welche in zwei zueinander geneigten Ebenen liegen. Die beiden Führungsflächen 72.1; 72.2; 73.1; 73.2 (bzw. deren Ebenen E1; E2) des selben Lagermittels 72; 73 sind z. B. v-förmig zueinander, z. B. mit einem Zwischenwinkel zwischen 30 bis 60°, insbesondere zwischen 40 und 50°, geneigt. Die beiden Führungsflächen 73.1; 73.2; 72.1; 72.2 des zusammen wirkenden Lagermittels 73; 72 sind hierzu formkomplementär geneigt. Wenigstens eine der beiden Paarungen zusammenwirkender Führungsflächen 72.1; 72.2; 73.1; 73.2 liegt parallel zu einer Ebene E1, welche eine Komponente ungleich Null in radialer Richtung der Zylinderachse aufweist und dadurch den Bewegungsfreiheitgrad in eine rein axialer Richtung des Zylinders unterbindet. Vorzugsweise liegen beide Paarungen zu Ebenen E1; E2, welche beide eine Komponente ungleich Null in radialer Richtung der Zylinderachse, jedoch in umgekehrter Neigung gegen die Zylinderachse aufweisen und dadurch den Bewegungsfreiheitgrad in beide axiale Richtungen des Zylinders unterbinden. Eine Schnittlinie der beiden Ebenen E1; E2 verläuft parallel zur Stellrichtung S.

Ist, wie in Fig. 18 zu erkennen, der Lagerblock 74 zwischen den beiden, je zwei Paarungen zusammenwirkender Führungsflächen 72.1, 73.1 und 72.2; 73.2 aufweisenden Linearlagern 70 eingefasst, insbesondere mit einer Vorspannung vorgespannt, so weist der Lagerblock 74 nur noch einen einzigen Bewegungsfreiheitsgrad entlang der Stellrichtung S auf.

Die geneigten Wirk- bzw. Führungsflächen 72.1; 72.2; 73.1; 73.2 sind derart angeordnet, dass sie einer Relativbewegung der Lagerteile des Linearlagers 70 in axialer Richtung des Zylinders 06; 07 entgegenwirken, d. h. das Lager ist in axialer Richtung "abgebunden".

Vorzugsweise weisen die Linearlager 70 beider einem Zylinder 06; 07 stirnseitig zugeordneter Lagereinheiten 14 zwei derart zueinander angeordnete Paare zusammenwirkender Führungsflächen 72.1; 72.2; 73.1; 73.2 auf. In diesem Fall weist jedoch vorteilhafter Weise zumindest eines der beiden Radiallager 71 der beiden Lagereinheiten 14 ein geringfügiges Lagerspiel Δ71 in axialer Richtung auf.

In Fig. 18 und 42 weisen die Führungsflächen 72.1; 72.2 der gestellfesten Lagermittel 72 der Linearführung 70 in den dem Zapfen 63; 64 zugewandten Halbraum. Die gestellfesten Lagermittel 72 umgreifen hier den zwischen ihnen angeordnete Lagerblock 74. Die gestellfesten Führungsflächen 72.1; 72.2 der beiden Linearlager 70 umgreifen somit teilweise die Führungsflächen 73.1; 73.2 des Lagerblockes 74 hinsichtlich einer axialen Richtung des Zylinders 06; 07.

Zur korrekten Platzierung der Lagereinheiten 14, bzw. Zylindereinheiten 17 samt Lagereinheit 14, können Montagehilfen 89, z. B. Passstifte 89 im Seitengestell 11; 12 vorgesehen sein, an welchen die Lagereinheit 14 der vollständig montierten Zylindereinheit 17 ausgerichtet wird, bevor sie durch lösbare Haltemittel 91, z. B. Schrauben 91, oder gar stoffschlüssig durch Schweißen mit dem Seitengestell 11; 12 verbunden werden. Für die bereits vor dem Einsetzten in die Druckeinheit 01 vorzunehmende und/oder nach dem Einsetzten nachzujustierende Einstellung der Lagervorspannung in den Linearlagern 70 können entsprechende Mittel 92, z. B. Spannschrauben 92 vorgesehen sein (Fig. 18). Vorzugsweise ist die Lagereinheit 14 - zumindest zur Zylinderseite hin - durch eine Abdeckung 94 weitgehend gegen Verschmutzung geschützt bzw. gar gekapselt als Baueinheit ausgeführt.

In Fig. 18 ist schematisch der Zylinder 06; 07 mit Zapfen 63; 64 und einer vormontierten Lagereinheit 14 gekennzeichnet. Diese Baugruppe kann somit vormontiert zwischen die Seitengestelle 11; 12 der Druckeinheit 01 montagefreundlich eingesetzt und an hierzu vorgesehenen Stellen befestigt werden. Vorzugsweise für eine module Bauweise sind die Lagereinheiten 14 für Form- und Übertragungszylinder 07; 06 - ggf. bis auf die erlaubte betriebsmäßige Größe des Stellweges - baugleich ausgeführt. Durch die vormontierbare Ausführung können die wirksame Innenfläche des Radiallager 71 und die äußere wirksame Mantelfläche des Zapfens 63; 64 zylindrisch anstelle von konisch ausgeführt sein, da sowohl die Montage der Lagereinheit 14 auf dem Zapfen 63; 64 als auch die Einstellung des Lagerspiels außerhalb der Druckeinheit 01 erfolgen kann. Die Lagereinheit 14 kann beispielsweise aufgeschrumpft werden.

Die als ganzes montierbare Baueinheit (Lagereinheit 14) ist vorteilhaft in der Art eines ggf. zum Teil offenen Gehäuses aus z. B. dem Träger 76, und/oder z. B. einem Rahmen (in Fig. 19 ohne Bezugszeichen z. B. die vier die Lagereinheit 14 zu allen vier Seiten hin nach außen begrenzenden Platten) und/oder z. B. der Abdeckung 94 (Fig. 18). Innerhalb dieses Gehäuses bzw. dieses Rahmens sind der das Radiallager 71 aufweisende Lagerblock 74, die Linearführungen 70 sowie in vorteilhafter Ausführung z. B. der Aktor 82 bzw. die Aktoren 82 untergebracht.

Die gestellfesten Lagerelemente 72 sind im wesentlichen parallel zueinander angeordnet und definieren eine Stellrichtung (Fig. 19).

Ein Druck-An-Stellen erfolgt durch Bewegen des Lagerblocks 74 in Richtung Druckstelle mittels einer durch wenigstens einen Aktor 82 auf den Lagerblock 74 aufgebrachten Kraft F, insbesondere durch einen kraftgesteuerten bzw. über eine Kraft definierten Aktor 82, mittels welchem zur Anstellung eine definierte bzw. definierbare Kraft F in Druck-An-Richtung auf den Lagerblock 74 bringbar ist (Fig. 19). Die für die Farbübertragung und damit die Druckqualität u.a. entscheidende Linienkraft in den Nippstellen ist daher nicht durch einen Stellweg, sondern durch das Kräftegleichgewicht zwischen der Kraft F und der zwischen den Zylindern 06; 07 resultierenden Linienkraft F_{L} und das resultierende Gleichgewicht definiert. In einer ersten, nicht eigens dargestellten Ausführung werden Zylinder 06; 07 paarweise aneinander angestellt, indem der Lagerblock 74 mit der entsprechend eingestellten Kraft F über den/die Aktror(en) 82 beaufschlagt wird. Sind mehrere (z. B. drei oder vier) einander in direkter Folge benachbarte jeweils paarweise zusammenwirkende Zylinder 06; 07 ohne eine Möglichkeit zur Fixierung oder Begrenzung des Stellweges S mit einem rein kraftabhängigen Stellmechanismus ausgeführt, so lässt sich zwar ein bereits bzgl. der erforderlichen Drücke (Linienkräfte) eingestelltes System ab- und nachfolgend wieder korrekt anstellen, eine Grundeinstellung vorzunehmen ist aufgrund der sich z. T. überlagernden Reaktionen nur schwer möglich.

Zur Grundeinstellung eines Systems (mit entsprechenden Aufzügen etc.) ist es daher in einer vorteilhaften Ausführung vorgesehen, dass wenigstens die beiden mittleren der vier Zylinder 06 - oder anders ausgedrückt, zumindest sämtliche von den beiden äußeren Zylindern 07 verschiedenen Zylinder 06 wenigstens während eines Zeitraumes beim Einstellen in einer definierten Lage, vorteilhaft in der durch das Kräftegleichgewicht gefundenen Anstelllage, fixierbar bzw. zumindest wegbegrenzbar ist.

Besonders vorteilhaft ist eine Ausführung, wobei der Lagerblock 74 - auch während des Betriebes - zumindest in eine Richtung von der Druckstelle weg gegen eine Kraft, z. B. Federkraft, insbesondere eine definierbare Kraft, bewegbar gelagert ist. Damit wird - im Gegensatz zur reinen Wegbegrenzung - einerseits eine maximale Linienkraft beim zusammen wirken der Zylinder 06; 07 definiert, und andererseits ein Nachgeben, beispielsweise bei einem Bahnriss mit anschließendem Wickler am Zylinder 06; 07, ermöglicht.

Zu einer der Druckstelle 05 zugewandten Seite weist die Lagereinheit 14 - zumindest während des Einstellvorgangs - einen ortsveränderbaren Anschlag 79 auf, welcher den Stellweg zur Druckstelle 05 hin begrenzt. Der Anschlag 79 ist in der Weise ortsveränderbar, dass die als Anschlag wirksame Anschlagfläche 83 entlang der Stellrichtung zumindest in einem Bereich variierbar ist. Es ist somit in vorteilhafter Ausführung eine Justiervorrichtung (verstellbarer Anschlag 79) vorgesehen, mittels welcher die Position einer druckstellennahen Endlage des Lagerblockes 74 einstellbar ist.

Zur Wegbegrenzung/Justage dient z. B. ein unten beschriebener Keilantrieb. Das Stellen des Anschlages 79 kann grundsätzlich manuell oder über ein als Aktor (84, s. u.) ausgeführtes Stellmittel 84 erfolgen. Weiter ist in vorteilhafter Ausführung ein in Fig. 18 und 19 nicht dargestelltes Halte- oder Klemmmittel vorgesehen, mittels welchem sich der Anschlag 79 in der gewünschten Lage festlegen lässt. Weiter ist mindestens ein federnd wirkendes Element 81, z. B. Federelement 81, vorgesehen, welches auf den Lagerblock 74 eine Kraft F_{R} vom Anschlag 79 in eine Richtung von der weg aufbringt. D. h. das Federelement 81 bewirkt ein Druck-Ab-Stellen für den Fall, dass der Lagerblock 74 nicht in anderer Weise an der Bewegung gehindert wird. Ein Druck-An-Stellen erfolgt durch Bewegen des Lagerblocks 74 in Richtung Anschlag 79 durch wenigstens einen Aktor 82, insbesondere einen kraftgesteuerten Aktor 82, mittels welchem zur Anstellung wahlweise eine definierte bzw. definierbare Kraft F in Druck-An-Richtung auf den Lagerblock 74 bringbar ist. Ist diese Kraft F größer als die Rückstellkraft F_{R} der Federelemente 81, so erfolgt bei entsprechender räumlicher Ausbildung ein Anstellen des Zylinders 06; 07 an den benachbarten Zylinder 06; 07 und/oder ein Anstellen des Lagerblocks 74 an den Anschlag 79.

Im Idealfall ist die aufgebrachte Kraft F, die Rückstellkraft F_{R} und die Position des Anschlages 79 derart gewählt, dass zwischen Anschlag 79 und der Anschlagfläche des Lagerblockes 74 in Anstelllage keine wesentliche Kraft ΔF übertragen wird, dass beispielsweise gilt |ΔF|< 0,1*(F- F_{R}), insbesondere |ΔF|< 0,05*(F- F_{R}), idealerweise | ΔF| ≈ 0. In diesem Fall wird die Anstellkraft zwischen den Zylindern 06; 07 wesentlich über die durch den Aktor 82 anliegende Kraft F bestimmt. Die für die Farbübertragung und damit die Druckqualität u.a. entscheidende Linienkraft in den Nippstellen ist daher nicht primär durch einen Stellweg, sondern bei quasifreiem Anschlag 79 durch die Kraft F und das resultierende Gleichgewicht definiert. Grundsätzlich wäre nach Auffinden der Grundeinstellung mit den hierzu passenden Kräften F ein Entfernen des Anschlages 79 bzw. einer entsprechenden, lediglich während des Grundeinstellens wirksamen Fixierung denkbar.

Der Aktor 82 kann grundsätzlich als beliebiger, eine definierte Kraft F aufbringender Aktor 82 ausgeführt sein. Vorteilhaft ist der Aktor 82 als durch Druckmittel betätigbares Stellmittel 82, insbesondere als durch ein Fluid bewegbarer Kolben 82 ausgeführt. Vorteilhaft im Hinblick auf mögliches Verkanten ist die Anordnung mehrerer, hier zwei, derartiger Aktoren 82. Als Fluid kommt vorzugsweise wegen deren Inkompressibilität eine Flüssigkeit, z. B. Öl oder Wasser, zum Einsatz.

Zu Betätigung der hier als Hydraulikkolben 82 ausgeführten Aktoren 82 ist in der Lagereinheit 14 ein steuerbares Ventil 93 vorgesehen. Dieses ist beispielsweise elektronisch ansteuerbar ausgeführt und stellt den Hydraulikkolben 87 in einer Stellung drucklos oder zumindest auf ein geringeres Druckniveau, während in anderer Stellung der die Kraft F bedingende Druck P anliegt. Zusätzlich ist hier zur Sicherheit eine nicht bezeichnete Leckageleitung vorgesehen.

Um zu große An-/Abstellwege zu vermeiden und dennoch Bahnwickler abzusichern, kann auf der druckstellenfernen Seite des Lagerblocks 74 eine Wegbegrenzung durch einen ortsveränderlichen, kraftbegrenzten Anschlag 88 als Überlastsicherung 88, z. B. Federelement 88, vorgesehen sein, welche im betriebsmäßigen Druck-Ab, d. h. die Kolben 82 sind entlastet und/oder eingefahren, zwar als Anschlag 88 für den Lagerblock 74 in Druck-Ab-Stellung dienen, im Fall eines Bahnwicklers oder anderer überhöhter Kräfte von der Druckstelle 05 her jedoch nachgibt und einen größeren Weg frei gibt. Eine Federkraft dieser Überlastsicherung 88 ist daher größer gewählt, als die Summe der Kräfte aus den Federelementen 81. Beim betriebsmäßigen An-/Abstellen ist daher ein lediglich sehr kurzer Stellweg, z. B. lediglich 1 bis 3 mm, vorsehbar.

Der Anschlag 79 ist in der dargestellten Ausführung (Fig. 19) als quer zur Stellrichtung S bewegbarer Keil 79 ausgeführt, wobei beim Bewegen desselben die Position der jeweils wirksamen Anschlagfläche 83 entlang der Stellrichtung S variiert. Der Keil 79 stützt sich beispielsweise an einem trägerfestem Anschlag 96 ab.

Der hier als Keil 79 ausgeführte Anschlag 79 ist durch einen Aktor 84, beispielsweise ein druckmittelbetätigbares Stellmittel 84 wie einen mit Druckmittel betätigbaren Kolben 84 in einem Arbeitszylinder mit (doppeltwirkenden) Kolben über ein z. B. als Kolbenstange 85 ausgeführtes Übertragungsglied 85 oder durch einen Elektromotor über ein als Gewindespindel ausgeführtes Übertragungsglied 85, bewegbar. Dieser Aktor 84 kann entweder in beide Richtungen wirksam oder aber, wie hier dargestellt, als Einwegeaktor ausgeführt sein, welcher bei Aktivierung gegen eine Rückstellfeder 86 arbeitet. Die Kraft der Rückstellfeder 86 ist aus o.g. Gründen (weitgehend kraftfreier Anschlag 79) so schwach gewählt, dass der Keil 79 lediglich entgegen Schwerkraft oder Schwingungskräften in seiner korrekten Lage gehalten wird.

Grundsätzlich kann der Anschlag 79 auch auf andere Art (z. B. als zur Stellrichtung stellbarer und fixierbarer Stößel, etc.) in der Weise ausgeführt sein, dass er eine in Stellrichtung S variierbare, und - zumindest während des Einstellvorgangs - fixierbare Anschlagfläche 83 für die Bewegung des Lagerblockes 74 in Richtung Druckstelle 05 bildet. In nicht dargestellter Ausführung erfolgt ein Stellen des Anschlages 79 beispielsweise direkt parallel zur Stellrichtung S durch ein Antriebsmittel, beispielsweise einen mit Druckmittel betätigbaren Zylinder mit (doppelt wirkendem) Kolben oder einen Elektromotor.

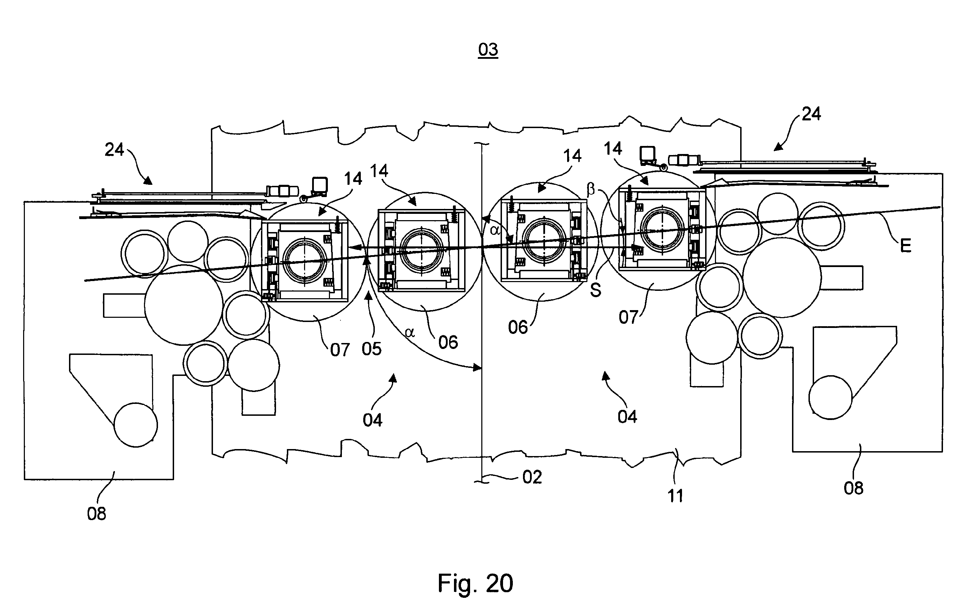

Fig. 20 zeigt am als Doppeldruckwerk 03 ausgeführten Druckwerk 03 schematisch je Zylinder 06; 07 eine am Seitengestell 11 angeordnete Lagereinheit 14. In einer vorteilhaften, hier dargestellten Ausführung bilden in Druck-An-Stellung die Rotationszentren der Zylinder 06; 07 eine gedachte Verbindungslinie bzw. -ebene E (im folgenden als "lineares Doppeldruckwerk" bezeichnet). Vorzugsweise schlissen die Ebene E und die ein- bzw. auslaufende Bahn 02 einen von 90° abweichenden Innenwinkelα zwischen 75 und 88°, insbesondere von 80 bis 86° ein. Die Lagereinheit 14 der Übertragungszylinders 06, insbesondere aller Zylinder 06; 07, sind im montierten Zustand in der in Fig. 20 dargestellten Ausführung am Seitengestell 11 derart angeordnet, dass deren Stellrichtungen S - z. B. aus Gründen einer kraftdefinierten Druck-An-Einstellung (s.u.) - mit der Verbindungsebene E maximal einen Winkel von 15° einschließt, z. B. einen spitzen Winkel β von ca. 2° bis 15°, insbesondere 4 bis 10° miteinander bilden Insbesondere von Vorteil im Hinblick auf die Montage ist diese Anordnung, wenn die Stellrichtung S horizontal und die Bahn 02 im wesentlichen vertikal verläuft.

In abgewandelter Ausführung eines winkelig (n- oder u-Druckwerk 03) angeordneten Doppeldruckwerkes 03 soll unter der Ebene E' die Verbindungsebene der die Druckstelle 05 bildenden Zylinder 06 und unter Ebene E" die Verbindungsebene zwischen Form- und Übertragungszylinder 07; 06 verstanden werden, und das oben genannte zum Winkel β auf die Stellrichtung S wenigstens eines der die Druckstelle 05 bildenden Zylindern 06 bzw. den Formzylinder 07 und die Ebene E' bzw. E" bezogen werden.

Einer der die Druckstelle 05 bildenden Zylinder 06 kann auch ortsfest und betriebsmäßig nichtstellbar (ggf. jedoch justierbar) im Seitengestell 11; 12 angeordnet sein, während der andere entlang der Stellrichtung S, bewegbar gelagert ist.

Ein zum An-/Abstellen betriebsmäßiger Stellweg entlang der Stellrichtung S zwischen Druck-Ab- und Druck-An-Stellung liegt z. B. beim Übertragungszylinder 06 bei 0,5 bis 3 mm, insbesondere bei 0,5 bis 1,5 mm, und beim Formzylinder 07 bei 1 bis 5 mm, insbesondere bei 1 bis 3 mm.

Bei Ausführung als lineares Doppeldruckwerk 03 ist die Ebene E gegen die Ebene der einlaufenden und auslaufenden Bahn 02 z. B. einen Winkel α um 75° bis 88° bzw. 92 bis 105°, vorzugsweise umα 80 bis 86° bzw. 96 bis 100°, auf jeweils einer Bahnseite (bzw. 96 bis 100° bzw.a 80 bis 86° auf der jeweils anderen Bahnseite) geneigt.

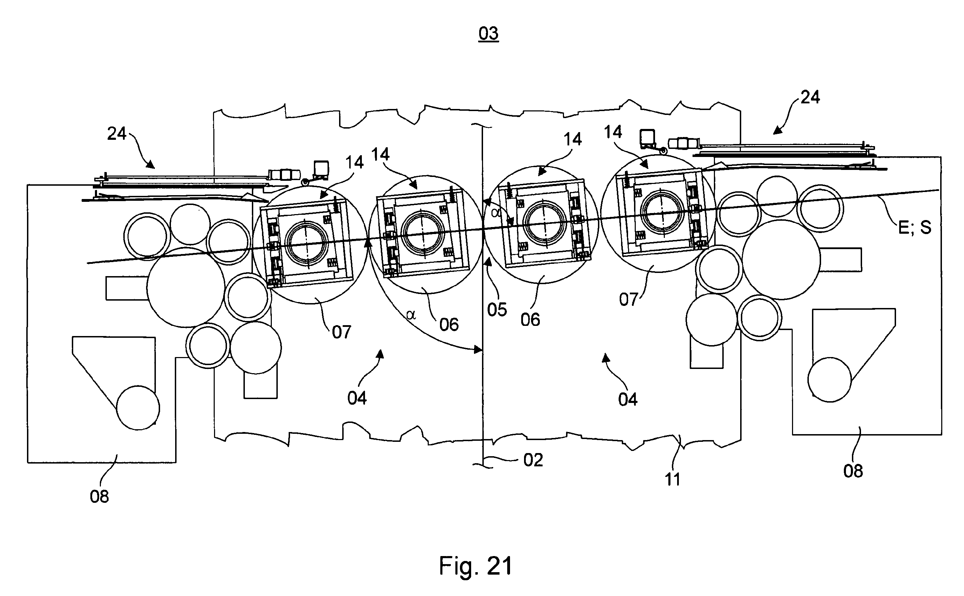

In einer in anderen, in Fig. 21 dargestellten Ausführung sind die Lagereinheiten 14 der Übertragungszylinders 06 , insbesondere aller Zylinder 06; 07, im montierten Zustand am Seitengestell 11 derart angeordnet, dass deren Stellrichtungen S mit der Verbindungsebene E zusammenfallen, d. h. einen spitzen Winkel β von ca. 0° bilden. Sämtliche Stellrichtungen S fallen damit zusammen und sind nicht voneinander beabstandet.

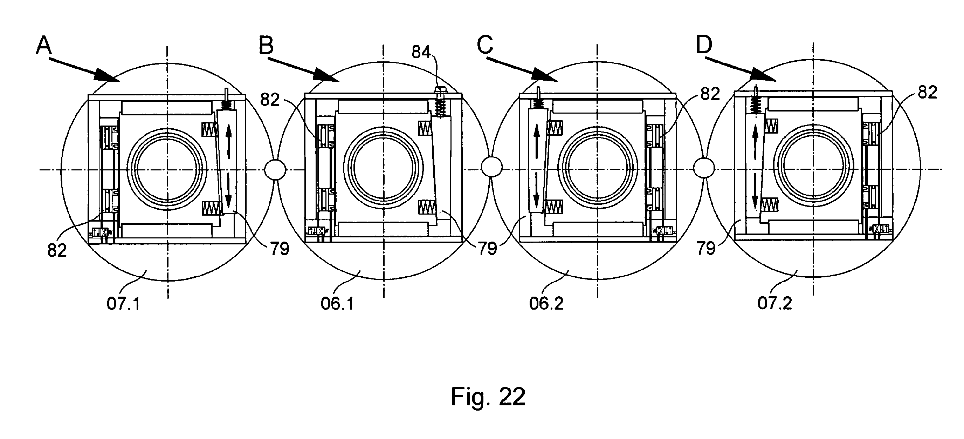

Unabhängig von der in Fig. 20 und 21 dargelegten Neigung der Stellwege zur Ebene E bzw. E' oder E" (kleine Neigung oder aber nicht) wird am schematischen Beispiel der Fig. 22 im Folgenden eine vorteilhafte Verfahrensweise zur Einstellung der Zylinder 06; 07 (hier zur Unterscheidung von linkem und rechtem Druckwerk mit den Zusätzen "1" und "2") bzw. deren Druck-An-Stellung aufgezeigt:
Zunächst wird ein erster, die Druckstelle 05 mit definierender Zylinder 06.1, z. B. Übertragungszylinder 06.1, in seiner Lage in Druck-An-Stellung (d. h. Aktoren 82sind aktiv) innerhalb der Druckeinheit 01 und zur Bahn 02 durch Stellen der Anschläge 79 (zu beiden Stirnseiten) ausgerichtet. Dies kann, wie hier angedeutet, durch einen, hier beispielhaft als manuell betätigbaren Aktor 84 (Stellschraube) erfolgen. Hierbei wird eine die Druckstelle definierende sog. "0-Position" festgelegt.

Anschließend wird bei freigesetztem Anschlag 79 des zugeordneten Formzylinders 07.1, d. h. der Anschlag 79 wurde z. B. zuvor durch nach oben ziehen entfernt, und noch aktivierter Druck-An-Stellung des Übertragungszylinders 06.1, d. h. aktivierter Aktoren 82 des Übertragungszylinders 06.1, die für die Druck-An-Stellung zwischen Form- und Übertragungszylinder 07.1; 06.1 gewünschte Kraft F beaufschlagt. Dies erfolgt hier durch Beaufschlagung der Aktoren 82 des Formzylinders 07.1 mit dem gewünschte Anstelldruck P. Ist an der Lagereinheit 14 des ersten Formzylinders 07.1 ebenfalls ein stellbarer Anschlag 79 vorgesehen, kann in einer ersten Variante bereits jetzt dieser Anschlag 79 nun im wesentlichen kraftfrei in Kontakt zur korrespondierenden Anschlagfläche des Lagerblocks 74 am ersten Formzylinder 07.1 gebracht werden.

Bei aktivierter Druck-An-Stellung (d. h. jeweils ausgeübter Kraft in Richtung Druckstelle 05) der beiden ersten Zylinder 06.1; 07.1 und Druck-Ab des zweiten Formzylinders 07.2 wird, während bzw. nachdem der Anschlag 79 des dritten Zylinders 06.2 freigestellt ist bzw. wurde, der zweite Übertragungszylinder 06.2 bzw. dessen Lagerblock 74 mit der gewünschten Kraft (Druck P) für die Druck-An-Stellung beaufschlagt, und bei Erreichen des Gleichgewichtes dessen Anschlag 79 im wesentlichen kraftfrei in Kontakt zur korrespondierenden Anschlagfläche des Lagerblocks 74 gebracht. In diesem Rahmen kann auch zuvor, währenddessen oder anschließend, falls nicht bereits in o. g. Variante erfolgt, der Anschlag 79 des ersten Formzylinders 07.1 in Kontakt mit dem zugeordneten Lagerblock 79 gebracht werden.

In einem letzten Schritt wird - bei freiem oder zuvor freigestelltem Anschlag 79 - der zweite Formzylinder 07.2 bzw. dessen Lagerblock 74 in Druck-An gebracht, während sich auch der zugeordnete Übertragungszylinder 06.2 ebenfalls in Druck-An befindet. Nach Erreichen von Stationarität wird - falls ein Anschlag 79 dort vorgesehen - auch am zweiten Formzylinder 07.2 dieser Anschlag 79 im wesentlichen kraftfrei in Kontakt zur korrespondierenden Anschlagfläche des Lagerblocks 74 verbracht.

Auf diese Weise ist eine für den Druckprozess optimal abgestimmte Einstellung der Zylinder 06; 07 des Doppeldruckwerks 03 erfolgt.

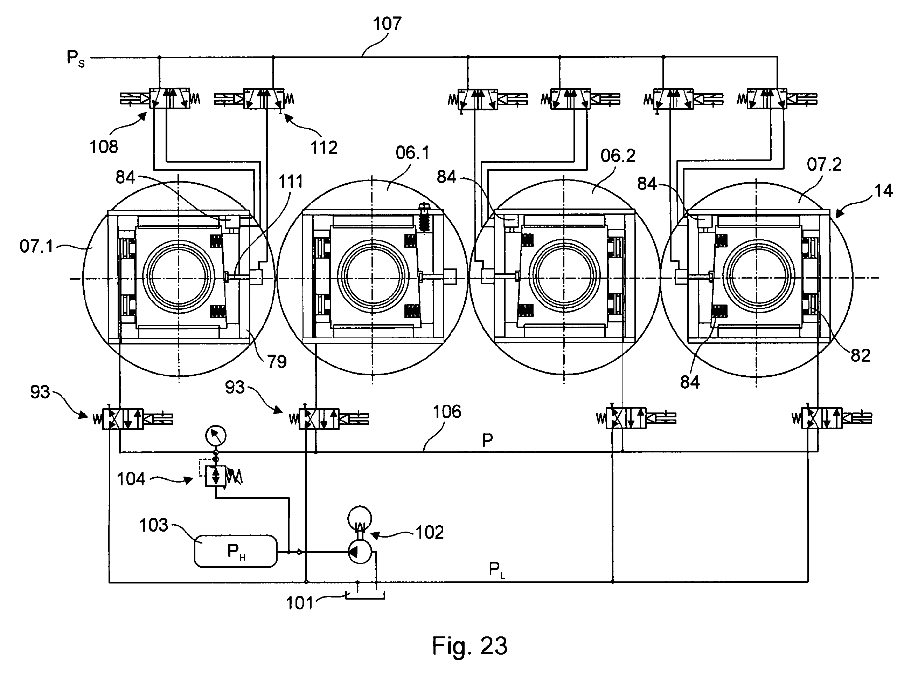

In Fig. 23 ist ein Ausführungsbeispiel für eine Verschaltung einer Druckmittelversorgung - geeignet zur Umsetzung der o.g. Verfahrensweise - dargestellt. Ein nach außen offenes oder geschlossenes Fluidreservoir 101 befindet sich auf einem Druckniveau eines Druckes P_{L} (z. B. Umgebungsdruck), welcher niedriger ist, als ein der Rückstellkraft F_{R} der Federelemente 81 einer Lagereinheit 14 entsprechender Druck P. Das Druckmittel (Fluid) wird durch einen Verdichter 102, z. B. eine Pumpe oder Turbine, auf ein Druckniveau eines Druckes P_{H} verdichtet, welcher mindestens dem für die Anstellkraft F benötigten Druck P entspricht. Um Druckschwankungen durch Druckmittelentnahme möglichst gering zu halten, kann auf den Druck P_{H} verdichtetes Fluid vorteilhaft in einem Druckspeicher 103 vorgehalten sein. Aus dem den hohen Druck P_{H} aufweisenden Druckmittelzweig wird über ein Stellglied 104, insbesondere ein einstellbaren Druckminderer 104, eine Versorgungsstrecke 106 bedrückt, deren Druckniveau durch den Druckminderer 104 auf den für die Druck-An-Stellung geeigneten Druck P (korrespondierende Kraft F; ggf. unter Berücksichtigung der Rückstellkraft F_{R} und ggf. Kraft ΔF) eingestellt ist. In nicht dargestellter Ausführung können auch zwei verschiedener Druckniveaus P (z. B. P_{DS} für die Anstellkraft an der Druckstelle und P_{DW} für die Anstellkraft zwischen den Druckwerkszylindern 06; 07) über zwei einstellbare Druckminderer 104 in zwei Versorgungsstrecken 106 zur Verfügung gestellt sein.

Die Eingänge der bereits im Zusammenhang mit Fig. 19 genannten Ventile 93, insbesondere Mehrwegeventile, je stellbarem Zylinder 06; 07 sind nun mit der Versorgungsstrecke 106 des Druckes P verbunden. Bei zwei o. g. Niveaus sind die Eingänge der den bewegbaren Übertragungszylinder 06 zugeordneten Ventile 93 z. B. mit dem Druck P_{DS} und die Eingänge der den Formzylindern 07 zugeordneten Ventile 93 mit dem Druck P_{DW} verbunden. Die Ausgänge der Ventile 93 sind mit dem Fluidreservoir 101 verbunden.

Ein Stellen der nicht reinmanuell bewegbar ausgeführten Anschläge 79 über die als druckmittelbetätigbare Aktoren 84 ausgeführten Stellmittel 84 erfolgt beispielsweise entweder vorteilhaft über eine eigene, einen Druck P_{S} bereitstellende Versorgungsstrecke 107 (dargestellt) oder ggf. integriert in die o. g. Druckniveaus. Wie in Fig. 23 dargestellt, das den Druck P_{S} bereitstellende Fluid als gasförmiges Druckmittel, z. B. Druckluft, in einem offenen System bereitgestellt sein. Ein Eingang eines mit dem zugeordneten Aktor 84 verbundenen Ventils 108 steht mit der Versorgungsstrecke 107 in Verbindung, wobei je nach Ausgestaltung des Aktors 84 (doppeltwirkend in beide Richtungen oder lediglich in eine von zwei möglichen Richtungen wirkend) ein bzw. zwei Ausgänge des Ventils 108 mit einem bzw. zwei Eingängen des Aktors 84 verbunden sind.

In einer in Fig. 23 dargestellten Weiterbildung ist auch zur Fixierung des Anschlages 79 ein betätigbares Haltemittel 111, beispielsweise ein Stößel, vorgesehen, mittels welchem der Anschlag 79 in seiner im wesentlichen kraftfreien Lage gehalten werden kann, ohne bei Entlastung durch Druck-Ab-Stellen seine Lage zu verändern. Auch dieses Haltemittel 111 kann zwecks Betätigung bzw. Lösens über entsprechende Leitungen und weitere Ventile 112 mit der pneumatischen Versorgungsstrecke 107 verbunden sein. Im dargestellten Beispiel ist das Haltemittel 111 dazu ausgebildet, den Anschlag 79 wahlweise (bei Aktivierung) reibschlüssig bzgl. des Lagerblockes 74 zu Klemmen.

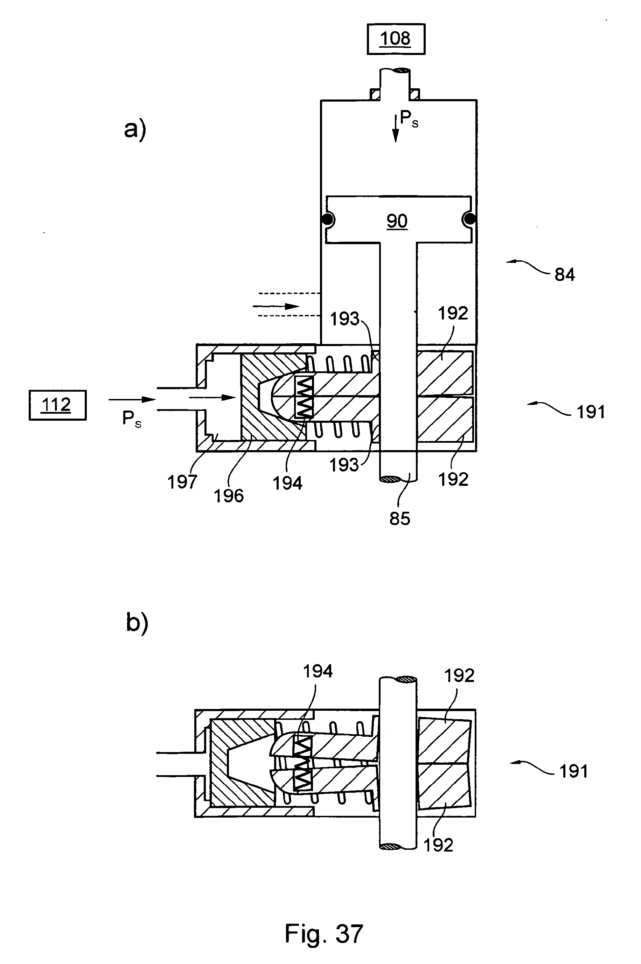

In einer vorteilhaften Ausführung ist anstelle des den Anschlag 79 fixierenden Haltemittels 111 ein in Fig. 37 dargestelltes Haltemittel 191 vorgesehen, mittels welchem das Übertragungsglied 85, insbesondere die Kolbenstange 85 oder eine entsprechendes Verlängerungsstück, klemmbar ist. Das Haltemittel 191 kann im Aktor 84 integriert, oder aber wie dargestellt zwischen Aktor 84 und Anschlag 79 in der Weise angeordnet sein, dass das Übertragungsglied 85 wahlweise festsetzbar oder frei in seine Bewegungsrichtung beweglich ist. Das Haltemittel 191 weist beispielsweise zwei Klemmbacken 192 mit Durchbrüchen 193 bzw. zumindest Aussparungen zum Umgreifen des Übertragungsgliedes 85 auf, welche derart mit dem Übertragungsglied 85 in Wirkverbbindung stehen, dass sie in einem ersten Betriebszustand, in welchem die Längsachse der Durchbrüche 193 parallel zum Übertragungsglied 85 verlaufen, das Übertragungsglied 85 freigeben, und in einem zweiten Betriebszustand, in welchem die Längsachsen der Durchbrüche 193 gegenüber der Längsachse des Übertragungsglieds 85 verkippt, insbesondere gegeneinander gespreizt, sind, letztgenanntes bzgl. einer Bewegung geklemmt ist. Vorzugsweise ist das Haltemittel 191 selbstsichernd ausgebildet, so dass bei nicht betätigtem Haltemittel 191, z. B. durch die Kraft einer Feder 194, der zweite Betriebszustand eingenommen wird. Die Betätigung der Klemmbacken 192 erfolgt über derart geneigte Flächen eines Stellgliedes 196, dass die Klemmbacken 192 in einer ersten Stellung des Stellgliedes 196 verkippt (s.o.) und in einer zweiten Stellung nicht verkippt sind. Das Haltemittel 191, insbesondere das Stellglied 196, kann grundsätzlich manuell, beispielsweise über eine entsprechende Betätigungseinrichtung, oder aber vorteilhaft mittels eines Stellantriebes 197, insbesondere fernbetätigbar, nichthändisch betätigbar sein. Der Stellantrieb 197 ist in Fig. 37 als mit Druckmittel beaufschlagbarer Zylinder 197 ausgebildet, in welchem das als Kolben ausgebildete Stellglied 196 bewegbar ist. Bei Beaufschlagung mit dem Druck P_{S} (Fig. 36 a) erfolgt ein Lösen der Klemmung - hier durch entsprechendes Ausrichten der Klemmbacken 192 bzw. deren Durchbrüche 193. Bei Entspannung (Fig. 36 b) erfolgt durch die Feder 194 ein Spreizen bzw. Verkippen der Klemmbacken 192 und damit ein Klemmen.

Ein Rückholen des Anschlages 79 kann entweder durch die in Fig. 9 dargestellte Feder 86 oder aber - wie in Fig. 37 strichliert dargestellt - aktiv durch die Ausbildung des Aktors 84 als Druckmittel betätigbarer Zylinder mit doppelt wirkendem Kolben, also mit zwei Druckmittelzuführungen, je eine beiderseits eines Kolbens 90.

In der dargestellten Ausführung sind alle vier Zylinder 06; 07 durch Aktoren 82 an-/abstellbar gelagert, wobei jedoch lediglich die Anschläge 79 der beiden Formzylinder 07 und einer der Übertragungszylinder 06 nicht händisch, d. h. über die druckmittelbetätigbaren Aktuatoren 84, insbesondere fernbetätigt, stellbar sind. Der Anschlag 79 des anderen Übertragungszylinders 06 ist, beispielsweise mittels eines als Stellschraube ausgeführten Stellmittels 84, einstell- und feststellbar. Er muss daher beispielsweise auch kein Haltemittel 111 aufweisen.

In einer o. g. einfacheren Variante sind zwar alle vier Zylinder 06; 07 mittels Aktoren 82 linear bewegbar gelagert, wobei lediglich die beiden Übertragungszylinder 06 bewegbare Anschläge 79 (ggf. mit o. g. Aktoren 84 und/oder Haltemitteln 111) aufweisen.

In weiter vereinfachter Ausführung ist einer der beiden Übertragungszylinder 06 zwar in seiner Lage justierbar, jedoch nicht im Sinne einer An-/Abstellbewegung betriebsmäßig bewegbar sondern gestellfest gelagert. Die drei anderen Zylinder 06; 07 sind dann im Sinne eines An-/Abstellens bewegbar gelagert, wobei in einer ersten Variante all diese drei Zylinder 06, 07 und in zweiter Variante lediglich der vom festgelegten Übertragungszylinder 06 verschiedene Übertragungszylinder 06 einen bewegbaren Anschlag 79 und ggf. das Haltemittel 111 aufweist.

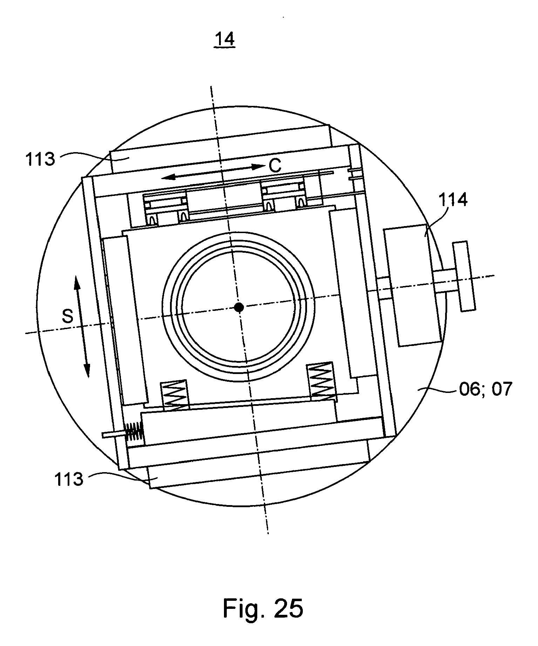

In Weiterbildung der Zylinderlagerung sind die Lagereinheiten 14 der Formzylinder 07 und/oder der Übertragungszylinder 06 wie in Fig. 25 schematisch dargestellt, auf zumindest einer Stirnseite selbst in Lagern 113, z. B. Linearlagern 113, in einer Bewegungsrichtung C bewegbar gelagert, welche senkrecht zur Zylinderrotationsachse steht und zumindest eine Komponente senkrecht zur Stellrichtung S aufweist. Vorzugsweise ist die Bewegungsrichtung C senkrecht zur Stellrichtung S gewählt und bewirkt bei einseitiger Betätigung eine Schrägstellung (sog. "cooking") des betreffenden Zylinders 06; 07. Die Verstellung des Zylinders 06; 07 kann über ein manuelles oder motorisches Stellmittel 114, z. B. über ein Handrad oder vorzugsweise über eine motorisch betriebene Stellspindel erfolgen. Eine derartige zusätzliche Lagerung der Lagereinheit(en) 14 am Formzylinder 07 ermöglicht eine Schrägstellung desselben und eine Passereinstellung, und ermöglicht am Übertragungszylinder 06 dessen Schrägstellung.

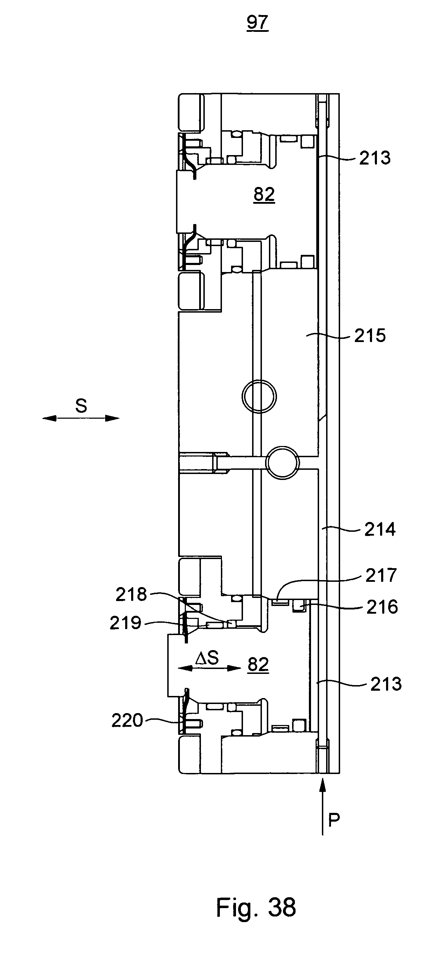

Der in der vorstehenden Ausführung der Lagereinheiten 14 vorgesehene Aktor 82 ist dazu ausgebildet, einen für das An- bzw. Abstellen geeigneten Stellweg ΔS bereitzustellen und weist daher vorzugsweise einen wenigstens ΔS entsprechenden Hub auf. Der Aktor 82 ist zum Einstellen des Anstelldruckes aneinander angestellter Walzen bzw. Zylinder 06, 07 und/oder zur Durchführung des Druckan-/-abstellung vorgesehen und entsprechend ausgebildet. Der Stellweg ΔS (bzw. Hub) beträgt beispielsweise mindestens 1,5 mm, insbesondere mindestens 2 mm. In Fig. 38 ist eine vorteilhafte Ausführung eines - z. B. als vorfertigbares Bauteil ausgebildeten - Aktorelementes 97. Dieses Aktorelement 97 umfasst wenigstens einen, vorzugsweise zwei mit Druckmittel betätigbare als Kolben 82 ausgebildete Aktoren 82, welche in Ausnehmungen 213 eines Basiskörpers 215, welche als mit Druckmittel beaufschlagbare Druckkammern 213 dienen, in Stellrichtung S bewegbar gelagert sind. Das Aktorelement 97 umfasst auch eine Versorgungsleitung 214 zur Versorgung der Druckkammern 213 mit Druckmittel des Druckes P. Vorzugsweise werden die beiden Druckkammern 213 durch eine gemeinsame Versorgungsleitung versorgt und somit in gleicher Weise bedrückt bzw. entlastet. In Fig. 38 ist der obere Kolben 82 jedoch exemplarisch für beide Kolben 82 in einer eingefahrenen und der untere Kolben 82 exemplarisch für beide Kolben 82 in einer ausgefahrenen Stellung dargestellt. Die Versorgungsleitung 214 wurde aus diesem Grunde ebenfalls lediglich zum Teil als mit Druckmittel beaufschlagt gekennzeichnet.

Der Kolbens 82 ist gegen die Druckmittelkammer 213 durch eine am Umfang des Kolbens 82 umlaufende, druckkammernahe Dichtung 216 abgedichtet und eine druckkammernahe Gleitführung 217 geführt. Vorteilhaft kann zusätzlich eine zweite Dichtung 218 und eine zweite Gleitführung 219 in einem druckkammerentfernten Bereich des Kolbens 82 vorgesehen sein. In einer besonders vorteilhaften Ausführung ist anstatt oder zusätzlich zur zweiten Dichtung 218 der Kolben 82 nach Außen hin zusätzlich durch eine Membran 220, z. B. aus Gummi, insbesondere eine Rollmembran 220 abgedichtet. Diese ist einerseits rundum mit dem Kolben 82 und anderseits auf ihrer Außenumfangslinie vollständig mit dem Basiskörper 215 bzw. anderen festen Einbauten des Aktorelements 97 verbunden.

In einer vorteilhaften Ausbildung der Druckeinheit 01 sind sowohl Teile der Druckeinheit 01, insbesondere Wandabschnitte 11; 12; 49 zwecks Bestückens bzw. Wartens der Druckeinheit 01 relativ zueinander, insbesondere in einer Linearführung 15, als auch Zylinder 06; 07 zum Einstellen des Anstelldruckes und/oder zur Durchführung des Druckan-/-abstellung in Linearlagern 70 innerhalb des entsprechenden Wandabschnittes 11; 12 linear bewegbar angeordnet.

Zwar sind die im folgenden beschriebenen Antriebsausführungen grundsätzlich auch unabhängig von oben beschriebener Teilbarkeit und/oder Modularität und/oder der Zylinderanordnung an den Innenwänden des Seitengestells 11; 12 und/oder der linearen Anordnung und/oder der speziellen linearen Lagerung und/oder der genannten An-, Ab-und Einstellung der Zylinder 06; 07 von Vorteil. Besondere Vorteile ergeben sich jedoch gerade in Verbindung mit einem oder mehreren der genannten Merkmale.

Im folgenden sind Ausführungsbeispiele für als Funktionsmodule ausgebildete Antriebsgetriebe dargelegt. In den Antriebslösungen sind funktionelle Gruppen der Druckeinheit 01 sinnvoll zusammengefasst und mit eigenen Antriebsmotoren (s.u.), insbesondere Servo-, AC- oder Asynchronmotoren, ausgestattet. Ein Druckzylindergetriebe mit eigenem Antriebsmotor umfasst hier beispielsweise den Antrieb eines Formzylinder-Übertragungszylinder-Paares. Zusätzlich schaffen ein Farbwerksgetriebe mit eigenem Antriebsmotor (für Rotation und Changierbewegung) und, im Fall des Nassoffset, ein Feuchtwerksgetriebe mit eigenem Antriebsmotor (für Rotation und Changierbewegung) eine hohe Stufe der o. g. Modularität.

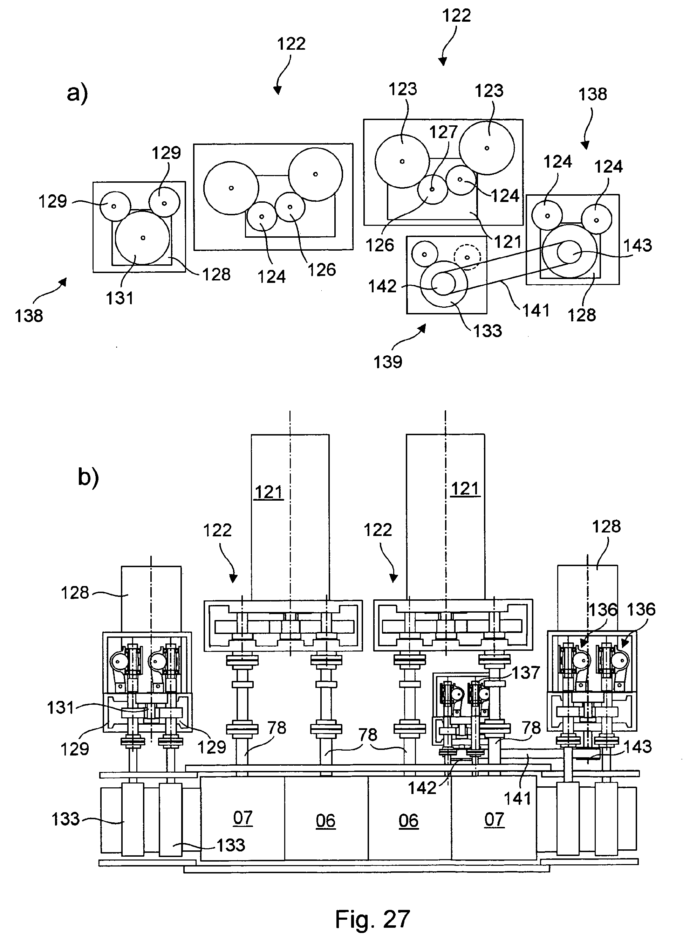

Die vorzugsweise als Module vorgefertigten Getriebeeinheiten können als Untereinheiten für die Druckwerkszylinder 06; 07 (Fig. 26, 27) und/oder für die beispielsweise als Modul ausgeführten Farbwerke 08 (Fig. 26, 27) komplett vormontiert sein und in vorteilhafter Ausführung bereits vor dem Einsatz in die Druckeinheit 01 am Rahmen 147 (bzw. Rahmenkonstruktion 16) des Farbwerksmoduls vormontiert sein. Andererseits erlaubt die Modularität aber auch den Einbau/Ersatz/Austausch des als Modul ausgeführten Getriebes, wenn das Farbwerkmoduls bereits in die Maschine eingesetzt ist.

Die Konzeption der Modularität für getrennten Druckwerkszylinder-, Farbwerks- und Feuchtwerksantrieb gestattet sowohl die Teilbarkeit Druckeinheit 01 an der Druckstelle 05 (siehe z. B. Fig. 3) als auch die Teilbarkeit zwischen Formzylinder 07 und Farbwerk 08 (siehe Fig. 24). Die getrennten Module für Druckwerkszylinder 06; 07, Farbwerk 08 und ggf. Feuchtwerk 09 erlaubt auch gleichzeitigen Rüstbetrieb wie Druckformwechsel und/oder Gummituchwaschen während ein Farbwerkwaschen und/oder ein Voreinfärben erfolgt. Die Ablaufprogramme können hierbei in Dauer, Drehzahl und Funktionsablauf voneinander verschieden sein.

Bei geringerer Anforderung an die Variabilität und/oder Modularität können auch größere funktionelle Gruppen als Module zusammengefasst sein (Fig. 27, 28, 29).

Das Getriebe bzw. der Getriebezug der jeweiligen Antriebsmodule ist in bevorzugter Ausführung jeweils als einzeln gekapseltes Getriebe ausgeführt und von mindestens einem von den anderen Funktionsmodulen mechanisch unabhängigen Antriebsmotor angetrieben. Somit ist es nicht erforderlich, bei Zusammensetzen einer Druckeinheit 01 aus Modulen einen ausgedehnten Ölraum und/oder Antriebsverbindungen zu berücksichtigen. Die Bauteile sind für sich betrachtet fertig gestellt und abgeschlossen.

Exemplarisch sind auf der linken Seite der Figuren jeweils die Verhältnisse für den Trockenoffset, auf der rechten Seite für den Nassoffset dargestellt. Selbstverständlich sind die beiden Druckwerke 04 eines realen Doppeldruckwerkes 03 jedoch vom selben Typ. In den stirnseitigen Ansichten wurde aus Übersichtsgründen auf das Walzenschema verzichtet und lediglich die Antriebszüge mit Motoren dargestellt. In der Draufsicht ist das Antriebskonzept am Beispiel eines Farbwerk 08 mit zwei rotatorisch getriebenen Reibzylindern 33 (vgl. Farbwerk 08.2) und - im Fall des Nassoffset - im Gegensatz zu den Figuren 11 a) und 11b) - exemplarisch eines Feuchtwerks 09 mit zwei rotatorisch getriebenen Reibzylindern 33 (in Fig. 26 durch Strichlierung als optional kenntlich gemacht).

Der Antrieb der Druckwerkszylinder 06; 07 erfolgt zumindest paarweise, d. h. es ist je Zylinderpaar 06, 07 aus Form- und zugeordnetem Übertragungszylinder 07; 06 mindestens ein von weiteren Druckwerkszylindern mechanisch unabhängiger eigener Antriebsmotor 121 vorgesehen. Dies kann z. B. in nicht dargestellter Variante jeweils ein eigener, mechanisch unabhängiger Antriebsmotor 121 sein, oder wie im folgenden dargestellt, durch paarweisen Antrieb über Antriebsverbindungen bzw. -züge erfolgen.

In Fig. 26a) ist in stirnseitiger Ansicht und in Fig. 26b) eine Draufsicht eines Getriebe- bzw. Antriebszuges 122, insbesondere als Antriebs- bzw. Funktionsmodul 122 ausgeführt, jeweils für die Druckzylinderpaare 06, 07 dargestellt. Die Zylinder 06; 07 weisen jeweils drehfest über die Antriebswellen 78 verbundene Antriebsräder 123, insbesondere Stirnräder 123, auf, deren Kopfkreisdurchmesser kleiner ist als der Außendurchmesser der jeweiligen Zylinder 06; 07 bzw. Ballen 67; 68. Diese Stirnräder 123 stehen miteinander über eine geradzahlige Anzahl Zwischenräder 124; 126, hier zwei, Zahnräder 124; 126 in Antriebsverbindung. In einer in Fig. 26a) dargestellten Ausführung ist einer der beiden Zahnräder 124; 126, insbesondere das übertragungszylindernahe Zahnrad 126, als Ritzel wirksam und über die Motorwelle 127 des Antriebsmotors 121 angetrieben. Grundsätzlich kann, wie in Fig. 27, der Antrieb vom Antriebsmotor 121 auch über ein zusätzliches Ritzel auf eines der beiden Antriebsräder 123, insbesondere auf das des Übertragungszylinders 06, erfolgen.

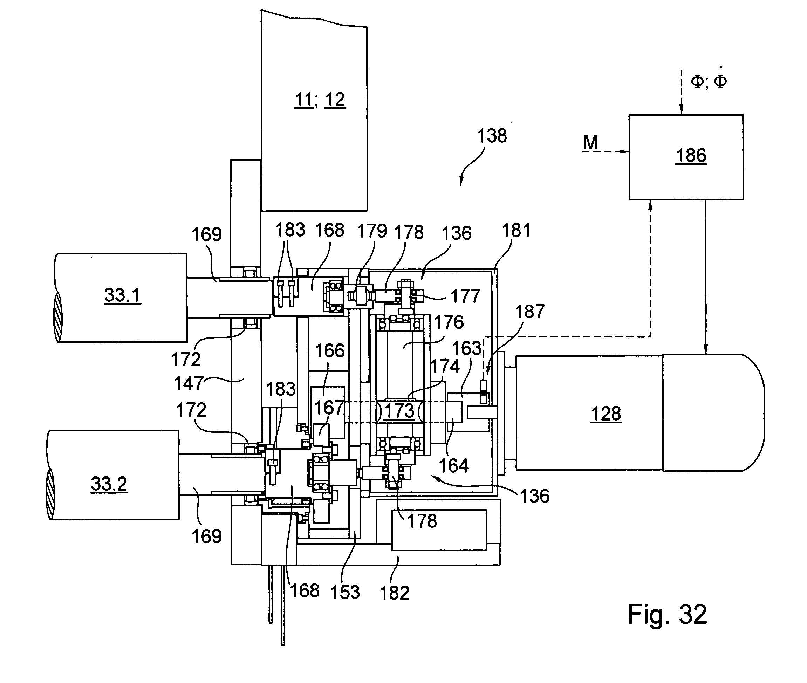

Das Farbwerk 08 weist jeweils einen eigenen, von den Druckwerkszylindern 06; 07 mechanisch unabhängigen Antriebsmotor 128 für den rotatorischen Antrieb auf. Durch diesen werden insbesondere die beiden Reibzylinder 33 des Farbwerks 08.2 (im Fall einer Rasterwalze 26 diese bzw. drei Reibzylindern 33 diese drei), z. B. über mit diesen drehfest verbundene Antriebsräder 129 und ein Antriebsritzel 131 angetrieben. Im Fall des Nassoffset (rechts) gilt im wesentlichen das selbe für den Antrieb des Feuchtwerks 09 mit einem Antriebsmotor 132, einem Antriebsritzel 133 und einem oder mehrere strichliert dargestellte Antriebräder 134 eines oder mehrerer Reibzylinder 42; 48. In Fig. 26b) ist je Reibzylinder 33 des Farbwerks 08 und je Reibzylinder 42; 48 des Feuchtwerks 09 ein die axiale Changierbewegung erzeugendes Reibgetriebe 136 bzw. 137 angeordnet. Dieses kann grundsätzlich durch einen zusätzlichen Antriebsmotor angetrieben sein, oder aber wie dargestellt als ein die Rotationsbewegung in eine Axialbewegung umformendes Getriebe 136; 137 ausgebildet sein. In Abwandlung der Ausführung gemäß Fig. 26 kann der Antrieb des Farbwerk 08 entsprechend Fig. 32 erfolgen, d. h. lediglich der formzylinderferne Reibzylinder 33.2 rotatorisch, jedoch ggf. beide Reibzylinder 33.1; 33.2 axial zwangsgetrieben, und/oder der Antrieb eines dreiwalzigen Feuchtwerks 09 wie oben zur Weiterbildung der Fig. 11a) genannt rein über Friktion rotatorisch angetrieben sein.

Der Antrieb des extra angetriebenen Farbwerk 08 und, falls vorgesehen des Feuchtwerks 09, ist jeweils vorzugsweise als funktionelle Gruppe, insbesondere als Antriebs- oder Funktionsmodul 138; 139 ausgeführt. Insbesondere sind diese Antriebsmodule 138; 139 als komplette Einheit montierbar und vorzugsweise für sich jeweils gekapselt ausgeführt (siehe Fig. 26b).

In Fig. 26 ist exemplarisch für die anderen Antriebsvarianten der folgenden Figuren auch eine vorteilhafte Ausbildung der Lager als Lagereinheiten 14 in oben genannter Ausführung für die Lagerung der vier Zylinder 06; 07 angedeutet. Die Wellen 78 sind beispielsweise durch entsprechende Aussparungen/Durchbrüche - ggf. im Hinblick auf die Modularität und daher verschiedenen Achsabstände als Langloch - im Seitengestell 11; 12 geführt.

Die sich entsprechenden bzw. wiederholenden Teile wurde in den Figuren 26 bis 29 nicht jedes Mal alle wieder explizit mit Bezugszeichen versehen.

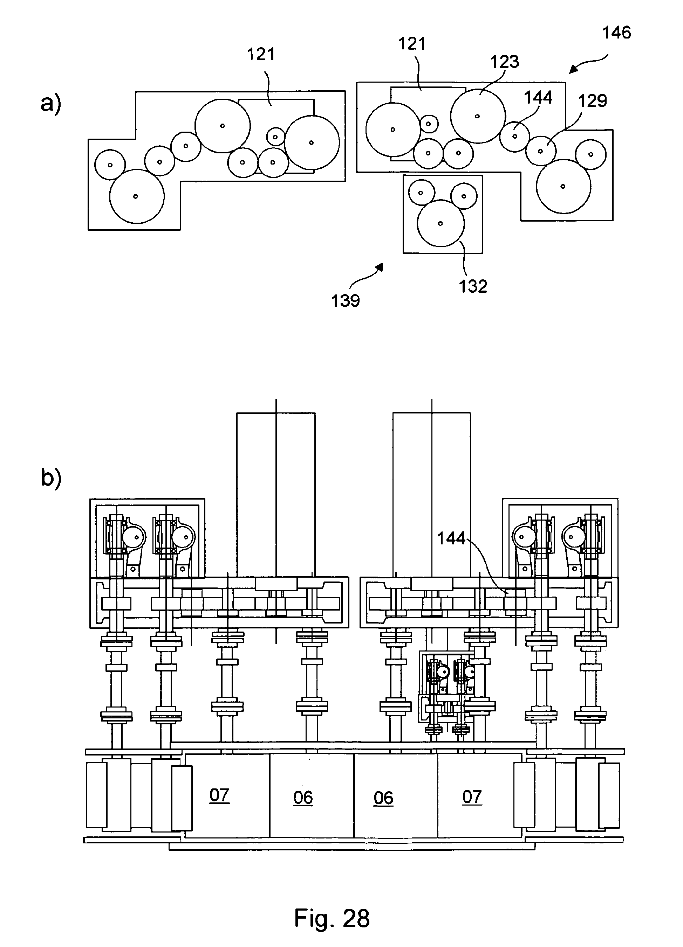

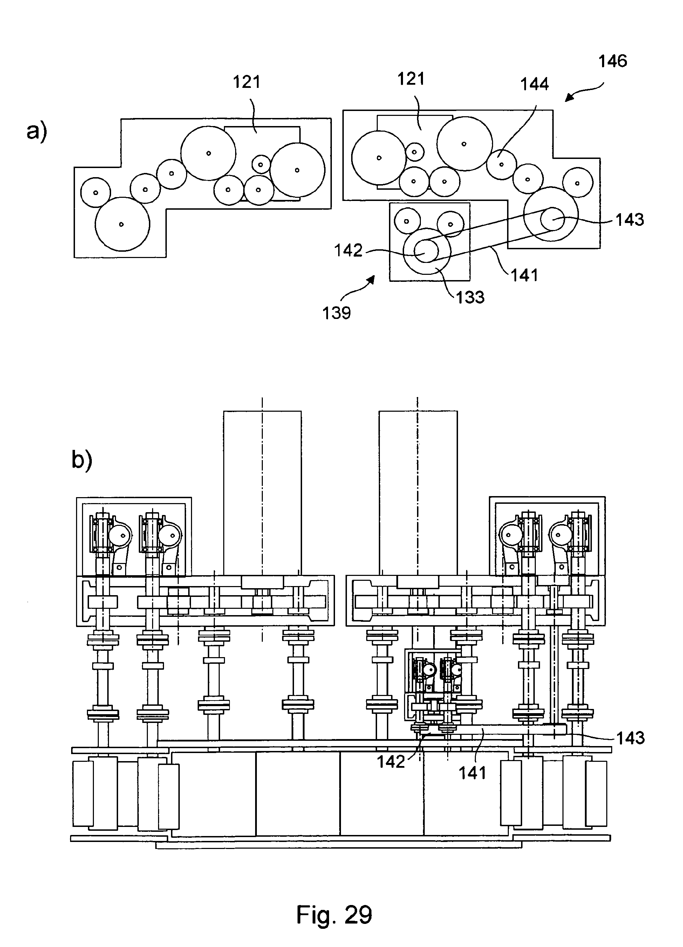

In der in Fig. 26 und 27 dargestellten vorteilhaften Ausführung sind die Rotationsachsen der vier Druckwerkwerkszylinder 06; 07 des Doppeldruckwerkes 03 exemplarisch in der gemeinsamen Ebene E angeordnet. Das Antriebskonzept der Fig. 26 oder 27 ist jedoch ebenso auf nichtlineare Anordnungen der Zylinder 06; 07 wie exemplarisch in Fig. 1, 28 und 29 mit dann entsprechender nichtlinearer Anordnung der Antriebsräder 123 zu übertragen. Ebenso ist das Antriebskonzept aus Fig. 28 und 29 auf die lineare Anordnung der Zylinder 06; 07 zu übertragen.

In einer Ausführung gemäß Fig. 27 weisen die Druckwerkszylinder 06; 07 und die Farbwerke 08 einen eigenen Antrieb wie in Fig. 26 auf. Farb- und Feuchtwerksantrieb sind jeweils zwar als eigene Funktionsmodule ausgebildet, jedoch weist das den Nassoffset repräsentierende rechte Druckwerk 04 ein Feuchtwerk 09 ohne eigenen rotatorischen Antriebsmotor auf. Der rotatorische Antrieb erfolgt hier vom Farbwerk 08 her über eine mechanische Antriebsverbindung 141, z. B. einen Riementrieb 141, entweder direkt auf ein mit dem jeweiligen Reibzylinder 42; 48 verbundenes Antriebsrad, z. B. eine Riemenscheibe, oder, wie dargestellt, auf ein mit dem Antriebsritzel 133 verbundenes Antriebsrad 142, z. B. Riemenscheibe 142, welches dessen Reibzylinder 42; 48 bzw. deren Reibzylinder 42; 48. Der Antrieb erfolgt z. B. von einem mit der Antriebswelle des Antriebsmotors 128 drehfest verbundenen Antriebsrad 143, z. B. einer Riemenscheibe 143 her. In Abwandlung der Ausführung gemäß Fig. 27 kann der Antrieb des Farbwerk 08 entsprechend Fig. 32 erfolgen, d. h. lediglich der formzylinderferne Reibzylinder 33.2 rotatorisch, und ggf. beide Reibzylinder 33.1; 33.2 axial zwangsgetrieben, und von dort auf das Feuchtwerk 09 abgetrieben sein.

In einer Ausführung gemäß Fig. 28 ist das Feuchtwerk 09 als Funktionsmodul ausgebildet und weist wie in Fig. 26 einen eigenen Antriebsmotor 132 wie in Fig. 26 auf. Das Farbwerk 08 weist jedoch keinen von den Druckwerkszylindern 06; 07 unabhängigen Antriebsmotor auf, sondern der rotatorische Antrieb erfolgt von einem der Zylinder 06; 07, insbesondere vom Formzylinder 07, her über eine mechanische Antriebsverbindung 144, z. B. über mindesten ein Zwischenrad 144, insbesondere Zahnrad 144, zwischen dem Stirnrad 123 und Antriebsrad 129 eines der Reibzylinder 33. Die Antriebsverbindung 144 kann in vorteilhafter Variante auch als Riementrieb ausgeführt sein. Der Antrieb des Druckwerkszylinderpaares 06, 07 mit zugeordnetem Farbwerk 08 ist vorzugsweise als Antriebszug 146 bzw. Antriebs- oder Funktionsmodul 146, insbesondere zumindest der den Antriebszug von Zylinderpaar 06, 07 und Farbwerk 08 aufweisende Raum ist z. B. gekapselt ausgebildet. In einer Abwandlung der Ausführung gemäß Fig. 28 kann der Antrieb des Farbwerk 08 entsprechend dem zu Fig. 32 dargelegten Prinzip erfolgen, d. h. es wird lediglich der formzylinderferne Reibzylinder 33.2 rotatorisch über eine Antriebsverbindung vom Formzylinder 07 her, jedoch ggf. beide Reibzylinder 33.1; 33.2 axial zwangsgetrieben. Der Antrieb eines dreiwalzigen Feuchtwerks 09 kann über den Antriebsmotor 132 oder aber wie oben zur Weiterbildung der Fig. 11a) genannt rein über Friktion rotatorisch angetrieben sein.

In einer Ausführung gemäß Fig. 29 ist das Feuchtwerk 09 als Funktionsmodul ausgebildet und weist jedoch wie in Fig. 27 keinen eigenen Antriebsmotor auf. Das Farbwerk 08 weist wie in Fig. 28 unabhängigen Antriebsmotor auf, sondern wird wie in Fig. 28 wieder rotatorische von einem der Zylinder 06; 07, insbesondere vom Formzylinder 07, her über eine Antriebsverbindung 144, z. B. ein Zwischenzahnrad 144 angetrieben. Der Antrieb des Feuchtwerks 09 erfolgt wie in Fig. 27 über einen Riementrieb 141. Der Antrieb des Druckwerkszylinderpaares mit zugeordnetem Farbwerk 08 ist vorzugsweise wieder als Funktionsmodul 146, insbesondere gekapselt, ausgebildet. In Abwandlung zu Fig. 29 kann der Antrieb des Farbwerk 08 entsprechend dem zu Fig. 32 dargelegten Prinzip erfolgen, d. h. es wird lediglich der formzylinderferne Reibzylinder 33.2 rotatorisch über eine Antriebsverbindung vom Formzylinder 07 her, jedoch ggf. beide Reibzylinder 33.1; 33.2 axial zwangsgetrieben. Der Antrieb eines dreiwalzigen Feuchtwerks 09 kann über die Antriebsverbindung 141 oder aber wie oben zur Weiterbildung der Fig. 11a) genannt rein über Friktion rotatorisch angetrieben sein.

In weiteren, nicht dargestellten fünften Varianten können im Nassoffset Druckzylindergetriebe und Feuchtwerksgetriebe gemeinsam als Funktionsmodul mit einem gemeinsamen Antriebsmotor ausgeführt sein, wobei das Funktionsmodul 138 z. B. für sich wie in Fig. 26 erhalten bleibt und einen Antriebsmotor 128 aufweist. In einer Abwandlung ist das Farbwerk 08 zwar als Funktionsmodul 138 ausgeführt, wird jedoch ohne eigenen Motor über einen Riementrieb vom Druckzylindergetriebe her angetrieben.

In Abwandlung zur Fig. 27, kann der Antrieb auf das als Funktionsmodul 139 ausgeführte Feuchtwerksantrieb anstatt vom Farbwerk 08 auch vom Antriebszug 122 der Druckwerkszylinder 06; 07 über einen Riementrieb erfolgen.

Wie in Fig. 26 bis 29 erkennbar, sind die Antriebsmodule 122 mit den beiden Druckwerkszylindern 06; 07 jeweils über mindestens eine drehsteife Kupplung 148, insbesondere zumindest eine winkelausgleichende Kupplung 148, gekoppelt. Vorzugsweise sind zwei derartige Kupplungen 148 in Serie mit einem Zwischenstück vorgesehen (oder ein insgesamt als Doppelgelenk ausgeführtes Bauteil) welche dann insgesamt eine einen Versatz ausgleichende Kupplung 151 darstellt. Damit ist trotz Bewegbarkeit (An-/Abstellen) der Zylinder 06; 07 eine gestellfeste Anordnung der Antriebsmodule 122 und Antriebsmotoren 121 möglich. Bei Montage müssen an die für sich selbst fertiggestellten Funktionsmodule 122 lediglich die die Kupplung(en) 148 aufweisenden Wellen 78 angeflanscht werden. Aus dem - insbesondere nach außen abgeschlossenen bzw. gekapselten - Funktionsmodul 122 ragen vorteilhaft in den Figuren angedeutete Wellenstummel bzw. Flansche heraus, welche bei Montage der Druckeinheit 01 lediglich mit dem die Kupplung 148; 151 aufweisenden Wellenstück und dieses mit der Welle 78 drehfest zu verbinden sind. Insbesondere vorteilhaft ist die Kupplung 148 jeweils als Lamellenkupplung 148 oder Ganzmetallkupplung ausgeführt und weist mindestens ein formschlüssig, jedoch in Umfangsrichtung der Lamellen versetzt mit zwei Flanschen verbundenes Lamellenpaket auf.

Die Kupplung 151 zwischen Funktionsmodul 122 und dem Formzylinder 07 ist vorzugsweise zur Ermöglichung einer Seitenregistersteuerung/-regelung derart ausgeführt, dass sie auch eine axiale Relativbewegung zwischen Formzylinder 07 und Funktionsmodul 122 aufnimmt. Dies kann ebenfalls durch o.g. Lamellenkupplung 148 erfolgen, welche durch Verformung im Bereich der Lamellen eine axiale Längenänderung ermöglicht. Ein nicht dargestellter Axialantrieb kann auf der selben oder der anderen Gestellseite wie der rotatorische Antrieb vorgesehen sein.

Auch die angetriebenen Walzen 33, insbesondere Reibzylinder 33, des Farbwerks 09 sind vorzugsweise über wenigstens eine Kupplung 149, insbesondere Winkelabweichungen ausgleichende Kupplung 149, mit dem Funktionsmodul 138 gekoppelt. Da i.d.R. kein Ab-/Anstellen dieser Walzen 133 erfolgt, kann es bei einer derartigen Kupplung 149 belassen sein. In einfacher Ausführung ist die Kupplung 149 auch lediglich als steife Flanschverbindung ausgebildet. Das selbe gilt für den Antrieb am ggf. als Funktionsmodul 139.

In Fig. 26 bis 29 können die Reibgetriebe 136; 137 außerhalb eines gekapselten, die rotatorischen Antriebszüge beherbergenden Raumes, insbesondere Schmiermittelraumes, angeordnet sein.

Die als Antriebsmodule 122; 138; 139; 146 ausgeführten Antriebszüge 122; 138; 139; 146 sind als für sich jeweils vollständig durch - von Seitengestellen 11; 12 verschiedenen - Gehäuse 152; 153; 154 abgeschlossene Baueinheiten ausgeführt. Sie haben beispielsweise einen Eingang, an welchen z. B. ein Antriebsmotor oder eine Antriebswelle koppelbar ist, und einen oder mehrere Ausgänge, welche drehfest mit dem Zylinder 06; 07 bzw. der Walze (Raster- oder Reibwalze 26; 33; 42; 48) verbindbar ist.

Anstelle der oben beschriebenen gekoppelten Druckzylinderantriebe können die Druckzylinder 06; 07 in einer ebenfalls vorteilhaften Ausführung auch jeweils einzeln durch einen Antriebsmotor 121 angetrieben sein (Fig. 30). Vorzugsweise ist in einem "Antriebszug" zwischen Antriebsmotor und Zylinder 06; 07 ein Getriebe 150, insbesondere ein Untersetzungsgetriebe 150, wie z. B. ein Planetengetriebe, vorgesehen. Dieses kann als Vorsatzgetriebe baulich bereits mit dem Motor 121 zusammen als Baueinheit an diesem vormontiert sein. Es kann jedoch auch ein modulartiges Getriebe als Antriebs- bzw. Funktionsmodul vorgesehen sein, an dessen Eingang der Antriebsmotor und an dessen Ausgang der jeweilige Zylinder - insbesondere über eine winkel- und/oder versatzausgleichende Kupplung 148 oder 151 - koppelbar ist.

In den Ausführungen nach Fig. 26 bis 30 sind die Antriebsmotoren 121 mit ihren Antriebsmodulen 122 bzw. Getrieben 150 gestellfest an den Seitengestellen 12 angeordnet. Der nötige Versatz beim An-/Abstellen der Nippstellen wird hierbei durch die Kupplungen 148 ermöglicht. In einer hier nicht dargestellten vorteilhaften Ausführung sind in Weiterbildung der Ausführung nach Fig. 30 die einzelnen Antriebsmotoren 121 (insbesondere mit Vorsatzgetriebe 150) je Druckwerkszylinder 06; 07 nicht am Seitengestell 12, sondern direkt mit dem bewegbaren Lagerelement 74 starr verbunden, z. B. angeschraubt, und werden während der Stellbewegung mitbewegt. Zur Abstützung der Antriebsmotoren 121 kann am Seitengestell 12 eine Halterung mit Führung vorgesehen sein, auf welcher der Antriebsmotor 121 sind stützt und bei Bewegung des betreffenden Zylinders 06; 07 in Stellrichtung S mitbewegt werden kann.

Fig. 31 bis 35 zeigt eine - z. B. bzgl. Farbtransport und Verschleiß vorteilhafte - Ausgestaltung des Farbwerk 08 bzw. des Farbwerksantriebes, welche für sich alleine, jedoch auch besonders in Verbindung mit einem oder mehreren Merkmalen der o. g. Druckeinheiten 01 Vorteile birgt.

Das Farbwerk 08, z. B. als einzügiges Walzenfarbwerk 08 oder auch als "hanges Farbwerk" bezeichnet, weist eine Mehrzahl der oben bereits genannten Walzen 28; 33; 34; 36; 37 auf. Es umfasst gemäß Fig. 31 (mindestens) zwei, die Farbe auf die Druckform des Formzylinders 07 auftragende Auftragwalzen 28, welche die Farbe über eine druckform- bzw. formzylindernahe changierbare Reibwalze 33.1 bzw. Reibzylinder 33.2 (z. B. mit harter Oberfläche), eine Farb- oder Übertragungswalze 34 (z. B. mit weicher Oberfläche), eine zweite, formzylinderferne changierbare Reibwalze 33.2 bzw. Reibzylinder 33.2, eine weitere Farb- oder Übertragungswalze 34 (z. B. mit weicher Oberfläche), eine Filmwalze 37 und eine Duktor- oder Tauchwalze 36 aus einem Farbkasten 38 erhält. Tauch- und Filmwalze 36; 37 (charakterisierend für ein Filmfarbwerk) können vorteilhaft auch durch ein anderes Farbzuführ- bzw. -dosiersystem (z. B. Pumpsystem im Pumpfarbwerk, oder Hebersystem im Heberfarbwerk) ersetzt sein.

Die weichen Oberflächen der Auftrag- und/oder Übertragungswalzen 28; 34 (kurz: weiche Walzen 28; 34) sind in radialer Richtung nachgiebig, z. B. mit einer Gummischicht, ausgebildet, was in Fig. 31 durch die konzentrischen Kreise ausgedrückt ist.

Werden nun die Walzen 28; 33; 34; 37 des Farbwerk 08 aneinander angestellt, so tauchen je nach Anstelldruck und/oder Stellweg die harten Oberflächen der Reibzylinder 33.1; 33.2 in die weichen Oberflächen der jeweils zusammen wirkenden weichen Walzen 28; 34 mehr oder weniger weit ein. Hierdurch ändern sich je nach Eindrücktiefe die Umfangsverhältnisse aufeinander abrollender, zusammen wirkender Walzen 28; 33; 34; 37.

Erfolgte nun beispielsweise für eine von mehreren zusammen wirkenden Walzen ein rotatorischer Zwangsantrieb durch Vorgabe einer Drehzahl (z. B. über einen Antriebsmotor oder eine entsprechende mechanische Antriebsverbindung zu einem anderen angetriebenen Bauteil), so rotiert eine benachbarte, lediglich über Friktion von der erstgenannten Walze her getriebene weiche Walze je nach Eindrücktiefe mit unterschiedlicher Drehzahl. Für den Fall, dass diese weiche Walze jedoch zusätzlich durch einen eigenen Antriebsmotor oder aber zusätzlich über Friktion in einer zweiten Nippstelle von einer anderen drehzahlbestimmten Walze her angetrieben wäre, kann dies im ersten Fall zu einer Differenz zwischen motorisch vorgegebener Drehzahl und durch Friktion verursachter Drehzahl, und im zweiten Fall zu einer Differenz zwischen den beiden durch Friktion verursachten Drehzahlen kommen. Es kommt an den Nippstellen zu Schlupf und/oder der bzw. die Antriebsmotoren werden unnötig stark belastet.

Im formzylindernahen Bereich des Farbwerk 08, insbesondere im Bereich des Farbauftrages durch die Walzen 28 auf die Druckform, wird durch die nachfolgend beschriebene Lösung ein schlupffreies Abrollen ("true rolling") und Einfärben erreicht:
Der formzylindernahe Reibzylinder 33.1 ist rotatorisch lediglich über Friktion mit benachbarten Walzen 28; 34 angetrieben und weist zu dessen rotatorischem Antrieb weder eine zusätzliche mechanische Antriebsverbindung zum Antrieb der Druckwerkszylinder 06; 07 oder einer anderen rotatorisch zwangsgetriebenen Farbwerkswalze noch einen eigenen Antriebsmotor auf. Auf diese Weise wird der erste Reibzylinder 33.1 überwiegend über die in diesem Beispiel beiden (ggf. auch eine oder drei) durch Friktion mit dem Formzylinder 07 getriebenen Auftragwalzen rotatorisch getrieben und weist unabhängig von den Eindrückungen in den dazwischenliegenden Nippstellen im wesentlichen die Umfangsgeschwindigkeit des Formzylinders 07 auf. Der formzylinderferne Reibzylinder 33.2 weist, wie in Fig. 31 angedeutet, einen diesen rotatorisch treibenden Antriebsmotor 128 auf, der jedoch neben dem durch die Walzen 33.2; 34; 33.1 gebildeten Reibgetriebe keine mechanische Kopplung zum ersten Reibzylinder 33.1 aufweist. Bei mehr als zwei Reibzylindern 33.1; 33.2 , z. B. dreien, können die beiden formzylinderfernen rotatorisch zwangsgetrieben, oder es kann lediglich der mittlere oder der formzylinderfernste Reibzylinder 33.2 rotatorisch zwangsgetrieben sein.

Vorzugsweise weisen beide Reibzylinder 33.1; 33.2 ein durch in Fig. 31 durch jeweilige Doppelpfeile symbolisierte Changier- bzw. Reibgetriebe 136 auf.

In einer mechanisch wenig aufwändigen Ausführung weist der formzylindernahe Reibzylinder 33.1 ein eigenes, lediglich seine Rotationsbewegung in eine Changierbewegung umformendes Changiergetriebe 136 auf. Dies kann vorteilhaft als ein Kurvengetriebe ausgebildet sein, wobei z. B. ein gestellfester Axialanschlag mit einer walzenfesten kurvenförmig umlaufenden Nut zusammenwirkt oder ein walzenfester Axialanschlag in einer gestellfesten umlaufenden Nut einer Kurvenscheibe. Grundsätzlich kann dieses die Rotation in einen changierenden Axialhub umformende Getriebe 136 ein anderes geeignetes Getriebe 136, z. B. durch ein einen Excenter aufweisendes Schnecken- oder Kurbelgetriebe, ausgeführt sein.

Wie in Fig. 31 durch eine die Doppelpfeile verbindende strichlierte Linie symbolisiert, ist das Changiergetriebe 136 des ersten Reibzylinders 33.1 in vorteilhafter Weise über ein Getriebe 161 mit dem Changiergetriebe 136 des zweiten Reibzylinders 33.2 mechanisch gekoppelt. Vorteilhaft stellen die beiden gekoppelten Changiergetriebe 136 einen gemeinsamen Changierantrieb 162 (Changiergetriebe 162) dar und sind für deren Changierbewegung durch einen Antriebsmotor zwangsgetrieben. Vorzugsweise erfolgt der erzwungene Antrieb des Changiergetriebes 162 durch den den zweiten Reibzylinder 33.2 rotatorisch antreibenden Antriebsmotor 128 (Fig. 32).

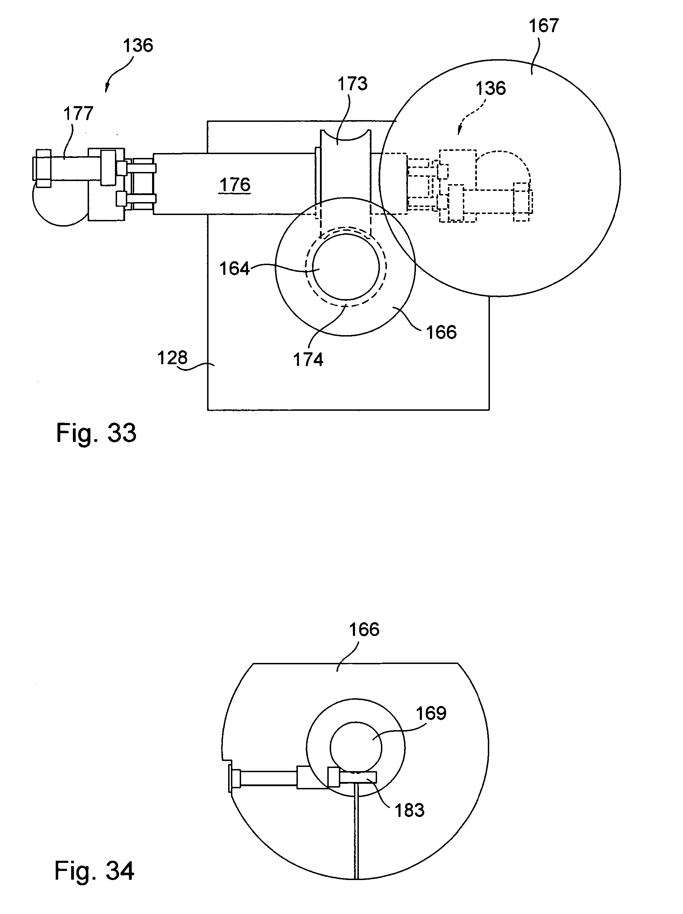

In Fig. 32 und 33 ist eine vorteilhafte Ausführung für den Antrieb der Reibzylinder 33.1; 33.2 dargestellt, wobei lediglich der zweite Reibzylinder 33.2 rotatorisch zwangsangetrieben ist, jedoch beide Reibzylinder 33.1, 33.2 über den gemeinsamen Changierantrieb 162 axial zwangsangetrieben sind. Die Druckwerkszylinder 06; 07 können entweder wie in Fig. 26 dargelegt paarweise durch Antriebsmotoren 121 je Zylinderpaar, oder aber vorteilhaft einzeln durch jeweils einem Antriebsmotor 121 wie in Fig. 30 dargelegt, ausgeführt sein.

Hierzu treibt der Antriebsmotor 128 über eine Kupplung 163 über eine Welle 164 auf ein Antriebsritzel 166, welches seinerseits mit einem drehfest mit dem zweiten Reibzylinder 33.2 verbundenen Stirnrad 167 zusammen wirkt. Die Verbindung kann z. B. über einen das Stirnrad 167 tragenden Achsabschnitt 168 auf einen Zapfen 169 des zweiten Reibzylinders 33.2 erfolgen. Ein entsprechender Achsabschnitt 168 des ersten Reibzylinders 33.1 weist kein derartiges Stirnrad 167 bzw. keine Antriebsverbindung zum Antriebsmotor 128 auf. Die Antriebsverbindung zwischen Antriebsritzel 166 und Stirnrad 167 des zweiten Reibzylinders 33.2 sind vorzugsweise gerade verzahnt und mit einem für jede Position der Changierbewegung ausreichend große Überdeckung im Zähneeingriff ausgebildet. Die beiden Reibzylinder 33.1; 33.2 sind in einem am Seitengestell 147 bzw. Gestell 16 gebildeten Rahmen 147 in Lagern 172, z. B. Radiallagern 172 gelagert, welche zusätzlich eine Axialbewegung ermöglichen. Eine rotatorische Antriebsverbindung zwischen dem Antriebsmotor 128 und dem ersten Reibzylinder 33.1 besteht hierbei nicht. Antriebsritzel 166 und das auf dem Achsabschnitt 168 angeordnete Stirnrad 167 stellen zusammen ein Getriebe, insbesondere Untersetzungsgetriebe, dar, welches für sich eine abgeschlossene und/oder vormontierbare Baueinheit mit eigenem Gehäuse 153. Die Baueinheit ist ausgangsseitig an den Zapfen 169 koppelbar.

Der Changierantrieb 162 wird durch den Antriebsmotor 128 ebenfalls, z. B. über einen Schneckentrieb 173, 174, angetrieben. Hierbei wird von einer aus der Welle 164 angeordneten Schnecke 173 bzw. einem als Schnecke 173 ausgebildeten Abschnitt der Welle 164 auf ein Schneckenrad 174 gerieben, welches drehfest mit einer senkrecht zur Rotationsachse der Reibzylinder 33.1; 33.2 verlaufenden Welle 176 verbunden ist. Jeweils stirnseitig der Welle 176 ist exzentrisch zu deren Rotationsachse ein Mitnehmer 177 angeordnet, welcher seinerseits z. B. über einen Kurbeltrieb, beispielsweise über einen auf dem Mitnehmer 177 rotierbar gelagerten Hebel 178 und ein Gelenk 179, in axialer Richtung der Reibzylinder 33.1; 33.2 druck- und zugsteif mit den Zapfen 169 der Reibzylinder 33.1; 33.2 verbunden ist. In Fig. 31 ist das Reibgetriebe 136 des formzylinderfernen Reibzylinders 33.2 lediglich strichliert angedeutet, da es in dieser Ansicht durch das Stirnrad 167 verdeckt wird. Ein rotieren der Welle 176 bewirkt ein Umlaufen der Mitnehmer 177, welches seinerseits über den Kurbeltrieb einen Axialhub der Reibzylinder 33.1; 33.2 bewirkt. Der Abtrieb auf den Changierantrieb 162 kann auch an anderer Stelle des rotatorischen Antriebsstranges zwischen Antriebsmotor 128 und Reibzylinder 33.2 oder gar auf der anderen Maschinenseite vom auf der anderen Stirnseite des Reibzylinders 33.2 befindlichen Zapfens 169 auf ein entsprechendes Changiergetriebe 162 erfolgen. Auch kann ggf. ein von einem Schneckentrieb 173, 174 verschiedenes Getriebe zur Auskopplung des Axialantriebes vorgesehen sein.

Wie in Fig. 32 dargestellt, ist der Changierantrieb 162 bzw. das Changiergetriebe 162 insgesamt als Baueinheit mit einem eigenen Gehäuse 181 ausgebildet, welches zusätzlich gekapselt ausgeführt sein kann. Das Changiergetriebe 162 kann im gekapselten Raum entweder mit Öl, vorzugsweise jedoch mit einem Fett geschmiert sein. Das Changiergetriebe 162 ist in der dargestellten Ausführung durch eine mit dem Seitengestell 147 verbundene Halterung 182 gestützt. Der Antriebsmotor 128 ist hierbei mit dem Gehäuse 181 des Changiergetriebe 162 lösbar verbunden.

Fig. 34 zeigt eine vorteilhafte Ausführung einer drehsteifen Verbindung zwischen dem Achsabschnitt 168 und dem jeweiligen Zapfen 169. Hierbei handelt es sich bzgl. einer Rotation um einen Reibschluss, welcher durch Klemmen eines verjüngten Abschnittes des Zapfens 169 durch den diesen umfassenden, geschlitzten Achsabschnitt 168 hergestellt wird. Die Position einer Klemmschraube 183 ist derart bemessen, dass sie - quer zur Rotationsachse des Zapfens 169 betrachtet - zumindest teilweise in eine umlaufende Nut des Zapfens 169 eintaucht. Sie stellt bezüglich einer Axialrichtung somit eine formschlüssige Sicherung der Verbindung dar.

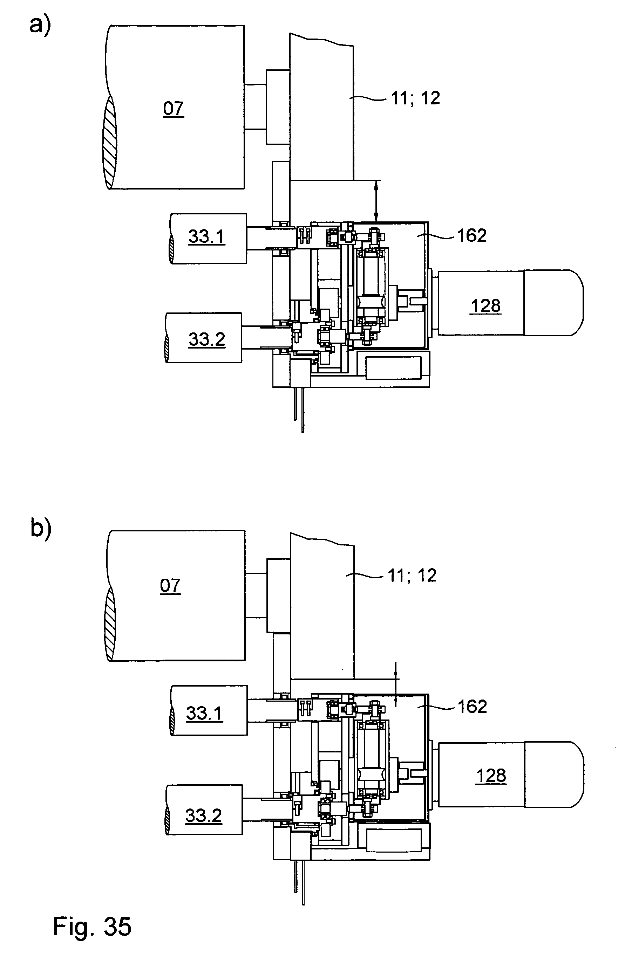

Anhand der Fig. 35 ist eine weitere vorteilhafte Weiterbildung erläutert, wobei die Reibzylinder 33.1; 33.2 samt rotatorischem und Axialantrieb in der Art eines insgesamt vormontier- und/oder bewegbaren Moduls an einem eigenen, von einem die Druckwerkszylinder 06; 07 tragenden Seitengestelle 11; 12 baulich verschiedenen Seitengestelle 147 (16) angeordnet sind. Eine zweite, die Reibzylinder 33.1; 33.2 auf ihrer anderen Stirnseite stützende Gestellseite ist hier nicht dargestellt. Diese die Reibzylinder 33.1; 33.2 und deren Antrieb tragenden Seitengestelle 147 (16) sind dann je nach Größe und geometrischer Anordnung der Druckwerkszylinder 06; 07 am Seitengestell 11; 12 positionierbar. Fig. 35a) und 35b) zeigen eine relative Lage der Seitengestelle 147 (16) und 11; 12 zueinander bei Einsatz eines größeren (a) und eines kleineren (b) Formzylinders 07. Ein durch Doppelpfeil in Fig. 35 gekennzeichneter Abstand zwischen dem Seitengestell 11; 12 und dem Farbwerksantrieb, hier dem Changiergetriebe 162, ist dann je nach Position des in der Art eines Modul ausgeführten Farbwerks 08 verschieden. Damit können Druckeinheiten 01 mit Druckwerkszylindern 06; 07 unterschiedlicher Umfangsformate in einfacher Weise durch das selbe Farbwerk 08 bedient werden.

Die vorzugsweise als Modul vorgefertigte Getriebeeinheit (aus Axialgetriebe und/oder Changiergetriebe 162) kann als Untereinheit für die beispielsweise als Modul ausgeführten Farbwerke 08 komplett vormontiert sein und in vorteilhafter Ausführung bereits vor dem Einsatz in die Druckeinheit 01 am Seitengestell 147 (16) des Farbwerksmoduls vormontiert sein. Andererseits erlaubt die Modularität aber auch den Einbau/Ersatz/Austausch des als Modul ausgeführten Getriebes, wenn das Farbwerkmoduls bereits in die Maschine eingesetzt ist.

Dadurch, dass der formzylindernahe Reibzylinder 33.1 keinen rotatorischen Zwangsantrieb aufweist, rollen die Walzen 28 (34) zumindest im formzylindernahen Farbwerksbereich weitgehend schlupffrei aufeinander ab.

Grundsätzlich kann der den zweiten Reibzylinder 33.2 rotatorisch antreibende Antriebsmotor 128 als ein bzgl. seiner Leistung und/oder seines Drehmomentes und/oder aber auch bzgl. seiner Drehzahl steuerbar oder regelbarer Elektromotor ausgeführt sein. Im letzteren Fall kann es dann - falls der Antriebsmotor 128 auch in Druck-An drehzahlgeregelt/-gesteuert betrieben wird - im formzylinderfernen Bereich des Farbwerks 08 noch zu o. g. Problemen hinsichtlich unterschiedlicher wirksamer Walzenumfänge kommen.

Im Hinblick auf die oben geschilderte Problematik einer mit dem Reibgetriebe konkurrierenden Drehzahlvorgabe, ist der Antriebsmotor 128 jedoch vorteilhaft derart ausgebildet, dass er zumindest während des Druckbetriebes bzgl. seiner Leistung und/oder seines Drehmoments steuer- bzw. regelbar ist. Dies kann grundsätzlich mittels eines als Synchronmotors 128 oder eines als Asynchronmotors 128 ausgeführten Antriebsmotors 128 erfolgen:
In einer ersten, bzgl. des Aufwandes einfachsten Ausführungsform ist der Antriebsmotor 128 als Asynchronmotor 128 ausgebildet, dem in einer zugeordneten Antriebssteuerung 186 lediglich eine Frequenz (z. B. in Druck-Ab des Farbwerks 08) und/oder eine elektrische Antriebsleistung oder ein Drehmoment (in Druck-An des Farbwerks 08) vorgegeben wird. In Druck-Ab des Farbwerks 08, d. h. die Auftragwalzen 28 sind außer Rollkontakt mit dem Formzylinder 07, kann über die vorgegebene Frequenz und/oder Antriebsleistung das Farbwerk 08 über den zweiten Reibzylinder 33.2 auf eine für das Druck-An-Stellen geeignete Umfangsgeschwindigkeit gebracht werden, bei welcher sich die Umfangsgeschwindigkeiten von Formzylinder 07 und Auftragwalzen 28 nur um weniger als 10%, insbesondere weniger als 5 %, voneinander unterscheiden (diese Grenze gilt vorteilhaft auch als Bedingung für das Druck-An-Stellen der nachfolgend genannten Ausführungsformen). Eine hierzu geeignete Frequenz- bzw. Leistungsvorgabe ist im Vorfeld empirisch und/oder rechnerisch ermittelbar und entweder in der Antriebssteuerung selbst, einer Maschinensteuerung oder einem Leitstandsrechner vorgehalten. Der Vorgabewert ist vorzugsweise durch das Bedienpersonal änderbar, wobei der Vorgabewert vorzugsweise durch das Bedienpersonal änderbar ist (gilt vorteilhaft auch für unten genannte Vorgabewerte).

In Druck-An, d. h. die Auftragwalzen 28 sind in Rollkontakt mit dem Formzylinder 07 und sämtliche Farbwerkswalzen aneinander angestellt, werden die Walzen 28; 33; 34; 33; 34; 37 zu einem Teil vom Formzylinder 07 über das nun hergestellte Reibgetriebe zwischen den Walzen 28; 33; 34; 33; 34; 37 rotatorisch getrieben. sodass der Antriebsmotor 128 nur die in den Reibgetrieben mit zunehmender Entfernung vom Formzylinder 07 zunehmende Verlustleistung einbringen muss. D. h., der Antriebsmotor 128 kann mit einem kleinen Antriebsmoment bzw. einer kleinen Antriebsleistung betrieben werden, welche lediglich dazu beiträgt, den hinteren Bereich des Farbwerk 08 auf der im wesentlichen durch den Reibkontakt vorgegebenen Umfangsgeschwindigkeit zu halten. Diese Antriebsleistung kann in einer ersten Variante für sämtliche Produktionsdrehzahlen (bzw. Drehzahlen des Formzylinders 07) konstant belassen sein und entweder derjenigen Vorgabe für das Anfahren in Druck-Ab entsprechen oder einen eigenen konstanten Wert für die Produktion darstellen. In einer zweiten Variante können für verschiedene Produktionsdrehzahlen (und zusätzlich ggf. für das Anfahren in Druck-Ab) verschiedenen Vorgaben bzgl. der Frequenz und/oder Antriebsleistung vorgegeben und hinterlegt sein. Je nach Produktionsdrehzahl (Produktionsgeschwindigkeit) kann dann die Vorgabe für den Antriebsmotor 128 variieren.

In einer zweiten Ausführungsform weist der Antrieb zusätzlich zur Antriebssteuerung 186 und dem Asynchronmotor 128 der ersten Ausführungsform eine Drehzahlrückführung auf, so dass der Antriebsmotor 128 in der Phase des Farbwerkbetriebes in Druck-Ab mit der Drehzahl des zugeordneten Formzylinders 07 bzw. der Druckwerkszylinder 06; 07 im wesentlichen synchronisierbar ist. Hierzu kann eine die Istdrehzahl detektierende Sensorik 187, z. B. eine Drehgeber 187, an einem drehfest mit dem Reibzylinder 33.2 verbundenen rotierenden Bauteil, z. B. einem Rotor des Antriebsmotors 128, der Welle 164, der Welle 164 etc. angeordnet sein. In Fig. 32 ist ein einen mitdrehenden Initiator und ortsfesten Sensor 187 aufweisender Drehgeber 187 beispielhaft an der Kupplung 163 dargestellt, dessen Signal über eine strichliert dargestellte Signalverbindung der Antriebssteuerung 186 zur weiteren Verarbeitung zugeleitet wird. Durch die Drehzahlrückführung, den Vergleich mit einer die Maschinendrehzahl repräsentierenden Drehzahl M und einer entsprechenden Anpassung der Leistungs- bzw. Frequenzvorgabe ist ein Schlupf im Moment des Druck-An-Stellens vermeidbar bzw. zumindest auf wenige Prozent minimierbar. Im Druck-An-Betrieb wird der Antriebsmotor 128 dann vorzugsweise nicht mehr streng bzgl. der beschriebenen Drehzahlrückführung sondern im wesentlichen nach der oben beschriebenen Frequenz- bzw. Leistungsvorgabe betrieben.

Eine dritte Ausführungsform weist anstelle des Asynchronmotors 128 der zweiten Ausführungsform einen Synchronmotor 128 auf. Eine Drehzahlrückführung und eine diesbezügliche Synchronisierung und Regelung in der Druck-Ab-Phase erfolgt entsprechend der zweiten Ausführungsform z. B. wieder in der Antriebssteuerung 186.

In einer vierten Ausführungsform ist ein Antriebsmotor 128, insbesondere ein Synchronmotor 128, vorgesehen, welcher wahlweise in einem ersten Modus (für Farbwerk 08 in Druck-Ab) drehzahlgeregelt und in einem zweiten Modus bzgl. eines Drehmomentes (für Farbwerk 08 in Druck-An) regelbar ist. Antriebssteuerung 186 und Antriebsmotor 128 weisen zur Drehzahlregelung vorzugsweise wieder einen inneren Regelkreis auf, welcher ähnlich der zweiten Ausführungsform eine Rückführung von einem externen Drehgeber 187 oder aber eine motorinterne Sensorik umfasst. Bei Verwendung von Synchronmotoren 128 kann mehreren dieser Synchronmotoren 128 einer Druckeinheit 01 ein gemeinsamer Frequenzumrichter bzw. -wandler zugeordnet sein.

Eine bzgl. Vielseitigkeit vorteilhafte, jedoch aufwändigere Weiterbildung der vierten Ausführung ist die Ausbildung des Antriebsmotors 18 als wahlweise lage- und momentenregelbarer Servomotor 128, d. h. einem Drehstrom-Synchronmotor mit einer Einrichtung, die es erlaubt, die aktuelle Drehposition bzw. den zurückgelegten Drehwinkel bezüglich einer Anfangsposition des Rotors zu bestimmen. Die Rückmeldung der Drehlage kann über einen Drehgeber, z. B. ein Potentiometer, ein Resolver, einen Inkrementalgeber oder einen Absolutwertgeber erfolgen. Bei dieser Ausführungsform ist jedem Antriebsmotor 128 ein eigener Frequenzumrichter bzw. -wandler zugeordnet.

Für den Fall eines in der Weise der zweiten, dritten oder insbesondere vierten Ausführungsform ausgeführten, zumindest drehzahlsynchronisierbaren, insbesondere drehzahlregelbaren Antriebsmotors 128, steht die Antriebssteuerung 186 vorteilhaft mit einer sog. virtuelle Leitachse in Signalverbindung, in welcher eine elektronisch erzeugte Leitachsposition Φ umläuft. Die umlaufende Leitachsposition Φ dient der Synchronisierung, bzgl. korrekter Winkellage und deren zeitlicher Änderung (Winkelgeschwindigkeit 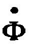 ) mechanisch unabhängiger Antriebsmotoren von Aggregaten, welche einer selben Bahn zugeordnet sind, insbesondere Antriebsmotoren 121 von einzelnen Druckwerkszylindern 06; 07 oder Druckwerkszylindergruppen (Paaren) und/oder dem Antrieb eines Falzapparates. In der Betriebsweise, in welcher das Farbwerk 08 bzgl. der Drehzahl des Formzylinders 07 synchronisiert angetrieben sein soll, kann eine Signalverbindung zur virtuellen Leitachse somit der Antriebssteuerung 186 die Information zur Maschinendrehzahl bzw. -geschwindigkeit liefern.

Vorzugsweise wird beim Antrieb des Reibzylinders 33.2 über den Antriebsmotor 128 somit derart verfahren, dass bei laufendem, aber in Druck-Ab-Stellung befindlichem Farbwerk 08 (d. h. abgestellte Auftragwalzen 28) der Antriebsmotor 128 bzgl. einer Drehzahl gesteuert bzw. geregelt angetrieben wird und bei laufender Maschine, sobald ein Druck-An des Farbwerks 08 (d. h. der Auftragwalzen 28) erfolgt ist, bewusst die Drehzahlregelung bzw. -steuerung aufgegeben wird. D. h., es wird nicht mehr an einer Drehzahl festgehalten, sondern der Antriebsmotor 128 wird im weiteren Verlauf hinsichtlich eines Drehmomentes, z. B. über eine vorgegebene elektrische Leistung, und/oder hinsichtlich eines am Regler eines Antriebsmotors 128, insbesondere Asynchronmotors 128, einstellbaren Drehmomentes betrieben. Das einzustellende Drehmoment bzw. die einzustellende Leistung ist beispielsweise kleiner gewählt, als ein Grenzdrehmoment, welches zu einem ersten Drehen (unter Schlupf) des getriebenen Reibzylinders 33.2 bei angestellten, jedoch bzgl. der Rotation festgesetzten zusammenwirkenden Walzen 34 führen würde.

Die Belastungscharakteristik eines als Asynchronmotor 128 ausgebildeten Antriebsmotors 128 kommt dem für den hiesigen Zweck angestrebten Verhalten in der Weise entgegen, dass bei steigender Last eine Frequenzabsenkung bei gleichzeitig steigendem Antriebsmoment erfolgt. Geht im Reibgetriebe zwischen Formzylinder 07 und zweitem Reibzylinder 33.2 beispielsweise bereits viel vom Formzylinder 07 stammende Antriebsenergie und damit Umfangsgeschwindigkeit verloren, so dass die Belastung des Antriebsmotors 128 wächst, so wird das erhöhte Moment bei verringerter Frequenz bereitgestellt. Umgekehrt wird durch den Antriebsmotor 128 wenig Moment übertragen - er läuft quasi leer - wenn ausreichend Energie über das Reibgetriebe bis zum Reibzylinder 33.2 übertragen wird.

Die Ausgestaltung der Zylinderlager als Lagereinheiten 14 und/oder der Zylinder 06; 07 als Zylindereinheit 17 und/oder der Farbwerke 08 in der Art von Modulen und/oder von Antrieben in der Art von Antriebsmodulen und/oder die Trennbarkeit der Druckeinheit 01 ermöglicht - je nach Ausstattung in unterschiedlicher Tiefe - eine vereinfachte Vorortmontage und damit extrem kurze Montage- und Inbetriebnahmezeiten beim Kunden.

So werden beispielsweise die Seitengestelle 11; 12 bzw. Wandabschnitte 11; 12; 47 aufgestellt und ausgerichtet und die Zylindereinheiten 17 und/oder Farbwerke 08 und/oder Feuchtwerke 09 in der Art von Modulen außerhalb der Seitengestelle 11; 12 vormontiert.

Die Zylinder 06; 07 werden hierzu noch außerhalb der Gestelle 11; 12 mit ihren Lagereinheiten 14 bestückt und anschließend komplett als Zylindereinheiten 17 zwischen die Seitengestelle 11; 12 eingebracht und befestigt. Von der Außenseite des Seitengestells 11; 12 her wird dann durch entsprechende Gestellaussparungen - je nach Antriebsausführung - die Antriebseinheit in der Art eines Antriebsmoduls (z. B. Getriebe 150 oder Antriebszug 122 mit dem entsprechenden Antriebsmotor 121 ggf. über die Welle 78) mit dem Zapfen 63; 64 verbunden.

Ist die Druckeinheit 01 im Bereich der Druckstellen 05 teilbar ausgeführt, so werden die Zylindereinheiten 17 vorzugsweise bei geöffneter Druckeinheit 01 vom zwischen den beiden Teildruckeinheiten 01.1; 01.2 liegenden Raum her eingebracht und erst nach Einbringen diese wieder geschlossen.

Ist die Druckeinheit 01 an beiden Seiten des Doppeldruckwerkes 03 zu den Farbwerke 08 hin teilbar ausgeführt (Fig. 24), so werden die Zylindereinheiten 17 vorzugsweise bei zwischen Druckwerkszylindern 06; 07 und den Farbwerke 08 aufnehmenden Wandabschnitten 47 geöffneter Druckeinheit 01 vom dort gebildeten Zwischenraum her eingebracht und erst nach Einbringen diese wieder geschlossen.

Für die Farbwerke 08 werden die farbwerkseigenen Gestelle 16 bzw. 147 noch außerhalb der Seitengestelle 11; 12 mit den entsprechenden Walzen (aus 26 bis 39) und dem entsprechenden Antriebsmodul 138 (ggf. bereits inklusive Antriebsmotor 128) bestückt und als ganzes in die Druckeinheit 01 eingebracht und dort befestigt.

Auch bei den Feuchtwerken 09 können feuchtwerkseigene Gestelle noch außerhalb der Seitengestelle 11; 12 mit den entsprechenden Walzen (aus 41; 42; 43; 47; 48) und - falls in der gewünschten Ausführung erforderlich - dem entsprechenden Antriebsmodul 138 (ggf. mit oder ohne einen eigenen Antriebsmotor 132) bestückt und als ganzes in die Druckeinheit 01 eingebracht und dort befestigt werden.

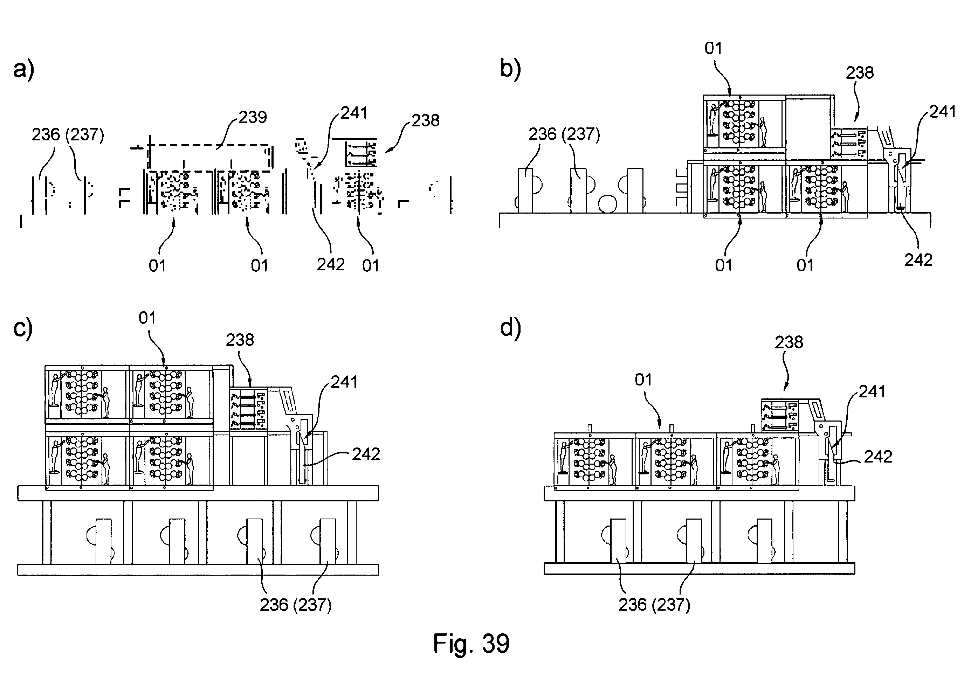

Die Figuren 39 a) bis 39 d) zeigen schematisch vier Ausführungen für eine Druckmaschine, welche mehrere oben beschriebenen - teilbare oder ggf. nicht teilbare - Druckeinheiten 01 aufweist. Die Druckmaschinen weisen Rollenwechsler 236 mit nicht explizit dargestellten Einzugwerken (237), einen Überbau 238 mit wenigstens einer Längsschneidvorrichtung, einem Wendedeck und einer Längsregistereinrichtung für längsgeschnittene Teilbahnen, optional einen in Fig. 39 d) exemplarisch dargestellten Trockner 239 (strichliert), einen Trichteraufbau 241 mit je nach Bahnbreite einem, zwei oder gar drei nebeneinander in einer Ebene angeordneten Falztrichtern sowie einem Falzapparat 242. Mit dieser drei Druckeinheiten 01 aufweisenden Druckmaschine sind für den Fall einer Ausführung mit doppelt breiten, d. h. vier Druckseiten (insbesondere Zeitungsseiten) breiten und doppelt großen Druckwerkszylindern 06; 07 mit drei Bahnen 02 insgesamt 48 Seiten je vierfarbig bedruckbar.

Fig. 39 a) zeigt die Druckmaschine in Patterre-Aufstellung, d. h. die Druckeinheiten 01 und die Rollenwechsler 236 sind auf einer selben Ebene aufgestellt. In Fig. 39b) ist eine Druckmaschine dargestellt, wobei zwei jeweils vier Doppeldruckwerke 03 aufweisende Druckeinheiten 01 auf zwei verschiedenen Ebenen angeordnet sind. Insbesondere ist die obere Druckeinheit 01 mit ihrer ganzen Höhe oberhalb der unteren Druckeinheit 01 angeordnet. Mit dieser drei Druckeinheiten 01 aufweisenden Druckmaschine sind für den Fall einer Ausführung mit doppelt breiten, d. h. vier Druckseiten (insbesondere Zeitungsseiten) breiten und doppelt großen Druckwerkszylindern 06; 07 mit drei Bahnen 02 insgesamt 48 Seiten je vierfarbig bedruckbar.

Fig. 39 c) zeigt eine Druckmaschine auf drei Ebenen, wobei in einer untersten Ebene die Rollenwechsler 236, und auf den beiden darüber liegenden Ebenen zwei jeweils vier Doppeldruckwerke 03 aufweisende Druckeinheiten 01 übereinander angeordnet sind. Die Druckmaschine weist hier beispielhaft zwei derartige Paare zweier übereinander angeordneter Druckeinheiten 01 auf. Mit dieser vier Druckeinheiten 01 aufweisenden Druckmaschine sind für den Fall einer Ausführung mit doppelt breiten, d. h. vier Druckseiten (insbesondere Zeitungsseiten) breiten und doppelt großen Druckwerkszylindern 06; 07 mit vier Bahnen 02 insgesamt 64 Seiten je vierfarbig bedruckbar.

In Fig. 39 d) ist eine Druckmaschine auf zwei Ebenen dargestellt, wobei in der unteren Ebene die Rollenwechsler 236 und in der Ebene darüber die jeweils vier Doppeldruckwerke 03 aufweisenden Druckeinheiten 01 angeordnet sind. Mit dieser drei Druckeinheiten 01 aufweisenden Druckmaschine sind für den Fall einer Ausführung mit doppelt breiten, d. h. vier Druckseiten (insbesondere Zeitungsseiten) breiten und doppelt großen Druckwerkszylindern 06; 07 mit drei Bahnen 02 insgesamt 48 Seiten je vierfarbig bedruckbar.

Für sämtliche Ausbildungen einer Druckmaschine mit einem oder mehreren der o. g. Merkmale zur Teilbarkeit und/oder Modularität und/oder der Zylinderanordnung an den Innenwänden des Seitengestells 11; 12 und/oder der linearen Anordnung und/oder der speziellen linearen Lagerung und/oder der genannten An-, Ab- und Einstellung der Zylinder 06; 07 und/oder den Antriebsmodulen 122; 138; 139; 146 ist vorzugsweise ein Falzapparat 242 mit einem eigenen, mechanisch von den Druckeinheiten 01 unabhängig ausgebildeten Antriebsmotor und/oder mit variabler Format- bzw. Abschnittslänge (d. h. ein formatvariabler Falzapparat 242) vorgesehen.

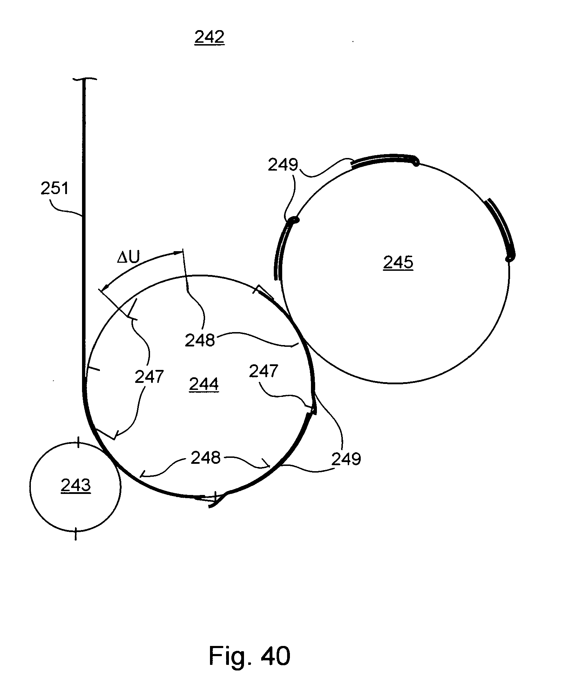

Der schematisch in Fig. 40 dargestellte Falzapparat 242 weist z. B. einen Messerzylinder 243, einen Transportzylinder 244 und einen Falzklappenzylinder 246 auf. Zumindest der als Falzmesserzylinder 244 ausgebildete Transportzylinder 244 ist formatvariabel ausgebildet, d. h. ein Abstand ΔU in Umfangsrichtung zwischen Haltemitteln 247 und jeweils nachgeordneten Falzmessern 248 am Umfang des Transportzylinders 244 ist veränderbar ausgeführt. Hierzu können die Haltemittel 247, z. B. als Punkturleisten oder Greifer ausgeführt, einerseits und die Falzmesser 248 andererseits auf zwei verschiedenen koaxial angeordneten Trommeln angeordnet sein, welche sich in Umfangsrichtung zueinander verdrehen lassen. Wird der Abstand ΔU zwischen Haltemittel 247 und nachgeordneten Falzmesser 248 verkleinert, so wird ein von einem Strang 251 durch den Messerzylinder 243 quer abgeschnittener Produktabschnitt 249 bei Ausfahren des Falzmessers 248 nach einer kürzeren Abschnittslänge quer gefalzt und umgekehrt. Der Strang 251 kann aus einer oder mehreren längsgefalzten oder ungefalzten Bahnen 02 bzw. Teilbahnen bestehen.

Zwar ist die im folgenden beschriebene Antriebssteuerung grundsätzlich auch unabhängig von oben beschriebener Teilbarkeit und/oder Modularität und/oder der Zylinderanordnung an den Innenwänden des Seitengestells 11; 12 und/oder der linearen Anordnung und/oder der speziellen linearen Lagerung und/oder der genannten An-, Ab- und Einstellung der Zylinder 06; 07 und/oder den Antriebsmodulen von Vorteil. Besondere Vorteile ergeben sich jedoch gerade in Verbindung mit einem oder mehreren der genannten Merkmale, insbesondere in Verbindung mit mechanisch voneinander unabhängig angetriebenen Aggregaten - wie z. B. mechanisch unabhängig voneinander angetriebenem Falzapparat 219 und/oder Druckeinheit 01 und/oder Einzugwerk 214 und/oder Zylindern 06; 07 bzw. Zylindergruppen und/oder Leitelementen eines Überbaus 216).

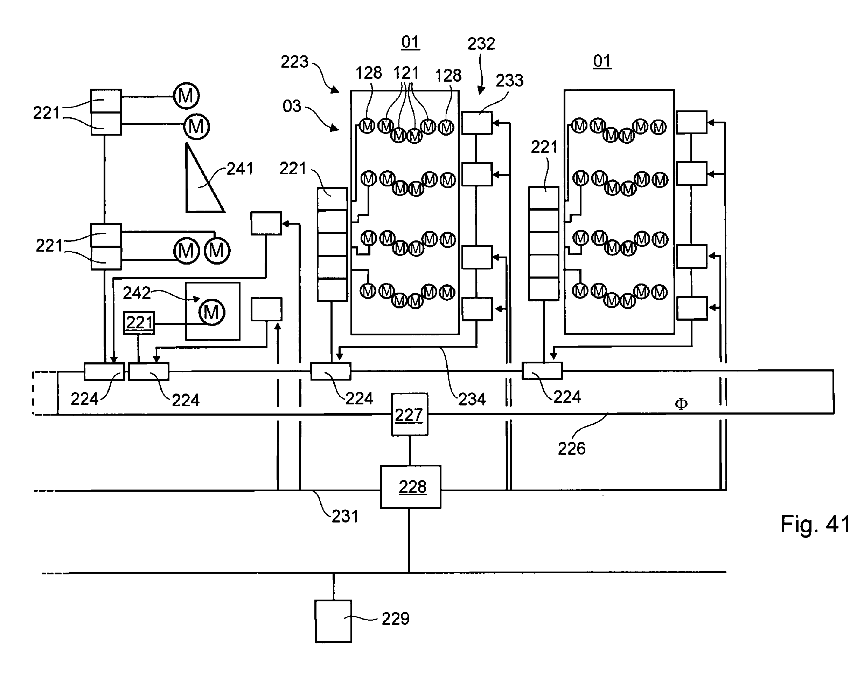

Fig. 41 zeigt ein Beispiel für den Antrieb einer Druckmaschine mit mehreren, hier exemplarisch zwei, als Drucktürme 01 ausgeführte Druckeinheiten 01, welche jeweils mehrere Druckwerke 03, hier Doppeldruckwerke 03, aufweisen. Die Druckwerke 03 eines Druckturms 01 bilden zusammen mit ihren Antriebsreglern 221, kurz Antrieben 221 und den Antriebsmotoren 121; 128 eine Gruppe 223, z. B. Antriebsmotor 223, insbesondere eine Druckstellengruppe 223, welche über eine untergeordnete Antriebssteuerung 224 dieser Gruppe 223 mit einer Signale einer jeweiligen Leitachsposition Φ einer virtuellen Leitachse führenden ersten Signalleitung 226 verbunden ist. Die untergeordnete Antriebssteuerung 224 kann jedoch auch Untergruppen von Druckeinheiten 01 oder andere Teilungen verwalten. Mit dieser Signalleitung 226 sind auch weitere, eine eigene untergeordnete Antriebssteuerung 224 aufweisende Einheiten, z. B. ein oder mehrere Leitelemente eines Überbaus 238 und/oder Trichteraufbaus 241 und/oder ein oder mehrere Falzapparate 242 verbunden. Die Signalleitung 226 ist hier vorteilhaft als ein erstes Netzwerk 226 in Ringtopologie, insbesondere als Sercos-Ring, ausgeführt, welcher die Leitachsposition Φ durch eine mit dem Netzwerk 226 verbundene übergeordnete Antriebssteuerung 227 erhält. Diese generiert die umlaufende Leitachsposition Φ auf der Basis von Vorgaben bezüglich einer vorgegebenen Produktionsgeschwindigkeit, welche sie von einer Rechen- und/oder Datenverarbeitungseinheit 228, z. B. einem Sektionsrechner, erhält. Die Rechen- und/oder Datenverarbeitungseinheit 228 erhält ihrerseits die Vorgabe der Produktionsgeschwindigkeit von einem mit ihr verbundenen Leitstand 229 bzw. Leitstandsrechner 229.

Um registerhaltiges Drucken und/oder Längsschneiden zu gewährleisten müssen die mechanisch unabhängig voneinander angetriebenen Aggregate, z. B. in Abhängigkeit von einer Bahnführung, in die korrekte Winkellage zueinander stehen. Hierfür sind für die einzelnen Antriebe 221 Offsetwerte ΔΦᵢ vorgehalten, welche die für die Produktion korrekte relative Winkellage zur gemeinsamen Leitachse und/oder relativ zu einem der Aggregate definieren.

Die für die einzelnen Antriebe 221 relevanten Offsetwerte ΔΦᵢ werden für die betreffende Produktion von der Rechen- und Datenverarbeitungseinheit 228 über eine zweite, von der ersten Signalleitung 226 verschiedene Signalleitung 231, insbesondere ein zweites Netzwerk 231, den dem jeweiligen Antrieb 221 zugeordneten untergeordneten Antriebssteuerungen 224 zugeleitet und in vorteilhafter Ausführung dort gespeichert und mit der Leitachsposition Φ zu korrigierten Leitachspositionen Φᵢ' verarbeitet.

Die Übermittlung der Offsetwerte ΔΦᵢ an die untergeordneten Antriebssteuerungen 224 erfolgt z. B. entweder über entsprechende Signalleitungen vom zweiten Netzwerk 231 direkt zur Antriebssteuerung 224 (nicht dargestellt), oder vorteilhaft über ein Steuersystem 232, welches der jeweiligen Gruppe 18 bzw. der eine eigene untergeordnete Antriebssteuerung 224 aufweisende Einheit zugeordnet ist. Das Steuersystem 232 ist hierzu mit dem zweiten Netzwerk 231 (bzw. mit der Rechen- und Datenverarbeitungseinheit 227) verbunden. Das Steuersystem 232 steuert und/oder regelt beispielsweise die von den Antriebsmotoren 121; 128 verschiedenen Stellglieder und Antriebe der Druckwerke 03 bzw. Falzapparate 242, z. B. Farbzuführung, Stellbewegungen von Walzen und/oder Zylindern, Feuchtwerk, Positionen etc. Das Steuersystem 232 weist eine oder mehrere (insbesondere speicherprogrammierbare) Steuereinheiten 233 auf. Diese Steuereinheit 233 ist über eine Signalleitung 234 mit der untergeordneten Antriebssteuerung 224 verbunden. Im Fall mehrerer Steuereinheiten 233 sind diese durch die Signalleitung 234, z. B. einen Bussystem 234, auch untereinander verbunden.

Über das erste Netzwerk 226 erhalten die Antriebe 221 somit die absolute und dynamische Information zum Umlaufen einer gemeinsam zugrundezulegenden Leitachsposition Φ und über einen zweiten Signalweg, insbesondere über mindestens ein zweites Netzwerk 231, werden die zur registergerechten Verarbeitung erforderlichen Informationen, insbesondere Offsetwerte ΔΦᵢ, für die registergerechte Relativlage der mechanisch voneinander unabhängigen Antriebe 221 bzw. Aggregate übermittelt.

Die für das liegende Doppeldruckwerk 03 im vorgenannten einzelnen oder mehrere in Verbindung miteinander stehenden vorteilhaften Merkmale (Lagereinheit 14, Ebene E, linearer Stellweg S, Modularität, Antriebszüge) sind ebenso auf I-Druckeinheiten, d. h. im wesentlichen um 90° gedrehte Doppeldruckwerke 03, anzuwenden. Bis auf das Merkmal des ebenen Druckwerks 03 sind die Merkmale der Lagereinheit 14 und/oder des linearen Stellweges S und/oder der Modularität und oder der Antriebszüge auch auf neun- oder zehnzylindrige Satellitendruckeinheiten einzeln oder in Kombinationen anwendbar.

### Bezugszeichenliste

- 01: Druckeinheit, Druckturm
- 01.1: Teildruckeinheit
- 01.2: Teildruckeinheit
- 02: Materialbahn, Bahn
- 03: Doppeldruckwerk
- 04: Druckwerk
- 05: Druckstelle, Doppeldruckstelle
- 06: Zylinder, Übertragungszylinder, Druckwerkszylinder
- 07: Zylinder, Formzylinder, Druckwerkszylinder
- 08: Farbwerk, Walzenfarbwerk
- 08.1: Farbwerk, Kurzfarbwerk
- 08.2: Farbwerk, Walzenfarbwerk, einzügig
- 08.3: Farbwerk, Walzenfarbwerk, zweizügig
- 08.4: Farbwerk, Kurzfarbwerk
- 09: Feuchtwerk
- 09.1: Feuchtwerk, kontaktlos, Sprühfeuchtwerk
- 09.2: Feuchtwerk, Kontaktfeuchtwerk, Filmfeuchtwerk
- 10: -
- 11: Gestellabschnitt, Wandabschnitt, Seitengestell
- 12: Gestellabschnitt, Wandabschnitt, Seitengestell
- 13: Boden, Träger, Montageplatte, Montagerahmen
- 14: Lagereinheit
- 15: Linearführung
- 16: Gestell, Rahmenkonstruktion (08)
- 17: Zylindereinheit
- 18: Grundgerüst
- 19: Stütze
- 20: -
- 21: Träger
- 22: Traverse
- 23: Traverse
- 24: Handhabungsvorrichtung, Druckformwechsler
- 25: -
- 26: Walze, Rasterwalze
- 27: Farbauftragvorrichtung, Rakelsystem, Kammerrakel
- 28: Walze, Auftragwalze
- 29: Walze, Farbwalze, Auftragwalze
- 30: -
- 31: Walze, Reibwalze, Reibzylinder
- 32: Farbreservoir
- 33: Walze, Reibwalze, Reibzylinder
- 33.1: Walze, Reibwalze, Reibzylinder
- 33.2: Walze, Reibwalze, Reibzylinder
- 34: Walze, Farbwalze, Übertragungswalze
- 35: -
- 36: Walze, Duktorwalze, Tauchwalze
- 37: Walze, Filmwalze
- 38: Farbkasten
- 39: Walze, Übertragungswalze
- 40: -
- 41: Walze, Auftragwalze
- 42: Walze, Reibzylinder
- 43: Walze
- 44: Feuchtmittelquelle, Sprühbalken
- 45: Oberfläche, Mantelfläche
- 46: Feuchtmittelvorlage, Feuchtmittelkasten
- 47: Walze, Duktorwalze, Tauchwalze
- 48: Walze, Reibzylinder
- 49: Wandabschnitt
- 50: -
- 51: Führung, untere
- 52: Führung, obere
- 53: Aufnahmebereich
- 54: Vorlagebereich
- 55: -
- 56: Abdeckung
- 57: Seitenregistereinrichtung
- 58: Anschlag, Seitenanschlag
- 59: Magazin
- 60: -
- 61: Andrückvorrichtung
- 62: Rolle
- 63: Zapfen (06)
- 64: Zapfen (07)
- 65: Wälzkörper
- 66: Klemmeinrichtung
- 67: Ballen (06)
- 68: Ballen (07)
- 69: Abdeckung
- 70: Linearlager
- 71: Lager, Radiallager, Zylinderrollenlager
- 72: Lagermittel, Lagerelement, Linearelement
- 72.1: Führungsfläche
- 72.2: Führungsfläche
- 73: Lagermittel, Lagerelement, Linearelement
- 73.1: Führungsfläche
- 73.2: Führungsfläche
- 74: Lagerblock, Schlitten
- 75: Verbindung, Spannelement
- 76: Träger, Trägerplatte
- 77: Ausnehmung
- 78: Welle, Antriebswelle
- 79: Anschlag, Keil
- 80: -
- 81: Element, Federelement
- 82: Aktor, kraftgesteuert, Stellmittel, Kolben, druckmittelbetätigbar, Hydraulikkolben
- 83: Anschlagfläche (79)
- 84: Aktor, Stellmittel, Kolben druckmittelbetätigbar
- 85: Übertragungsglied, Kolbenstange
- 86: Rückstellfeder
- 87: -
- 88: Anschlag, Überlastsicherung, Federelement
- 89: Montagehilfe, Passstift
- 90: Kolben
- 91: Haltemittel, Schraube
- 92: Mittel, Spannschraube
- 93: Ventil, steuerbar
- 94: Abdeckung
- 95: -
- 96: Anschlag
- 97: Aktorelement
- 98: -
- 99: -
- 100: -
- 101: Fluidreservoir
- 102: Verdichter
- 103: Druckspeicher
- 104: Stellglied, Druckminderer
- 105: -
- 106: Versorgungsstrecke
- 107: Versorgungsstrecke
- 108: Ventil
- 109: -
- 110: -
- 111: Haltemittel
- 112: Ventil
- 113: Lager, Linearlager
- 114: Stellmittel
- 115: -
- 116: -
- 117: -
- 118: -
- 119: -
- 120: -
- 121: Antriebsmotor
- 122: Antriebszug, Getriebezug, Antriebsmodul, Funktionsmodul
- 123: Antriebsrad, Stirnrad
- 124: Zwischenrad, Zahnrad
- 125: -
- 126: Zwischenrad, Zahnrad
- 127: Motorwelle
- 128: Antriebsmotor, Asynchronmotor, Synchronmotor, Servomotor
- 129: Antriebsrad
- 130: -
- 131: Antriebsritzel
- 132: Antriebsmotor
- 133: Antriebsritzel
- 134: Antriebsrad
- 135: -
- 136: Reibgetriebe, Getriebe, Changiergetriebe,
- 137: Reibgetriebe, Getriebe, Changiergetriebe,
- 138: Getriebezug, Antriebszug, Antriebsmodul, Funktionsmodul
- 139: Getriebezug, Antriebszug, Antriebsmodul, Funktionsmodul
- 140: -
- 141: Antriebsverbindung, Riementrieb
- 142: Antriebsrad, Riemenscheibe
- 143: Antriebsrad, Riemenscheibe
- 144: Antriebsverbindung, Zwischenrad, Zahnrad
- 145: -
- 146: Antriebszug, Antriebsmodul, Funktionsmodul
- 147: Rahmen, Seitengestell
- 148: Kupplung, Lamellenkupplung
- 149: Kupplung
- 150: Getriebe, Untersetzungsgetriebe
- 151: Kupplung
- 152: Gehäuse
- 153: Gehäuse
- 154: Gehäuse
- 155: -
- 156: -
- 157: -
- 158: -
- 159: -
- 160: -
- 161: Getriebe
- 162: Changierantrieb, Changiergetriebe
- 163: Kupplung
- 164: Welle
- 165: -
- 166: Antriebsritzel
- 167: Stirnrad
- 168: Achsabschnitt
- 169: Zapfen
- 170: -
- 171: -
- 172: Lager, Radiallager
- 173: Schnecke
- 174: Schneckenrad
- 175: -
- 176: Welle
- 177: Mitnehmer
- 178: Hebel
- 179: Gelenk
- 180: -
- 181: Gehäuse
- 182: Halterung
- 183: Klemmschraube
- 184: -
- 185: -
- 186: Antriebssteuerung
- 187: Sensorik, Drehgeber
- 188: -
- 189: -
- 190: -
- 191: Haltemittel
- 192: Klemmbacke
- 193: Durchbruch
- 194: Feder
- 195: -
- 196: Stellglied
- 197: Stellantrieb, Zylinder
- 198: -
- 199: -
- 200: -
- 201: Seitenregisterantrieb
- 202: Lager, Axiallager
- 203: Spindel
- 204: Stirnrad
- 205: Gewindeabschnitt
- 206: Ritzel
- 207: Motor
- 208: Innengewinde
- 209: Topf
- 210: Anschlag
- 211: Scheibe
- 212: Wälzkörper
- 213: Ausnehmung, Druckkammer
- 214: Versorgungsleitung
- 215: Basiskörper
- 216: Dichtung
- 217: Gleitführung
- 218: Dichtung
- 219: Gleitführung
- 220: Membran, Rollmembran
- 221: Antriebsregler, Antrieb
- 222: -
- 223: Gruppe, Antriebsgruppe, Druckstellengruppe
- 224: Antriebssteuerung, untergeordnet
- 225: -
- 226: Signalleitung, Netzwerk
- 227: Antriebssteuerung, übergeordnet
- 228: Rechen- und/oder Datenverarbeitungseinheit
- 229: Leitstand, Leitstandsrechner
- 230: -
- 231: Signalleitung, Netzwerk
- 232: Steuersystem
- 233: Steuereinheit
- 234: Signalleitung, Bussystem
- 235: -
- 236: Rollenwechsler
- 237: Einzugwerk
- 238: Überbau
- 239: Trockner
- 240: -
- 241: Trichteraufbau
- 242: Falzapparat
- 243: Messerzylinder
- 244: Transportzylinder, Falzmesserzylinder
- 245: -
- 246: Falzklappenzylinder
- 247: Haltemittel
- 248: Falzmesser
- 249: Produktabschnitt
- 250: -
- 251: Strang

- L: lichte Weite
- L06: Länge (06)
- L07: Länge (07)

- 06a: Übertragungszylinder
- 06b: Übertragungszylinder
- 06c: Übertragungszylinder

- 07a: Formzylinder
- 07b: Formzylinder
- 07c: Formzylinder

- 28': Walze, Auftragwalze

- B: Wartungsstellung
- C: Bewegungsrichtung
- E: Verbindungslinie, Verbindungsebene, Ebene
- E1: Ebene
- E2: Ebene
- F: Kraft
- M: Drehzahl
- P: Druck, Anstelldruck
- S: Stellrichtung

- P_{H}: Druck
- P_{L}: Druck, Umgebungsdruck
- P_{S}: Druck

- Φ: Leitachsposition
- Φ: Winkelgeschwindigkeit
- Δ71: Lagerspiel
- ΔS: Stellweg
- ΔU: Abstand

- α: Innenwinkel
- β: Winkel, spitz

### Zusätze

- a: erstes Zylinderformat, Doppelumfang, insbesondere Zeitung
- b: zweites Zylinderformat, Einfachumfang, insbesondere Zeitung
- c: drittes Zylinderformat Akzidenzdruck

## Patentansprüche

1. Verfahren zur Einstellung einer Druck-An-Stellung mindestens zweier Zylinder (06.1; 07.1) eines Druckwerkes (03; 04),
- wobei ein an der Druckstelle beteiligter erster Zylinder (06.1) entweder als gestellfester Zylinder (06.1) in einer ggf. bereits justierten gestellfesten Lage belassen wird oder im Fall eines beweglichen Zylinders (06.1) dieser mit bereits justierter Wegbegrenzung belassen oder zunächst justiert und zumindest in eine Richtung zur Druckstelle (05) hin wegbegrenzt wird,
- anschließend eine Wegbegrenzung des anzustellenden druckstellenferneren zweiten Zylinders (07.1) zur Druckstelle (05) hin innerhalb eines Stellbereichs durch Freisetzen eines Anschlages (79) aufgehoben wird oder eine bereits erfolgte Freistellung aufrechterhalten wird,
- wobei die Aufhebung der Wegbegrenzung bzw. die Aufrechterhaltung der Freistellung am zweiten Zylinder (07.1) durch Freisetzen eines Anschlages (79) erfolgt,
- bei freigesetztem Anschlag (79) und in Druck-An-Stellung befindlichem ersten Zylinder (06.1) der druckstellenfernere Zylinder (07.1) mit einer definierten Kraft (F) beaufschlagt und an den ersten Zylinder (06.1) angestellt wird,
- wobei die Beaufschlagung mit der Kraft (F) durch Beaufschlagung eines Aktors (82) mit einem Druckmittel eines definierten Druckes (P) erfolgt,
- und schließlich für diese Lage eine Wegbegrenzung des Stellweges zur Druckstelle hin vorgenommen wird, indem der Anschlag (79) in Wirkkontakt mit dem bewegbaren Zylinder (07.1) gebracht wird.

2. Verfahren nach Anspruch 1, **dadurch gekennzeichnet, dass** die Beaufschlagung mit der Kraft (F) entgegen am Zylinder (07.1) in Richtung Druck-Ab angreifenden Rückstellkraft F_{R} erfolgt.

3. Verfahren nach Anspruch 1, **dadurch gekennzeichnet, dass** bei aktivierter Druck-An-Stellung der beiden ersten Zylinder (06.1; 07.1) ein mit dem ersten Zylinder (06.1) die Druckstelle (05) bildender dritter Zylinder (06.2) während einer aufgehobenen Wegbegrenzung mit einer definierten Kraft (F) für die Druck-An-Stellung beaufschlagt, und nach Erreichen eines stationären Zustandes die Wegbegrenzung des Stellweges (S) zur Druckstelle (05) hin in dieser Lage des dritten Zylinders (06.2) vorgenommen wird.

4. Verfahren nach Anspruch 3, **dadurch gekennzeichnet, dass** während des Einstellens der Wegbegrenzung am dritten Zylinder (06.2) ein diesem zugeordneter vierter Zylinder (07.2) vom dritten abgestellt ist.

5. Verfahren nach Anspruch 4, **dadurch gekennzeichnet, dass** bei aufgehobener Wegbegrenzung am vierten Zylinder (07.2) und in Druck-An-Stellung befindlichem dritten Zylinder (06.2) der vierte Zylinder (07.2) mit einer definierten Kraft (F) beaufschlagt und in Druck-An gebracht wird, und nach Erreichen eines stationären Zustandes die Wegbegrenzung des Stellweges zur Druckstelle (05) hin in dieser Lage des dritten Zylinders (06.2) vorgenommen wird.

6. Verfahren nach einem oder mehreren der Ansprüche 1 bis 5, **dadurch gekennzeichnet, dass** das Druck-An-Stellen der bewegbaren Zylinder (06; 07) jeweils durch Beauschlagung eines Stellmittels (82) mit einem Druckmittel eines definierten Niveaus für den Druck (P) erfolgt.

7. Verfahren nach einem oder mehreren der Ansprüche 1 bis 6, **dadurch gekennzeichnet, dass** ein An- und/oder Abstellen eines als Wegbegrenzung dienenden Anschlages (79) wenigstens eines der Zylinder (06; 07) durch Beauschlagung eines Stellmittels (82) mit einem Druckmittel eines definierten Niveaus für den Druck (P_{S}) erfolgt.

8. Verfahren nach Anspruch 6 und 7, **dadurch gekennzeichnet, dass** das Niveau für den Druck (P) für das Druck-An-Stellen und das Niveau für den Druck (P_{S}) für das An- und/oder Abstellen des Anschlages (79) voneinander verschieden, insbesondere ein Überdruck gegenüber der Umgebung beim erstgenannten mindestens um den Faktor zwei größer als beim zweitgenannten gewählt, ist.

## Claims

1. Method for setting a thrown-on position of at least two cylinders (06.1; 07.1) of a printing unit (03; 04),
- a first cylinder (06.1) which participates at the printing point either being left as a cylinder (06.1) which is fixed to the frame in a position which is fixed to the frame and has optionally already been adjusted or, in the case of a movable cylinder (06.1), the latter being left with an already adjusted travel limit or first of all being adjusted and having its travel limited at least in a direction to the printing point (05),
- subsequently a travel limit of the second cylinder (07.1) which is to be thrown on and is further away from the printing point within an adjusting range towards the printing point (05) being cancelled by release of a stop (79) or a release which has already taken place being maintained,
- the cancellation of the travel limit or the maintenance of the release taking place on the second cylinder (07.1) by release of a stop (79),
- when the stop (79) is released and the first cylinder (06.1) is situated in the thrown-on position, the cylinder (07.1) which is further away from the printing point being loaded with a defined force (F) and being set against the first cylinder (06.1),
- the loading with the force (F) taking place by loading of an actuator (82) with a pressure medium at a defined pressure (P),
- and finally a travel limit of the actuating travel towards the printing point being performed for this position, by the stop (79) being brought into operative contact with the movable cylinder (07.1).

2. Method according to Claim 1, **characterized in that** the loading with the force (F) takes place counter to a restoring force F_{R} which acts on the cylinder (07.1) in the thrown-off direction.

3. Method according to Claim 1, **characterized in that**, when the thrown-on position of the two first cylinders (06.1; 07.1) is activated, a third cylinder (06.2) which forms the printing point (05) with the first cylinder (06.1) is loaded during a cancelled travel limit with a defined force (F) for the thrown-on position and, after a stationary state is reached, the travel limit of the actuating travel (S) towards the printing point (05) is performed in this position of the third cylinder (06.2).

4. Method according to Claim 3, **characterized in that**, during the setting of the travel limit at the third cylinder (06.2), a fourth cylinder (07.2) which is assigned to the third cylinder (06.2) is set away from the said third cylinder (06.2).

5. Method according to Claim 4, **characterized in that**, when the travel limit is cancelled at the fourth cylinder (07.2) and the third cylinder (06.2) is situated in the thrown-on position, the fourth cylinder (07.2) is loaded with a defined force (F) and is moved into the thrown-on position, and, after a stationary state is reached, the travel limit of the actuating travel towards the printing point (05) is performed in this position of the third cylinder (06.2).

6. Method according to one or more of Claims 1 to 5, **characterized in that** the throwing-on operation of the movable cylinders (06; 07) takes place in each case by loading of an actuating means (82) with a pressure medium at a defined level for the pressure (P).

7. Method according to one or more of Claims 1 to 6, **characterized in that** an engaging and/or disengaging operation of a stop (79), serving as a travel limit, of at least one of the cylinders (06; 07) takes place by loading of an actuating means (82) with a pressure medium at a defined level for the pressure (P_{S}).

8. Method according to Claims 6 and 7, **characterized in that** the level for the pressure (P) for the throwing-on operation and the level for the pressure (P_{S}) for the engaging and/or disengaging of the stop (79) differ from one another, in particular an excess pressure with respect to the surroundings is selected to be greater in the case mentioned first at least by the factor two than in the case mentioned second.

## Revendications

1. Procédé de réglage d'une position d'application de pression d'au moins deux cylindres (06.1 ; 07.1) d'un groupe d'impression (03 ; 04),
- où un premier cylindre (06.1) coopérant à l'emplacement d'impression soit est laissé en tant que cylindre fixe contre le bâti (06.1) dans une position fixe contre le bâti déjà réglée le cas échéant, soit, dans le cas d'un cylindre mobile (06.1), est laissé avec une limitation de course déjà réglée, ou est d'abord réglé et soumis à une limitation de course au moins dans une direction vers l'emplacement d'impression (05),
- où une limitation de course vers l'emplacement d'impression (05) du deuxième cylindre (07.1) à régler et qui est plus éloigné de l'emplacement d'impression est ensuite annulée à l'intérieur d'une plage de réglage par déblocage d'une butée (79), ou bien où un positionnement libre déjà effectué est maintenu,
- où l'annulation de la limitation de course ou le maintien du positionnement libre sur le deuxième cylindre (07.1) sont obtenus par déblocage d'une butée (79),
- où, la butée (79) étant débloquée et le premier cylindre (06.1) se trouvant en position d'application de pression, le cylindre (07.1) plus éloigné de l'emplacement d'impression est sollicité par une force (F) définie et est positionné contre le premier cylindre (06.1),
- la sollicitation par la force (F) étant obtenue par sollicitation d'un actionneur (82) par un moyen de pression à pression (P) définie,
- et où une limitation de la course de réglage (S) vers l'emplacement d'impression est finalement effectuée pour cette position, la butée (79) étant amenée en contact actif avec le cylindre mobile (07.1).

2. Procédé selon la revendication 1, **caractérisé en ce que** la sollicitation par la force (F) est effectuée contre la force de rappel F_{R} s'exerçant sur le cylindre (07.1) dans la direction de mise hors pression.

3. Procédé selon la revendication 1, **caractérisé en ce qu'**en cas de position d'application de pression activée pour les deux premiers cylindres (06.1 ; 07.1), un troisième cylindre (06.2) formant l'emplacement d'impression (05) avec le premier cylindre (06.1) est sollicité par une force (F) définie pour la position d'application de pression pendant une annulation de la limitation de course, et **en ce qu'**une fois atteint un état stationnaire, la limitation de la course de réglage (S) vers l'emplacement d'impression (05) est effectuée dans cette position du troisième cylindre (06.2).

4. Procédé selon la revendication 3, **caractérisé en ce que**, pendant le réglage de la limitation de course sur le troisième cylindre (06.2), un quatrième cylindre (07.2) affecté à celui-ci est arrêté par ledit troisième cylindre.

5. Procédé selon la revendication 4, **caractérisé en ce que**, la limitation de course étant annulée sur le quatrième cylindre (07.2) et le troisième cylindre (06.2) se trouvant en position d'application de pression, le quatrième cylindre (07.2) est sollicité par une force (F) définie et amené en position d'application de pression, et **en ce qu'**une fois atteint un état stationnaire, la limitation de la course de réglage vers l'emplacement d'impression (05) est effectuée dans cette position du troisième cylindre (06.2).

6. Procédé selon l'une ou plusieurs des revendications 1 à 5, **caractérisé en ce que** l'application de pression des cylindres mobiles (06 ; 07) est effectué par sollicitation d'un moyen de réglage (82) par un moyen de pression d'un niveau défini pour la pression (P).

7. Procédé selon l'une ou plusieurs des revendications 1 à 6, **caractérisé en ce qu'**un positionnement et/ou un arrêt d'une butée (79) servant de limitation de course d'au moins un des cylindres (06 ; 07) est effectué par sollicitation d'un moyen de réglage (82) par un moyen de pression d'un niveau défini pour la pression (P_{S}).

8. Procédé selon les revendications 6 et 7, **caractérisé en ce que** le niveau pour la pression (P) pour l'application de pression et le niveau pour la pression (P_{S}) pour le positionnement et/ou l'arrêt de la butée (79) sont différents l'un de l'autre, une surpression par rapport à l'environnement étant notamment sélectionnée pour le premier niveau mentionné, supérieure du facteur deux au moins par rapport au deuxième niveau mentionné.
